(19) Europäisches Patentamt
European Patent Office
Office européen des brevets

(11) **EP 4 672 789 A1**

(12) **EUROPEAN PATENT APPLICATION**
published in accordance with Art. 153(4) EPC

(43) Date of publication:
**31.12.2025 Bulletin 2026/01**

(21) Application number: **24784197.6**

(22) Date of filing: **29.03.2024**

(51) International Patent Classification (IPC):
**H04W 4/06** (2009.01)       **H04W 72/04** (2023.01)
**H04W 72/30** (2023.01)

(52) Cooperative Patent Classification (CPC):
**H04W 4/06; H04W 72/04; H04W 72/30**

(86) International application number:
**PCT/CN2024/085004**

(87) International publication number:
**WO 2024/208113 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310405787**

(71) Applicant: **Huawei Technologies Co., Ltd.
Shenzhen, Guangdong 518129 (CN)**

(72) Inventors:
• **LIU, Nannan
Shenzhen, Guangdong 518129 (CN)**
• **LI, Bingzhao
Shenzhen, Guangdong 518129 (CN)**
• **KONG, Lingshuai
Shenzhen, Guangdong 518129 (CN)**
• **ZHANG, Haisen
Shenzhen, Guangdong 518129 (CN)**
• **XU, Bin
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **COMMUNICATION METHOD, APPARATUS AND SYSTEM, AND STORAGE MEDIUM**

(57)    This application provides a communication method, apparatus, and system, and a storage medium. The method includes: obtaining information about a first network identifier corresponding to a first network index; obtaining a first multicast/broadcast service control channel MCCH message; and determining, based on the information about the first network identifier corresponding to the first network index, information about an identifier of a first broadcast service included in the first MCCH message, where both the first network index and the first MCCH message are associated with a secondary cell SCell or a primary secondary cell group cell PSCell. Information about a network identifier corresponding to a network index associated with an SCell or a PSCell is obtained, so that an identifier of a broadcast service that is in an MCCH message of the SCell or the PSCell and that is indicated by the network index can be obtained through parsing based on the information about the network identifier, to perform broadcast service matching. In this way, a terminal device can correctly receive the broadcast service on the SCell or the PSCell.

FIG. 5

**Description**

CROSS-REFERENCE TO RELATED APPLICATIONS

This application claims priority to Chinese Patent Application No. 202310405787.9, filed with the China National Intellectual Property Administration on April 7, 2023 and entitled "COMMUNICATION METHOD, APPARATUS, AND SYSTEM, AND STORAGE MEDIUM", which is incorporated herein by reference in its entirety.

TECHNICAL FIELD

This application relates to the field of communication technologies, and in particular, to a communication method, apparatus, and system, and a storage medium.

BACKGROUND

In a wireless communication system, a multicast/broadcast service (multicast and broadcast service, MBS) is introduced into the 3GPP to effectively use a resource of a mobile communication network, and provides, in the mobile communication network, a point-to-multipoint service in which one data source sends data to a plurality of users, to implement network resource sharing and improve resource utilization, especially an air interface resource.

Currently, there has been no effective method for performing broadcast reception on an SCell.

SUMMARY

This application provides a communication method, apparatus, and system, and a storage medium, to implement broadcast reception on an SCell.

According to a first aspect, this application provides a communication method. The method may be performed by a first communication apparatus. The first communication apparatus may be a terminal device, or may be an apparatus, for example, a chip or a chip system, that can support the terminal device in implementing a function. The method includes: The first communication apparatus obtains information about a first network identifier corresponding to a first network index, where the first network index is associated with a first cell, and the first cell is a secondary cell (secondary cell, SCell) or a primary secondary cell group cell (primary secondary cell group cell, PSCell). The first communication apparatus obtains a first multicast/broadcast service control channel (multicast and broadcast services control channel, MCCH) message, where the first MCCH message is associated with the first cell, the first MCCH message includes information about a first broadcast service, and the information about the first broadcast service includes information about the first network index. The first communication apparatus determines information about an identifier of the first broadcast service based on the information about the first network identifier corresponding to the first network index.

Based on this solution, the first communication apparatus obtains information about a network identifier corresponding to a network index associated with an SCell or a PSCell, thereby obtaining, through parsing based on the information about the network identifier corresponding to the network index, an identifier of a broadcast service that is in an MCCH message of the SCell or the PSCell and that is indicated by the network index, to perform broadcast service matching. In this way, the first communication apparatus can correctly receive the broadcast service on the SCell or the PSCell.

Optionally, that the first network index is associated with the first cell may alternatively be replaced with that the first network index and/or the first network identifier are/is associated with the first cell. For example, the first network index is associated with the first cell, the first network identifier is associated with the first cell, or both the first network index and the first network identifier are associated with the first cell.

In a possible implementation, the first network index may include any one of the following: a first public land mobile network (public land mobile network, PLMN) index; a first non-public network (non-public network, NPN) index; or a first standalone non-public network (standalone non-public network, SNPN) index. For example, if the first network index corresponds to a public network, the first network index includes the first PLMN index; if a first network corresponds to non-public networks (non-public networks, NPNs) such as a public network integrated non-public network (public network integrated non-public network, PNI-NPN) and an SNPN, the first network index includes the first NPN index; or if the first network corresponds to the SNPN, the first network index includes the first SNPN index.

In a possible implementation, the information about the identifier of the first broadcast service may include any one of the following: a temporary mobile group identity (temporary mobile group identity, TMGI) corresponding to the first broadcast service; the TMGI corresponding to the first broadcast service and a network identifier (network identifier, NID) corresponding to the first broadcast service; a PLMN ID corresponding to the first broadcast service; or an SNPN ID corresponding to the first broadcast service. For example, if the first broadcast service corresponds to the public network or the PNI-NPN, the information about the identifier of the first broadcast service may include the TMGI or the PLMN ID corresponding to the first broadcast service; or if the first broadcast service corresponds to the SNPN, the information about the identifier of the first broadcast service may include the SNPN ID or the TMGI and the NID corresponding to the first broadcast service.

In a possible implementation, the method may further include: The first communication apparatus obtains information about a first system information block (system information block, SIB) 20, where the information about the first SIB20 is associated with the first cell. In this way, the first communication apparatus obtains, only in a scenario in which the first communication apparatus determines that the MCCH message of the SCell or the PSCell needs to be obtained, the information about the network identifier corresponding to the network index associated with the SCell or the PSCell, to reduce unnecessary communication overheads and save a system resource. Alternatively, a network apparatus sends, only in a scenario in which the network apparatus determines that the SIB20 of the SCell or the PSCell needs to be sent, the information about the network identifier corresponding to the network index associated with the SCell or the PSCell, to reduce the unnecessary communication overheads and save the system resource.

In a possible implementation, that the first communication apparatus obtains the information about the first network identifier corresponding to the first network index includes: The first communication apparatus receives the information about the first network identifier corresponding to the first network index sent by a second communication apparatus via dedicated signaling. In this way, support can be provided for parsing the MCCH message of the SCell or the PSCell.

In a possible implementation, the following two manners of obtaining, by the first communication apparatus, the information about the first network identifier corresponding to the first network index are provided.

Manner 1: The first communication apparatus obtains information about a first system information block SIB1 of the first cell, where the first SIB1 of the first cell includes a network list of the first cell, for example, a PLMN list of the first cell and/or an NPN list of the first cell.

Manner 2: The first communication apparatus obtains information about a first network list of the first cell. The information about the first network list of the first cell is information associated with a network list of the first cell, and may include information about a first PLMN list of the first cell and/or information about a first NPN list of the first cell, for example, may include only the information about the first PLMN list of the first cell, include only the information about the first NPN list of the first cell, or include both the information about the first PLMN list of the first cell and the information about the first NPN list of the first cell.

The information about the list may refer to any one or more of the following (or may include any one or more of the following): the list, a network identifier of a network included in the list, a quantity of network identifiers included in the list, an association relationship between a network index of the network included in the list and a network identifier, a network identifier, a quantity of network identifiers corresponding to the first cell, or an association relationship between a network index of a network corresponding to the first cell and a network identifier.

For example, in the manner 2, the following four cases of content that may be included in the information about the first network list of the first cell are provided:

Case 1: The information about the first network list of the first cell includes information about all or a part of the PLMN list of the first cell and/or information about all or a part of the NPN list of the first cell.

Case 2: The information about the first network list of the first cell includes information about an identifier of all or a part of networks corresponding to the first cell, for example, includes a network identifier of a network corresponding to a largest network index included in the first MCCH message of the first cell and a network identifier of a network whose network index is less than the largest network index. The largest network index included in the first MCCH message of the first cell is a largest network index in all network indexes corresponding to information about all broadcast services included in the first MCCH message, and the network index indicates a backmost location, where the first communication apparatus uses a network identifier at the location in the network list of the first cell. In this way, the second communication apparatus and the first communication apparatus are configured to exchange only network identifiers corresponding to network indexes used by the first communication apparatus, so that it can be ensured that these network identifiers fully satisfy a requirement for parsing a first MCCH by the first communication apparatus, and useless network identifiers can be sent as few as possible, which helps reduce air interface overheads.

Case 3: The information about the first network list of the first cell includes an association relationship between a network identifier of a part or all of networks corresponding to the first cell and a network index of all or the part of the networks, for example, includes an association relationship between a first network index set and a corresponding network identifier, and the first network index set is a set of network indexes included in the first MCCH message of the first cell. In this way, the second communication apparatus and the first communication apparatus can exchange only an association relationship between a network index used by the first communication apparatus and a corresponding network identifier, and air interface overheads can be reduced. The association relationship may be any association relationship that can be for obtaining a corresponding network identifier based on a network index in the first cell, for example, may be an expression constructed based on the network index in the first cell and the corresponding network identifier, or may be a conversion relationship between the network index in the first cell and a network index of the network identifier corresponding to the network index in a primary cell (primary cell, PCell). This is not specifically limited.

Case 4: The information about the first network list of the first cell includes a quantity of PLMNs included in the PLMN list of the first cell. Because a start location of the NPN list of the first cell is determined by the quantity of all PLMNs included in the first cell, sending the quantity of all PLMNs included in the first cell to the terminal device also helps the terminal device obtain, through parsing, a network identifier corresponding to a network index included in an MCCH message of the first cell.

In an example of the manner 2, the first network index may be determined based on the information about the first network list.

In a possible implementation, the method may further include: If the first communication apparatus determines that the information about the first network identifier corresponding to the first network index is not obtained, the first communication apparatus may obtain information about a second network identifier corresponding to the first network index; and determine the information about the identifier of the first broadcast service based on the information about the second network identifier corresponding to the first network index, where the first network index and/or the second network identifier are/is associated with a second cell, and the second cell is a primary cell PCell or a PSCell. In this way, the first communication apparatus can obtain, through parsing by referencing a network identifier corresponding to a network index of the PCell or the PSCell, the identifier of the broadcast service that is included in the MCCH message of the SCell or the PSCell and that is indicated by the network index. This helps enable the first communication apparatus to correctly receive the broadcast service on the SCell.

For example, that the information about the first network identifier corresponding to the first network index is not obtained may include any one of the following cases: The information about the first network identifier corresponding to the first network index is not actively obtained; receiving of the information about the first network identifier corresponding to the first network index sent by another apparatus fails; obtaining of the information about the first network identifier corresponding to the first network index fails; or the obtained information about the first network identifier corresponding to the first network index is invalid.

According to a second aspect, this application provides a communication method. The method may be performed by a second communication apparatus. The second communication apparatus may be a network device, or may be an apparatus, for example, a chip or a chip system, that can support the network device in implementing a function. The method includes: The second communication apparatus sends information about a first network identifier corresponding to a first network index. The second communication apparatus sends a first MCCH message. The first network index is associated with a first cell, the first MCCH message is also associated with the first cell, the first cell is a secondary cell SCell or a primary secondary cell group cell PSCell, the first MCCH message includes information about a first broadcast service, and the information about the first broadcast service includes information about the first network index.

In this solution, the second communication apparatus sends information about a network identifier corresponding to a network index associated with an SCell or a PSCell. In this way, even if an MCCH message of the SCell or the PSCell includes the network index, a communication apparatus that receives the information can obtain, through parsing based on the information, information about an identifier of a broadcast service indicated by the MCCH message of the SCell or the PSCell.

In a possible implementation, that the first network index is associated with the first cell may alternatively be replaced with that the first network index and/or the first network identifier are/is associated with the first cell.

In a possible implementation, the method may further include: The second communication apparatus determines that any one of the following conditions is satisfied, and skips sending the information about the first network identifier corresponding to the first network index: Information about a first network list of the first cell is the same as information about a network list of a second cell; an order of the information about the first network list of the first cell is the same as an order of the information about the network list of the second cell; or a network corresponding to a network index included in the first MCCH message of the first cell is the same as a network included in the information about the network list of the second cell, where the second cell is a primary cell PCell or a primary secondary cell group cell PSCell.

In this solution, if a network index included in the MCCH message of the SCell or the PSCell can be obtained through parsing by using information about a network list of a PCell or another PSCell, the second communication apparatus may not send the information about the network identifier corresponding to the network index of the SCell or the PSCell, to reduce air interface overheads.

In a possible implementation, the first network index may include any one of the following: a first public land mobile network PLMN index; a first non-public network NPN index; or a first standalone non-public network SNPN index.

In a possible implementation, information about an identifier of the first broadcast service includes any one of the following: a temporary mobile group identity TMGI corresponding to the first broadcast service; the TMGI corresponding to the first broadcast service and a network identifier NID corresponding to the first broadcast service; a PLMN ID corresponding to the first broadcast service; or an SNPN ID corresponding to the first broadcast service.

In a possible implementation, the method may further include: The second communication apparatus sends information about a first system information block SIB20, where the information about the first SIB20 is associated with the first cell.

In a possible implementation, the second communication apparatus sends the information about the first network identifier corresponding to the first network index in the following two manners:

Manner 1: The second communication apparatus sends information about a first system information block SIB1 of the first cell, where the first SIB1 of the first cell includes a first PLMN list and/or a first NPN list that are/is of the first cell.
Manner 2: The second communication apparatus sends the information about the first network list of the first cell.

In an example of the manner 2, the first network index may be determined based on the order of the information about the first network list.

In an example of the manner 2, the information about the first network list of the first cell may include information about a first PLMN list of the first cell and/or information about a first NPN list of the first cell.

In an example of the manner 2, content included in the information about the first network list of the first cell may have the following four possibilities:

Possibility 1: The information about the first network list of the first cell includes information about all or a part of a PLMN list of the first cell and/or information about all or a part of an NPN list of the first cell.
Possibility 2: The information about the first network list of the first cell may include information about an identifier of all or a part of networks corresponding to the first cell, for example, may include a network identifier of a network corresponding to a largest network index included in the first MCCH message of the first cell and a network identifier of a network whose network index is less than the largest network index.
Possibility 3: The information about the first network list of the first cell includes an association relationship between a network identifier of a part or all of networks corresponding to the first cell and a network index of all or the part of the networks, for example, may include an association relationship between the network index included in the first MCCH message of the first cell and a corresponding network identifier.
Possibility 4: The information about the first network list of the first cell includes a quantity of PLMNs included in a PLMN list of the first cell.

In a possible implementation, that the second communication apparatus sends the information about the first network identifier corresponding to the first network index includes: The second communication apparatus sends, via dedicated signaling, the information about the first network identifier corresponding to the first network index.

According to a third aspect, this application provides a communication method. The method may be performed by a first communication apparatus. The first communication apparatus may be a terminal device, or may be an apparatus, for example, a chip or a chip system, that can support the terminal device in implementing a function. The method includes: The first communication apparatus obtains information about a network list of a first cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and a second cell, and the second-type network includes a network corresponding to the first cell but not corresponding to the second cell. The first communication apparatus obtains an MCCH message of the second cell, where the MCCH message of the second cell includes information about a second broadcast service, and the information about the second broadcast service includes information about a second network index. The first communication apparatus determines, based on the information about the network list of the first cell, a network identifier of a network corresponding to the second network index.

Based on this solution, an intersection network of cells may have a same network index in network lists of different cells. In this way, even if the terminal device does not obtain a SIB 1 of an SCell or a PSCell, and the terminal device does not learn of a network list of the SCell or the PSCell, the terminal device can determine, in the intersection network by referencing a network list of a PCell or another PSCell, a network identifier indicated by a network index included in an MCCH message of the SCell or the PSCell, to perform broadcast service matching. In this way, the terminal device can correctly receive a broadcast service on the SCell.

In a possible implementation, the information about the network list may include information about a PLMN list or information about an NPN list. For example, if the first cell includes only a public network, the information about the network list of the first cell may include the information about the PLMN list of the first cell; if the first cell includes only an NPN, the information about the network list of the first cell may include the information about the NPN list of the first cell; or if the first cell includes both the public network and the NPN, the information about the network list of the first cell may include the information about the PLMN list of the first cell and the information about the NPN list of the first cell.

In a possible implementation, the first-type network includes at least one network; and a ranking of the at least one network in the network list of the first cell is the same as a ranking of the at least one network in a network list of the second cell, or a network index corresponding to the at least one network in the first cell is the same as a network index corresponding to the at least one network in the second cell. In this way, a network identifier of each network in the intersection network may have a same network index in each cell.

In a possible implementation, the method further includes: The first communication apparatus obtains an MCCH message of the first cell, where the MCCH message of the first cell includes information about a first broadcast service; and if the first broadcast service corresponds to the second-type network, the information about the first broadcast service includes a PLMN ID corresponding to the first broadcast service; and/or if the first broadcast service corresponds to the first-type network, the information about the first broadcast service includes the PLMN ID corresponding to the first broadcast service, a PLMN index corresponding to the first broadcast service, or an SNPN index corresponding to the first broadcast service. In this way, an index can be used as much as possible to perform implicit indication, to reduce content carried in exchanged information.

In a possible implementation, if the information about the network list includes the information about the non-public network NPN list, the method further includes: The first communication apparatus determines that a first condition is satisfied, where the first condition includes: The first cell and the second cell correspond to a same PLMN list, or the first cell and the second cell correspond to PLMN lists having a same quantity of PLMNs. In this way, accuracy of generating the NPN list can be improved.

According to a fourth aspect, this application provides a communication method. The method may be performed by a second communication apparatus. The second communication apparatus may be a network device, or may be an apparatus, for example, a chip or a chip system, that can support the network device in implementing a function. The method includes: The second communication apparatus generates information about a network list of a first cell. The second communication apparatus sends the information about the network list of the first cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and a second cell, and the second-type network includes a network corresponding to the first cell but not corresponding to the second cell.

Based on this solution, a network device configures a network list of each cell in an order in which an intersection network is in the front and a non-intersection network is in the back, so that the intersection network of cells may have a same network index in network lists of different cells.

In a possible implementation, the information about the network list may include information about a PLMN list or information about an NPN list.

In a possible implementation, the first-type network includes at least one network; and a ranking of the at least one network in the network list of the first cell is the same as a ranking of the at least one network in a network list of the second cell, or a network index corresponding to the at least one network in the first cell is the same as a network index corresponding to the at least one network in the second cell.

In a possible implementation, the method further includes: The second communication apparatus sends a multicast/broadcast service control channel MCCH message of the first cell, where the MCCH message of the first cell includes information about a first broadcast service; and if the first broadcast service corresponds to the second-type network, the information about the first broadcast service includes a PLMN ID corresponding to the first broadcast service; and/or if the first broadcast service corresponds to the first-type network, the information about the first broadcast service includes the PLMN ID corresponding to the first broadcast service, a PLMN index corresponding to the first broadcast service, or an SNPN index corresponding to the first broadcast service.

In a possible implementation, if the information about the network list includes the information about the non-public network NPN list, the method further includes: The second communication apparatus determines that a first condition is satisfied, where the first condition includes: The first cell and the second cell correspond to a same PLMN list, or the first cell and the second cell correspond to PLMN lists having a same quantity of PLMNs.

In a possible implementation, the method further includes: The second communication apparatus sends an MCCH message of the second cell. For example, the second communication apparatus may broadcast an MCCH message of each cell, so that a corresponding communication apparatus obtains the MCCH message of the cell.

According to a fifth aspect, this application provides a communication method. The method may be performed by a first communication apparatus. The first communication apparatus may be a terminal device, or may be an apparatus, for example, a chip or a chip system, that can support the terminal device in implementing a function. The method includes: The first communication apparatus sends an MBS interest indication (MBS interest indication, MII) message, where the MII message includes information about a first broadcast service and second indication information, the information about the first broadcast service includes information about a first network index, and the second indication information indicates information about a cell corresponding to the first network index.

Based on this solution, indication information of a reference cell is additionally added to the MII message, so that the first communication apparatus can report, in the MII message, an identifier of a broadcast service that the first communication apparatus is interested in receiving or is receiving.

In a possible implementation, that the second indication information indicates the information about the cell corresponding to the first network index includes: The second indication information indicates that the first communication apparatus determines the first network index based on the information corresponding to the cell; and/or the second indication information indicates a second communication apparatus to determine information about an identifier of the first broadcast service based on the information corresponding to the cell. For example, the first communication apparatus determines, based on a network list of a referenced cell, a network index carried in the MII message. Correspondingly, the second communication apparatus also obtains, through parsing based on the network list of the referenced cell, the network index carried in the MII message. In this way, correctness of indication and interpretation of the MII message can be ensured.

In a possible implementation, the following five manners of indicating the information about the cell in the MII message are provided:

Manner 1: The information about the cell includes an identifier of the cell. In other words, the second indication information includes an identifier of the referenced cell of the network index carried in the MII message.

Manner 2: The information about the cell includes information about a PCell. In other words, the referenced cell is the PCell, and the second indication information includes the information about the PCell, for example, an identifier of the PCell. Referenced information is an SCell, and the second indication information may include everything.

Manner 3: The information about the cell includes information about an SCell. In other words, the referenced cell is the SCell, and the second indication information includes the information about the SCell, for example, an identifier of the SCell. Referenced information is a PCell, and the second indication information may include everything.

Manner 4: The information about the cell includes information about a PSCell. In other words, the referenced cell is the PSCell, and the second indication information includes the information about the PSCell, for example, an identifier of the PSCell. Referenced information is an SCell or a PCell, and the second indication information may include everything.

Manner 5: The information about the cell includes a preset bit value. For example, if the second indication information in the MII message includes a bit value "1" (or a bit value "0"), it indicates that the terminal device configures the network index (for example, the first network index) in the MII message by referencing a network list of a PCell. If the second indication information in the MII message includes a bit value "0" (or a bit value "1"), it indicates that the terminal device sets the network index (for example, the first network index) in the MII message by referencing a network list of a small cell (for example, an SCell or a PSCell) that obtains the network list.

It should be understood that there may be another indication manner. This is not specifically limited in this embodiment of this application.

In a possible implementation, a first SIB20 is associated with a PCell or an SCell.

According to a sixth aspect, this application provides a communication method. The method may be performed by a second communication apparatus. The second communication apparatus may be a network device, or may be an apparatus, for example, a chip or a chip system, that can support the network device in implementing a function. The method includes: The second communication apparatus sends a first SIB20. The second communication apparatus obtains a first MII message, where the first MII message includes information about a first broadcast service and second indication information, the information about the first broadcast service includes information about a first network index, and the second indication information indicates information about a cell corresponding to the first network index.

Based on this solution, the network device can obtain, through parsing by referencing a network list of a reference cell indicated by indication information in an MII, a broadcast service indicated by a network index in the MII message, to learn of a broadcast service that the terminal device is interested in receiving or is receiving. This facilitates subsequent decision-making of the network device, and ensures subsequent receiving of the broadcast service.

In a possible implementation, that the second indication information indicates the information about the cell corresponding to the first network index includes: The second indication information indicates the second communication apparatus to determine information about an identifier of the first broadcast service based on the information corresponding to the cell.

In a possible implementation, the information about the cell may include: information about a PCell, information about an SCell, information about a PSCell, an identifier of the cell, or a preset bit value.

In a possible implementation, the first SIB20 is associated with the SCell, the PCell, or the PSCell.

In a possible implementation, the information about the cell includes the information about the secondary cell, and that the second communication apparatus determines the information about the identifier of the first broadcast service based on the second indication information includes: The second communication apparatus determines, based on information about a network list of the secondary cell, a network identifier corresponding to the first network index.

According to a seventh aspect, this application provides a communication method. The method may be performed by a first communication apparatus. The first communication apparatus may be a terminal device, or may be an apparatus, for example, a chip or a chip system, that can support the terminal device in implementing a function. The method includes: The first communication apparatus obtains information about a reference of a broadcast common frequency resource (common frequency resource, CFR) of a first cell, where the first cell is a secondary cell SCell or a primary secondary cell group cell PSCell. The first communication apparatus obtains a first SIB20 of the first cell, where the first SIB20 includes first indication information, and the first indication information indicates a relationship between the broadcast CFR of the first cell and the reference of the broadcast CFR of the first cell. The first communication apparatus determines, based on the information about the reference of the broadcast CFR of the first cell, information about the broadcast CFR of the first cell.

Based on this solution, information about a reference of a broadcast CFR of an SCell or a PSCell is obtained, so that even if the terminal device does not obtain a SIB1 and a MIB of the SCell or the PSCell, the terminal device can correctly obtain a broadcast CFR in a SIB20 of the SCell or the PSCell through interpretation based on the information about the reference of the broadcast CFR of the SCell or the PSCell. In this way, the terminal device can correctly receive a broadcast service on the SCell or the PSCell.

In a possible implementation, the information about the reference of the broadcast CFR of the first cell includes information about a first initial bandwidth part (initial bandwidth part, initial BWP) of the first cell and/or information about a first control-resource set #0 (control-resource set, CORESET #0) of the first cell.

In a possible implementation, the following two manners of obtaining the information about the reference of the broadcast CFR of the first cell are provided: Manner 1: The first communication apparatus receives a SIB1 of the first cell and/or a MIB of the first cell that are/is sent by a second communication apparatus via dedicated signaling, where the SIB1 of the first cell includes the first initial BWP of the first cell, and the MIB of the first cell includes the first CORESET #0 of the first cell. Manner 2: The first communication apparatus receives the information about the first initial BWP of the first cell and/or the information about the first CORESET #0 of the first cell that are/is sent by a second communication apparatus via dedicated signaling. In this way, even if the first communication apparatus does not obtain the SIB1 and the MIB that are of the SCell and that are broadcast by the second communication apparatus, the first communication apparatus can directly or indirectly obtain an initial BWP of the SCell and/or a CORESET #0 of the SCell by receiving the dedicated signaling of the second communication apparatus.

In a possible implementation, content indicated by the first indication information may include any one of the following indication content:

Indication content 1: The first indication information indicates that the broadcast CFR of the first cell is the same as the reference of the broadcast CFR of the first cell.

Indication content 2: The first indication information indicates that the broadcast CFR of the first cell is the same as an initial BWP, for example, the initial BWP in the SIB1.

Indication content 3: The first indication information indicates that the broadcast CFR of the first cell is the same as the first initial BWP of the first cell.

Indication content 4: The first indication information indicates that the broadcast CFR of the first cell is the same as a CORESET #0, for example, the CORESET #0 in the MIB.

Indication content 5: The first indication information indicates that the broadcast CFR of the first cell is the same as the first CORESET #0 of the first cell.

In a possible implementation, that the first communication apparatus determines the information about the broadcast CFR of the first cell includes: The first communication apparatus determines that the broadcast CFR of the first cell is the same as the first initial BWP of the first cell or the first CORESET #0 of the first cell. For example, if the first indication information indicates that the broadcast CFR of the first cell is the same as the initial BWP or the first initial BWP of the first cell, it is determined that the broadcast CFR of the first cell is the first initial BWP of the first cell; if the first indication information indicates that the broadcast CFR of the first cell is the same as the CORESET #0 or the first CORESET #0 of the first cell, it is determined that the broadcast CFR of the first cell is the first CORESET #0 of the first cell; or if the first indication information indicates that the broadcast CFR of the first cell covers the initial BWP or the first initial BWP of the first cell, it is determined that the broadcast CFR of the first cell covers the first initial BWP of the first cell and that a bandwidth of the broadcast CFR of the first cell is greater than a bandwidth of the first initial BWP of the first cell.

According to an eighth aspect, this application provides a communication method. The method may be performed by a second communication apparatus. The second communication apparatus may be a network device, or may be an apparatus, for example, a chip or a chip system, that can support the network device in implementing a function. The method includes: The second communication apparatus sends information about a reference of a broadcast CFR of a first cell, where the first cell is a secondary cell SCell or a primary secondary cell group cell PSCell. The second communication apparatus sends a first SIB20 of the first cell, where the first SIB20 includes first indication information, and the first indication information indicates a relationship between the broadcast CFR of the first cell and the reference of the broadcast CFR of the first cell.

Based on this solution, the second communication apparatus sends information about a reference of a broadcast CFR of an SCell or a PSCell, so that a first communication apparatus can obtain the information about the reference of the broadcast CFR of the SCell or the PSCell.

In a possible implementation, the information about the reference of the broadcast CFR of the first cell may include information about a first initial BWP of the first cell and/or information about a first CORESET #0 of the first cell.

In a possible implementation, content indicated by the first indication information may include any one of the following indication content: Indication content 1: The first indication information indicates that the broadcast CFR of the first cell is the same as the reference of the broadcast CFR of the first cell. Indication content 2: The first indication information indicates that the broadcast CFR of the first cell is the same as an initial BWP, for example, an initial BWP in a SIB1. Indication content 3: The first indication information indicates that the broadcast CFR of the first cell is the same as the first initial BWP of the first cell. Indication content 4: The first indication information indicates that the broadcast CFR of the first cell is the same as a CORESET #0, for example, a CORESET #0 in a MIB. Indication content 5: The first indication information indicates that the broadcast CFR of the first cell is the same as the first CORESET #0 of the first cell.

In a possible implementation, the second communication apparatus may send the information about the reference of the broadcast CFR of the first cell in any one of the following manners: Manner 1: The second communication apparatus sends the information about the first initial BWP of the first cell and/or the information about the first CORESET #0 of the first cell via dedicated signaling. Manner 2: The second communication apparatus sends a first SIB1 and/or a first MIB that are/is of the first cell, where the first SIB1 includes the information about the first initial BWP, and the first MIB includes the information about the first CORESET #0.

According to a ninth aspect, this application provides a communication method. The method may be performed by a first communication apparatus. The first communication apparatus may be a terminal device, or may be an apparatus, for example, a chip or a chip system, that can support the terminal device in implementing a function. The method includes: The first communication apparatus obtains a first paging message. The first communication apparatus responds to the first paging message if a first condition or a second condition is satisfied, where the first condition includes: The first paging message includes information about a first multicast service, a temporary mobile group identity (temporary mobile group identity, TMGI) corresponding to the first multicast service is the same as a TMGI corresponding to a multicast service 1 joined by the first communication apparatus, and a network identifier (network identifier, NID) corresponding to the first multicast service is the same as a NID corresponding to the multicast service 1 joined by the first communication apparatus, where the information about the first multicast service includes a first network index, and the multicast service 1 joined by the first communication apparatus is associated with an SNPN; and the second condition includes: The first paging message includes information about a second multicast service, and a TMGI corresponding to the second multicast service is the same as a TMGI corresponding to a multicast service 2 joined by the first communication apparatus, where the multicast service 2 joined by the first communication apparatus is not associated with the SNPN.

Based on this solution, when a multicast service corresponds to the SNPN, there is a restriction that an identifier of the multicast service is implicitly indicated by a network index in a paging message, so that the first communication apparatus can compare both TMGIs of multicast services and NIDs of the multicast services. In this way, the first communication apparatus can correctly respond to a multicast activation notification, so that a false response caused by comparing only the TMGIs of the multicast services by the first communication apparatus is avoided.

Optionally, the first communication apparatus may determine only the condition 1, may determine only the condition 2, or may determine both the condition 1 and the condition 2.

In a possible implementation, that the first communication apparatus responds to the first multicast service and/or the first paging message may alternatively be replaced with any one of the following content: The first communication apparatus initiates radio resource control RRC connection resume; the first communication apparatus initiates RRC connection establishment; the first communication apparatus forwards the TMGI of the first multicast service and/or the TMGI of the second multicast service; the first communication apparatus receives a first MCCH message; or the first communication apparatus receives the first multicast service and/or the second multicast service.

According to a tenth aspect, this application provides a communication method. The method may be performed by a second communication apparatus. The second communication apparatus may be a network device, or may be an apparatus, for example, a chip or a chip system, that can support the network device in implementing a function. The method includes: The second communication apparatus sends a first paging message, where the first paging message includes information about a first multicast service, the information about the first multicast service includes a first network index, and the first multicast service is associated with an SNPN; or the first paging message includes information about a second multicast service, and the second multicast service is not associated with the SNPN.

According to an eleventh aspect, an embodiment of this application provides a communication apparatus. The communication apparatus has a function of implementing the first communication apparatus or the second communication apparatus in the foregoing embodiments. The function may be implemented by hardware, or may be implemented by hardware executing corresponding software. The hardware or the software includes one or more units or modules corresponding to the foregoing function.

In a possible implementation, the communication apparatus includes a processor, and the processor is configured to support the communication apparatus in performing a corresponding function of the second communication apparatus in the foregoing communication methods. The communication apparatus may further include a memory. The memory may be coupled to the processor, and the memory stores program instructions and data that are necessary for the communication apparatus. Optionally, the communication apparatus further includes a transceiver. The transceiver is configured to support communication between the communication apparatus and the first communication apparatus or the like. The transceiver may be an independent receiver, an independent transmitter, a transceiver integrating a transceiver function, or an interface circuit.

In a possible implementation, the communication apparatus may be a network device, or a component, for example, a chip, a chip system, or a circuit, that may be used in the network device. The communication apparatus may implement the method according to any one of the second aspect, the fourth aspect, the sixth aspect, the eighth aspect, or the tenth aspect.

In another possible implementation, the communication apparatus includes a processor, and the processor is configured to support the communication apparatus in performing a corresponding function of the first communication apparatus in the foregoing communication methods. The communication apparatus may further include a memory. The memory may be coupled to the processor, and the memory stores program instructions and data that are necessary for the communication apparatus. Optionally, the communication apparatus further includes a transceiver. The transceiver is configured to support communication between the communication apparatus and the second communication apparatus or the like. The transceiver may be an independent receiver, an independent transmitter, a transceiver integrating a transceiver function, or an interface circuit.

In a possible implementation, the communication apparatus may be a terminal device, or a component, for example, a chip, a chip system, or a circuit, that may be used in the terminal device. The communication apparatus may implement the method according to any one of the first aspect, the third aspect, the fifth aspect, the seventh aspect, or the ninth aspect.

According to a twelfth aspect, an embodiment of this application provides a communication apparatus, configured to implement the method according to any one of the first aspect or the implementations of the first aspect, configured to implement the method according to any one of the second aspect or the implementations of the second aspect, configured to implement the method according to any one of the third aspect or the implementations of the third aspect, configured to implement the method according to any one of the fourth aspect or the implementations of the fourth aspect, configured to implement the method according to any one of the fifth aspect or the implementations of the fifth aspect, configured to implement the method according to any one of the sixth aspect or the implementations of the sixth aspect, configured to implement the method according to any one of the seventh aspect or the implementations of the seventh aspect, configured to implement the method according to any one of the eighth aspect or the implementations of the eighth aspect, configured to implement the method according to any one of the ninth aspect or the implementations of the ninth aspect, or configured to implement the method according to any one of the tenth aspect or the implementations of the tenth aspect, and including corresponding functional modules respectively configured to implement steps in the foregoing methods. A function may be implemented by hardware, or may be implemented by hardware executing corresponding software. The hardware or the software includes one or more modules corresponding to the foregoing function.

In a possible implementation, a structure of the communication apparatus includes a processing unit and a transceiver unit. The units may perform corresponding functions in the foregoing method examples. For details, refer to the detailed descriptions in the method examples. Details are not described herein again.

According to a thirteenth aspect, an embodiment of this application provides a communication system. The communication system includes a first communication apparatus and a first communication apparatus. The first communication apparatus may be a terminal device, or a component, for example, a chip, a chip system, or a circuit, that may be used in the terminal device. The second communication apparatus may be a network device, or a component, for example, a chip, a chip system, or a circuit, that may be used in the network device. The first communication apparatus may be configured to perform the method according to any one of the first aspect or the implementations of the first aspect, configured to perform the method according to any one of the third aspect or the implementations of the third aspect, configured to implement the method according to any one of the fifth aspect or the implementations of the fifth aspect, configured to implement the method according to any one of the seventh aspect or the implementations of the seventh aspect, or configured to implement the method according to any one of the ninth aspect or the implementations of the ninth aspect. The second communication apparatus may be configured to perform the method according to any one of the second aspect or the implementations of the second aspect, configured to implement the method according to any one of the fourth aspect or the implementations of the fourth aspect, configured to implement the method according to any one of the sixth aspect or the implementations of the sixth aspect, configured to implement the method according to any one of the eighth aspect or the implementations of the eighth aspect, or configured to implement the method according to any one of the tenth aspect or the implementations of the tenth aspect.

According to a fourteenth aspect, this application provides a chip system, including a processor. Optionally, the chip system may further include a memory. The memory is configured to store a computer program, and the processor is configured to invoke from the memory and run the computer program, so that an apparatus on which the chip system is installed performs any method in the first aspect to the tenth aspect and the possible implementations of the first aspect to the tenth aspect.

According to a fifteenth aspect, an embodiment of this application provides a computer storage medium. The computer storage medium stores instructions. When the instructions are run on a computer, the computer is enabled to perform the method according to any one of the first aspect or the possible implementations of the first aspect, the computer is enabled to perform the method according to any one of the third aspect or the possible implementations of the third aspect, the computer is enabled to perform the method according to any one of the fifth aspect or the implementations of the fifth aspect, the computer is enabled to perform the method according to any one of the seventh aspect or the possible implementations of the seventh aspect, the computer is enabled to perform the method according to any one of the ninth aspect or the implementations of the ninth aspect, the computer is enabled to perform the method according to any one of the second aspect or the implementations of the second aspect, the computer is enabled to perform the method according to any one of the fourth aspect or the implementations of the fourth aspect, the computer is enabled to perform the method according to any one of the sixth aspect or the implementations of the sixth aspect, the computer is enabled to perform the method according to any one of the eighth aspect or the implementations of the eighth aspect, or the computer is enabled to perform the method according to any one of the tenth aspect or the implementations of the tenth aspect.

According to a sixteenth aspect, an embodiment of this application provides a computer program product including instructions. When the computer program product runs on a computer, the computer is enabled to perform the method according to any one of the first aspect or the possible implementations of the first aspect, the computer is enabled to perform the method according to any one of the third aspect or the possible implementations of the third aspect, the computer is enabled to perform the method according to any one of the fifth aspect or the implementations of the fifth aspect, the computer is enabled to perform the method according to any one of the seventh aspect or the possible implementations of the seventh aspect, the computer is enabled to perform the method according to any one of the ninth aspect or the implementations of the ninth aspect, the computer is enabled to perform the method according to any one of the second aspect or the implementations of the second aspect, the computer is enabled to perform the method according to any one of the fourth aspect or the implementations of the fourth aspect, the computer is enabled to perform the method according to any one of the sixth aspect or the implementations of the sixth aspect, the computer is enabled to perform the method according to any one of the eighth aspect or the implementations of the eighth aspect, or the computer is enabled to perform the method according to any one of the tenth aspect or the implementations of the tenth aspect.

BRIEF DESCRIPTION OF DRAWINGS

FIG. 1 is a diagram of a possible architecture that is of a communication system and to which an embodiment of this application is applicable;

FIG. 2 is a diagram of a composition structure of a TMGI according to an embodiment of this application;

FIG. 3 is a diagram of a procedure of implementing an MBS broadcast service on an SCell according to an embodiment of this application;

FIG. 4 is a diagram of a procedure of implementing an MBS multicast service on an SCell or a PCell according to an embodiment of this application;

FIG. 5 is a schematic flowchart of a communication method according to an embodiment of this application;

FIG. 5A is a diagram of information about a first network list of a first cell according to an embodiment of this application;

FIG. 5B is another diagram of information about a first network list of a first cell according to an embodiment of this application;

FIG. 5C is still another diagram of information about a first network list of a first cell according to an embodiment of this application;

FIG. 5D is yet another diagram of information about a first network list of a first cell according to an embodiment of this application;

FIG. 5E is another diagram of information about a first network list of a first cell according to an embodiment of this application;

FIG. 5F is still another diagram of information about a first network list of a first cell according to an embodiment of this application;

FIG. 6 is a schematic flowchart of another communication method according to an embodiment of this application;

FIG. 6A is a diagram of network lists of a first cell and a second cell according to an embodiment of this application;

FIG. 6B is another diagram of network lists of a first cell and a second cell according to an embodiment of this application;

FIG. 7 is a schematic interaction flowchart of still another communication method according to an embodiment of this application;

FIG. 8 is a schematic interaction flowchart of yet another communication method according to an embodiment of this application;

FIG. 9 is a schematic interaction flowchart of still another communication method according to an embodiment of this application;

FIG. 10 is a diagram of a structure of a communication apparatus according to an embodiment of this application;

FIG. 11 is a diagram of a structure of another communication apparatus according to an embodiment of this application;

FIG. 12 is a diagram of a structure of still another communication apparatus according to an embodiment of this application; and

FIG. 13 is a diagram of a structure of yet another communication apparatus according to an embodiment of this application.

## DESCRIPTION OF EMBODIMENTS

The technical solutions in embodiments of this application may be applied to communication systems of various standards, for example, a long term evolution (Long Term Evolution, LTE) communication system, a universal mobile telecommunications system (Universal Mobile Telecommunications System, UMTS) system, a code division multiple access (Code Division Multiple Access, CDMA) system, a wireless local area network (Wireless Local Area Network, WLAN), a next generation radio access network (next generation radio access network, NG-RAN) system, a new radio (New Radio, NR) communication technology, a 5th generation (5th generation, 5G) communication system, a 6th generation (6th generation, 6G) communication system or another future evolved system (for example, a 7G communication system), vehicle to everything (vehicle to everything, V2X), long term evolution-vehicle (LTE-vehicle, LTE-V), vehicle to vehicle (vehicle to vehicle, V2V), an internet of vehicles, machine type communication (machine type communication, MTC), an internet of things (internet of things, IoT), long term evolution-machine to machine (LTE-machine to machine, LTE-M), machine to machine (machine to machine, M2M), or other various wireless communication systems for which a radio access technology is used.

In addition, names of network elements in the communication system are not limited in embodiments of this application. For example, in communication systems of different standards, the network elements may have other names. For another example, when a plurality of network elements are integrated into a same physical device, the physical device may alternatively have another name.

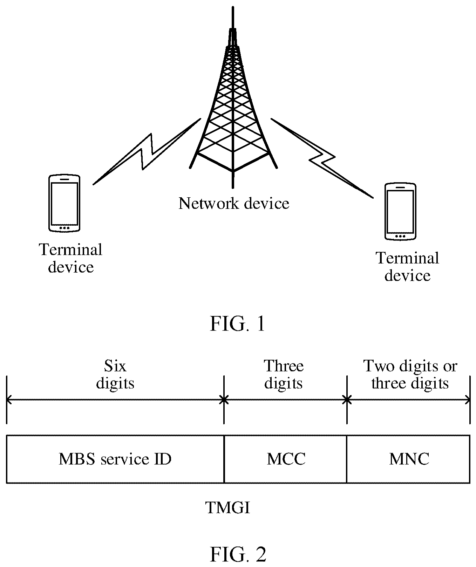

For example, FIG. 1 is a diagram of a possible architecture that is of a communication system and to which an embodiment of this application is applicable. As shown in FIG. 1, the communication system includes at least one network device (one network device is specifically used as an example in FIG. 1) and at least one terminal device (two terminal devices are specifically used as an example in FIG. 1). The terminal device is located in coverage of one or more cells provided by the network device, and one or more cells may serve the terminal device. When a plurality of cells serve the terminal device, the terminal device may operate in a carrier aggregation (carrier aggregation, CA), dual connectivity (dual connectivity, DC), or coordinated multipoint transmission manner, where at least one cell provides more than one numerology (Numerology), and provides a radio resource for the terminal device. When the terminal device moves, the terminal device may perform cell selection or cell handover between different cells. The different cells may be distributed under one network device, that is, co-site, or may be distributed under different network devices, that is, non-co-site (in other words, cross-site). This is not limited in embodiments of this application.

The terminal device shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal apparatus, or the like. The terminal device may have a wireless transceiver function. The terminal device can communicate (for example, perform wireless communication) with one or more network devices in one or more communication systems, and accept a network service provided by the network device. The network device herein includes but is not limited to a base station, a core network device, or the like.

In some examples, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device, a terminal apparatus in a 5G network, or a terminal apparatus in a future evolved public land mobile network (public land mobile network, PLMN).

In addition, the terminal device may be deployed on land, and includes an indoor or outdoor device, a handheld device, or a vehicle-mounted device. The terminal device may alternatively be deployed on water (for example, on a ship). The terminal device may alternatively be deployed in the air (for example, on an aircraft, a balloon, and a satellite). The terminal device may be specifically a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. The terminal device may alternatively be a communication chip having a communication module, or may be a vehicle having a communication function, a vehicle-mounted device (for example, a vehicle-mounted communication apparatus or a vehicle-mounted communication chip), or the like.

In addition, a specific technology and a specific device form that are used by the terminal device are not limited in embodiments of this application. In this application, an apparatus configured to implement a function of the terminal device may be a terminal device, or may be an apparatus, for example, a chip system, that can support the terminal device in implementing the function. The apparatus may be installed in the terminal device, or may be used in cooperation with the terminal device. The chip system may include a chip, or may include the chip and another discrete device. For brevity, hereinafter, the technical solutions provided in embodiments of this application are described by using an example in which the apparatus configured to implement the function of the terminal device is the terminal device.

The network device shown above may be an access network device (or referred to as an access network site), or may be the core network device. The following separately provides descriptions.

In a first case, the network device may be the access network device (or referred to as the access network site).

When the network device is the access network device, the network device may be further connected to a core network (core network, CN) device. The access network device is a device that has a function of providing network access, for example, a radio access network (radio access network, RAN) or the base station. The access network device may specifically include the base station (base station, BS) (for example, a RAN base station), or include the base station, a radio resource management device configured to control the base station, and the like. The access network device may further include a relay station (relay device), an access point, a base station in the 5G network, a base station in a future 6G network, a base station in the future evolved PLMN, an NR base station, or the like. The access network device may be a wearable device or a vehicle-mounted device. The access network device may alternatively be a communication chip having a communication module.

For example, the access network device may include an evolved NodeB (NodeB, eNB, or eNodeB, evolved NodeB) in an LTE system or long term evolution-advanced (long term evolution-advanced, LTE-A), may include a next generation NodeB (next generation NodeB, gNB), a transmission reception point (transmission reception point, TRP) (also referred to as a transceiver node), a transmitting point (transmitting point, TP), a baseband processing unit (building base band unit, BBU), a radio frequency unit (Radio Remote Unit, RRU), and a baseband unit (baseband unit, BBU) and an active antenna unit (active antenna unit, AAU) in a 5G NR system, may include a central unit (central unit, CU) and a distributed unit (distributed unit, DU) in a cloud access network (cloud radio access network, Cloud RAN) system, may include an access point in a wireless fidelity (wireless fidelity, Wi-Fi) system, may include a radio network controller (radio network controller, RNC), a base station controller (base station controller, BSC), a base transceiver station (base transceiver station, BTS), or a home base station (for example, a home evolved NodeB, or a home NodeB, HNB), may include a mobile switching center, a BTS in a global system for mobile communications (global system for mobile communications, GSM) or a code division multiple access (code division multiple access, CDMA) network, or a node base station (node base station, NB) in wideband code division multiple access (wideband code division multiple access, WCDMA), may be a base station device in the future 6G network, an access network device in the future evolved PLMN, or a base station, a small cell, or a micro base station in a future communication network, or may be the wearable device or the vehicle-mounted device.

In a second case, the network device may be the core network device.

The core network device may be configured to provide a core network service for a terminal device that accesses the network device. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

It may be understood that FIG. 1 shows only the possible architecture that is of the communication system and to which an embodiment of this application may be applied. In another possible scenario, the architecture of the communication system may alternatively include another device.

Some terms in embodiments of this application are explained and described below, to facilitate understanding of a person skilled in the art.

I. Broadcast common frequency resource (common frequency resource, CFR)

For example, the broadcast CFR is a frequency domain resource for receiving a broadcast service (in other words, broadcast data) and/or an MCCH message. For example, the broadcast CFR may be simply understood as a bandwidth part (bandwidth part, BWP) for receiving the broadcast data. For example, the broadcast CFR defines a frequency domain range and a channel configuration that are for receiving the broadcast data, and a terminal device can receive the broadcast data only in the range of the broadcast CFR.

For example, a configuration of the broadcast CFR may include the following three types: The broadcast CFR is the same as a control-resource set #0 (control-resource set, CORESET #0); the broadcast CFR is the same as an initial BWP (initial BWP); and the broadcast CFR includes the initial BWP, and a bandwidth of the broadcast CFR is greater than a bandwidth of the initial BWP.

II. System information (system information, SI)

The system information may be divided into a master information block (master information block, MIB) and a plurality of system information blocks (system information blocks, SIBs). The plurality of system information blocks are, for example, a SIB1 to a SIB20.

The MIB may include a parameter, for example, a system frame number (system frame number, SNF), needed for obtaining the SIB1; may include cell barring status information, basic physical layer information of a cell that needs to further receive the system information, and the like; and may further include some reference information, for example, a CORESET #0, for determining a broadcast CFR of a cell.

Different SIBs carry different parameters, and have different functions. For example, the different SIBs may include related system information for cell reselection, public warning information (public warning system, PWS), timing (for example, information related to global positioning system (global positioning system, GPS) time or coordinated universal time (coordinated universal time, UTC)), a V2X service (for example, an SL sending resource pool, an SL receiving resource pool, and SL configuration information), or positioning. The PWS includes an earthquake and tsunami warning system (earthquake and tsunami warning system, ETWS) notification, a common mobile alert service (commercial mobile alert service, CMAS) notification, or the like.

The SIB1 is also referred to as a system information block type 1, and may carry scheduling information of another SIB, for example, a relationship of mapping from a SIB to an SI message, an SI message window length (for example, SI-windowlength), and a periodicity of the SI message. The SIB1 may further include an indication indicating whether each SIB is always broadcast or is provided on demand (on demand), and configuration information, for example, a preamble and/or a resource configuration, needed for requesting the system information. The SIB1 may further include information about a network list of the cell, for example, a PLMN list and/or a non-public network (non-public network, NPN) list that are/is of the cell. The SIB1 may further carry some reference information, for example, an initial BWP, for determining the broadcast CFR of the cell.

The SIB20 is also referred to as a system information block type 20, and may carry a point-to-multipoint related message, for example, configuration information of a broadcast channel. The broadcast channel includes, for example, a multicast control channel (multicast control channel, MCCH) and/or a multicast traffic channel (multicast traffic channel, MTCH). The terminal device may receive, based on configuration information of the MCCH, information carried on the MCCH.

In addition, the SIB20 may further include information indicating the broadcast CFR of the cell, for example, may include information about a reference of the broadcast CFR of the cell. The information about the reference of the broadcast CFR of the cell may include, for example, the foregoing CORESET #0 and/or initial BWP. In the SIB20, the information about the broadcast CFR of the cell includes any one of the following:

1. There is no cfr-ConfigMCCH-MTCH field in the SIB20. This indicates that the broadcast CFR is the same as the CORESET #0.

2. There is a cfr-ConfigMCCH-MTCH field in the SIB20, and there is no locationAndBandwidthBroadcast field in the SIB20. This indicates that the broadcast CFR is the same as the CORESET #0.

3. There is a cfr-ConfigMCCH-MTCH field in the SIB20, there is a locationAndBandwidthBroadcast field in the SIB20, and a value of the locationAndBandwidthBroadcast field is sameAsSib 1 ConfiguredLocationAndBW. This indicates that the broadcast CFR is the same as the initial BWP in the SIB1.

4. There is a cfr-ConfigMCCH-MTCH field in the SIB20, there is a locationAndBandwidthBroadcast field in the SIB20, and a value of the locationAndBandwidthBroadcast field is locationAndBandwidth. This indicates that the broadcast CFR includes the initial BWP in the SIB1, and a bandwidth of the broadcast CFR is greater than a bandwidth of the initial BWP in the SIB1.

III. PLMN

The PLMN is uniquely identified by a PLMN identifier (public land mobile network identifier, PLMN ID). The PLMN ID includes a mobile country code (mobile country code, MCC) and a mobile network code (mobile network code, MNC), for example, may be represented as: PLMN ID=MCC‖MNC. For related content of the MCC and the MNC, refer to subsequent descriptions. Details are not described herein.

The PLMN is a network deployed for a public purpose, and may also be referred to as a public network for short. Corresponding to the public network, a non-public network (non-public network, NPN) is a network deployed for a non-public purpose, and may also be referred to as a non-public network or a private network for short. The NPN may include a public network integrated non-public network (public network integrated non-public network, PNI-NPN) and a standalone non-public network (standalone non-public network, SNPN). For example, the PNI-NPN depends on a network function provided by the PLMN, or may be uniquely identified by the PLMN ID. The SNPN does not depend on the network function provided by the PLMN, and needs to be uniquely identified by a combination of a network identifier (network identifier, NID) and the PLMN ID. An SNPN ID may be considered as a pair (PLMN ID, NID).

In embodiments of this application, the public network and the non-public network may be collectively referred to as networks. A network may be explicitly indicated by a network identifier (network ID), or may be implicitly indicated by a network index (network index).

If the network belongs to the public network, the network ID of the network is a PLMN ID of the network, and the network index of the network is a PLMN index of the network. The PLMN index of the network may refer to, for example, a ranking of the PLMN ID of the network in a PLMN list of a cell, and the PLMN list of the cell may include PLMN IDs of all PLMNs corresponding to the cell.

Likewise, if the network belongs to the non-public network, the network ID of the network is an NPN ID of the network, and the network index of the network is an NPN index of the network (or may be an SNPN index in a case of corresponding to the SNPN). For the NPN index of the network, for example, the NPN index may be determined based on a ranking of the NPN ID of the network in an NPN list of a cell. Optionally, the NPN ID may include information about the PLMN ID. Therefore, the NPN index may also indicate the PLMN ID.

IV. Temporary mobile group identity (temporary mobile group identity, TMGI)

The TMGI identifies a broadcast service or a multicast service (for example, uniquely identifies one broadcast service or one multicast service) in a multicast/broadcast service (multicast and broadcast service, MBS). The MBS mentioned herein may be an MBS in an NR system. The NR MBS supports multicast (Multicast) and broadcast (Broadcast). Through broadcast, a same service and/or same content data may be simultaneously provided to all terminal devices in a geographical area. That is, all the terminal devices in the area may be targeted at, and the terminal devices do not need to perform a "group joining process". The multicast may also be referred to as groupcast. The same service and/or the same content data may be simultaneously provided for a group of dedicated terminal devices. That is, not all terminal devices in coverage are authorized to receive data. Therefore, the terminal device may need to perform the "group joining process".

For example, FIG. 2 is a diagram of a composition structure of a TMGI. The TMGI includes the following three parts of content:

Content 1: a multicast/broadcast service service identifier (multicast and broadcast service service identifier, MBS Service ID). For example, the MBS service ID includes a six-digit fixed-length hexadecimal number between 000000 and FFFFFF, or includes three octets; and uniquely identifies one MBS service in one PLMN.

Content 2: an MCC. For example, the MCC includes a three-digit fixed-length hexadecimal number, and uniquely identifies a residence country of an MB-SMF except that an MCC value is 901. The MCC value does not identify any country, but is globally allocated by the international telecommunication union (international telecommunication union, ITU).

Content 3: an MNC. For example, the MNC includes a two-digit or three-digit hexadecimal number, and identifies a PLMN to which the MB-SMF belongs. However, when the MCC is 901, an MNC value is 56, and does not identify any PLMN. For example, a quantity of digits that the MNC specifically includes depends on allocation to the PLMN by a national numbering plan administrator of the MNC.

For example, it can be learned from the foregoing description content of the PLMN and the TMGI that, because the PLMN ID includes the MCC and the MNC, and the TMGI includes the MBS service ID, the MCC, and the MNC, the TMGI may be considered as a combination of the MBS service ID and the PLMN ID.

For example, although the TMGI is originally designed to uniquely identify the broadcast service or the multicast service, for a public network or a PNI-NPN, the TMGI may uniquely identify the broadcast service or the multicast service; and for an SNPN, only the TMGI in combination with a NID can uniquely identify the broadcast service or the multicast service.

For example, when the multicast service corresponds to the public network or the PNI-NPN, an identifier of the multicast service may include the TMGI, or the MBS service ID+the PLMN ID. When the multicast service corresponds to the SNPN, an identifier of the multicast service may include the TMGI+the NID, or the MBS service ID+the PLMN ID+the NID.

V. Explicit indication and implicit indication

In embodiments of this application, the explicit indication and the implicit indication are terms proposed for a service in an MBS, for example, a broadcast service or a multicast service, which is collectively referred to as an MBS service. The MBS service may be indicated by an explicit ID or an implicit index.

For example, for the broadcast service:
When the broadcast service corresponds to a public network or a PNI-NPN, an identifier of the broadcast service may include a TMGI, or a combination of a PLMN ID and an MBS service ID. Therefore, the broadcast service may be explicitly indicated by the PLMN ID, or may be implicitly indicated by a PLMN index.

When the broadcast service corresponds to an SNPN, an identifier of the broadcast service may include a TMGI and a NID; a PLMN ID, an MBS service ID, and the NID; or an SNPN ID and the MBS service ID. However, because an existing protocol cannot explicitly indicate the NID, the broadcast service can be implicitly indicated only by an NPN index or an SNPN index.

For example, for the multicast service:
When the multicast service corresponds to a public network or a PNI-NPN, the multicast service may be explicitly indicated by a PLMN ID, or may be implicitly indicated by a PLMN index. This is the same as the broadcast service.

When the multicast service corresponds to an SNPN, because a "group joining process" is performed, and a network device learns of a group joined by a terminal device, the multicast service may be implicitly indicated by an NPN index or an SNPN index, or may be explicitly indicated by a PLMN ID. For example, a TMGI ID or the PLMN ID is indicated. Optionally, after receiving related information, the terminal device adds a corresponding NID.

Regardless of the broadcast service or the multicast service, using the explicit ID for indication usually needs to occupy many bits, and using the implicit index for indication may need only a few bits. For example, currently, one cell has a maximum of 12 PLMNs. Therefore, 12 PLMN indexes can clearly indicate a current PLMN. In other words, one hexadecimal digit is sufficient for use. However, if the PLMN ID is used for explicit indication, five or six hexadecimal digits are needed. It is clear that an implicit indication manner in which the index is used can effectively reduce signaling overheads.

VI. Intersection network and non-intersection network.

For example, in embodiments of this application, the intersection network is an intersection part of networks of cells managed by a network device, namely, a network shared by all cells. For example, the non-intersection network is a network that does not belong to the intersection network. For example, a non-intersection network of any cell is a network that is in a network of the cell and that is different from another cell managed by the network device. That is, for example, the non-intersection network is a network exclusive to the cell or a part of cells.

The foregoing describes some terms in embodiments of this application, and the following describes some technical features in this application.

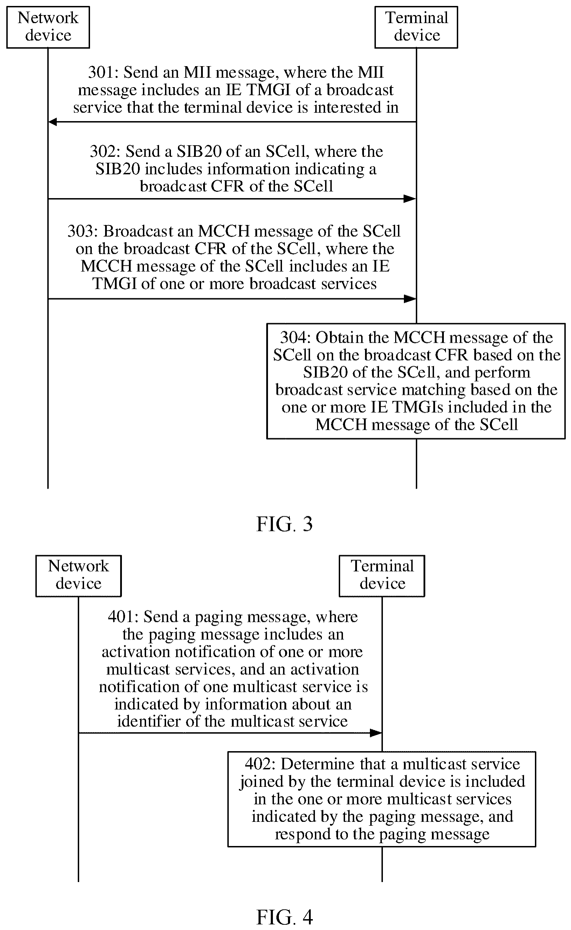

FIG. 3 is a diagram of a procedure of implementing an MBS broadcast service on a secondary cell (secondary cell, SCell). The procedure includes the following steps.

Optionally, step 301: A terminal device sends an MBS interest indication (MBS interest indication, MII) message to a network device.

The MII may include broadcast service list information (MBS-ServiceList), and the broadcast service list information includes information about an identifier of one or more broadcast services that the terminal device is interested in receiving or is receiving.

For example, when the terminal device generates the MII message, if the terminal device determines that a PLMN ID corresponding to the identifier of the broadcast service that the terminal device is interested in receiving or is receiving is included in a SIB1 of a primary cell (primary cell, PCell) (for example, a PLMN list or an NPN list that is of the PCell and that is carried in the SIB1 of the PCell), the terminal device may indicate the identifier of the broadcast service in the MII message by using an explicit ID or an implicit index. If the terminal device determines that a PLMN ID corresponding to the identifier of the broadcast service that the terminal device is interested in receiving or is receiving is not included in a SIB1 of a PCell, the terminal device needs to indicate the information about the identifier of the broadcast service in the MII message by using an explicit ID.

For example, when the terminal device generates the MII message, if the terminal device determines that an SNPN ID corresponding to the identifier of the broadcast service that the terminal device is interested in receiving or is receiving is included in a SIB1 of a primary cell (primary cell, PCell) (for example, a PLMN list or an NPN list that is of the PCell and that is carried in the SIB1 of the PCell), the terminal device may indicate the identifier of the broadcast service in the MII message by using an explicit ID or an implicit index. If the terminal device determines that an SNPN ID corresponding to the identifier of the broadcast service that the terminal device is interested in receiving or is receiving is not included in a SIB1 of a PCell, the terminal device cannot indicate the information about the identifier of the broadcast service in the MII message.

Step 302: The network device sends a SIB20 of the SCell to the terminal device, where the SIB20 includes information indicating a broadcast CFR of the SCell.

For example, if the network device determines that the broadcast service that is indicated in the MII message and that the terminal device is interested in receiving or is receiving is on an SCell, the network device may send a SIB20 of the SCell to the terminal device via dedicated signaling. The SIB20 of the SCell may include configuration information related to reception of an MCCH of the SCell, and the configuration information related to the reception of the MCCH of the SCell may include information indicating a broadcast CFR (an MCCH message is broadcast on the broadcast CFR) of the SCell.

Step 303: The network device broadcasts an MCCH message of the SCell on the broadcast CFR of the SCell, where the MCCH message of the SCell includes information about an identifier of one or more broadcast services.

For example, the MCCH message of the SCell may include information (an MBS session) about the one or more broadcast services, for example, the information about the identifier of the broadcast service, and configuration information related to reception of an MTCH corresponding to the broadcast service. An MTCH message is also broadcast on the broadcast CFR, and the MTCH message includes the corresponding broadcast service (also referred to as broadcast data).

In the MCCH message, the information about the identifier of the broadcast service may be indicated by an explicit ID or an implicit index. For example, if the broadcast service corresponds to a public network or a PNI-NPN, the information about the identifier of the broadcast service may be indicated by the explicit ID (for example, a PLMN ID), or may be indicated by the implicit index (for example, a PLMN index or an NPN index). If the broadcast service corresponds to an SNPN, the information about the identifier of the broadcast service may be indicated by the implicit index (for example, an NPN index or an SNPN index).

Step 304: The terminal device obtains the MCCH message of the SCell on the broadcast CFR of the SCell based on the SIB20 of the SCell, and performs broadcast service matching based on the information about the identifier of the one or more broadcast services included in the MCCH message of the SCell.

For example, the terminal device may obtain the broadcast CFR of the SCell by parsing the information that is included in the SIB20 of the SCell and that indicates the broadcast CFR of the SCell, and obtain, on the broadcast CFR of the SCell, the MCCH message that is of the SCell and that is broadcast by the network device. Based on the information about the identifier of the one or more broadcast services included in the MCCH message of the SCell, if the broadcast service that the terminal device is interested in receiving or is receiving is included in the one or more broadcast services, the terminal device may obtain, on the broadcast CFR of the SCell based on the configuration information related to the reception of the MTCH of the broadcast service, the MTCH of the broadcast service, or the broadcast service or the broadcast data carried on the MTCH.

In the foregoing MBS broadcast procedure on the SCell, the terminal device and the network device need to exchange, a plurality of times, the information related to the broadcast service. In each interaction process, a sender needs to indicate these pieces of information in the message, and a receiver also needs to interpret these pieces of information in the message. However, there are still many problems with indication or interpretation of these pieces of information in an existing procedure. The following three points are specifically included:

Problem 1: In the foregoing step 303, if the information about the identifier of the one or more broadcast services included in the MCCH message of the SCell is indicated by the implicit index (for example, the PLMN index or the NPN index), a network list of the SCell, for example, a PLMN list of the SCell or an NPN list of the cell, is further needed to obtain the corresponding explicit ID through parsing. In addition, there is a network list of the SCell in a SIB1 of the SCell. Because the terminal device does not obtain the SIB1 of the SCell, the terminal device does not learn of the PLMN list or the NPN list of the SCell. Therefore, the terminal device cannot obtain, through parsing, the PLMN ID corresponding to the implicit PLMN index or an NPN ID corresponding to the implicit NPN index. In other words, the terminal device cannot identify the identifier of the broadcast service indicated by the MCCH message of the SCell, and therefore cannot perform broadcast service matching. Consequently, performance of receiving the broadcast service by the terminal device on the SCell may be affected.

Problem 2: In the foregoing step 301, if the broadcast service that the terminal device is interested in receiving or is receiving is on the SCell, and the broadcast service on the SCell corresponds to the public network or the PNI-NPN, there is no problem with the manner of indicating the broadcast service. However, if the broadcast service on the SCell corresponds to the SNPN, the broadcast service on the SCell can be indicated only by the implicit index. However, if the SNPN ID of the broadcast service on the SCell is not included in the SIB1 of the PCell (or if the SIB1 of the PCell does not include the SNPN ID of the broadcast service on the SCell, if the SNPN ID of the broadcast service on the SCell is not included in the NPN list of the PCell, or if the NPN list of the PCell does not include the SNPN ID of the broadcast service on the SCell), the NPN list carried in the SIB1 of the PCell cannot be for obtaining an IE TMGI of the broadcast service on the SCell through interpretation. In other words, an SNPN ID obtained by interpreting, by using the NPN list carried in the SIB1 of the PCell, an NPN index corresponding to the broadcast service on the SCell cannot indicate the IE TMGI of the broadcast service on the SCell. In this case, the terminal device cannot report the IE TMGI of the broadcast service on the SCell in the MII message. Consequently, the network device cannot learn of the broadcast service that is on the SCell and that the terminal device is interested in receiving or is receiving. Therefore, when performing broadcast service scheduling, the network device cannot consider the broadcast service on the SCell, and the performance of receiving the broadcast service by the terminal device on the SCell may be affected. Alternatively, in the foregoing step 301, if the broadcast service that the terminal device is interested in receiving or is receiving corresponds to the public network or the PNI-NPN, there is no problem with the manner of indicating the broadcast service. However, if the broadcast service that the terminal device is interested in receiving or is receiving corresponds to the SNPN, the broadcast service can be indicated only by the implicit index. However, if the SNPN ID corresponding to the broadcast service is not included in the SIB1 of the PCell (or if the SIB1 of the PCell does not include the SNPN ID of the broadcast service, if the SNPN ID of the broadcast service is not included in the NPN list of the PCell, or if the NPN list of the PCell does not include the SNPN ID of the broadcast service), the NPN list carried in the SIB1 of the PCell cannot be for obtaining the identifier of the broadcast service through interpretation. In this case, the terminal device cannot report the information about the identifier of the broadcast service in the MII message. Consequently, the network device cannot learn of the broadcast service that the terminal device is interested in receiving or is receiving. Therefore, when performing broadcast service scheduling, the network device cannot consider the terminal device, and cannot correctly perform mobility management (for example, make a handover decision). Performance of receiving the broadcast service by the terminal device (for example, performance of performing broadcast reception on the SCell) may be affected.

Problem 3: The message in the foregoing MBS broadcast procedure relates to much implicit indication content, for example:

In the foregoing step 302, for indication content of the broadcast CFR, the SIB20 of the SCell may carry information about an association relationship between information about a reference (for example, a CORESET #0 and an initial BWP) of the broadcast CFR of the SCell and the broadcast CFR of the SCell. In addition, the CORESET #0 is located in a MIB of the SCell, and the initial BWP is located in the SIB1 of the SCell. In a broadcast procedure on the SCell, the terminal device receives the SIB20 that is of the SCell and that is sent by the network device via the dedicated signaling, but does not obtain the MIB and the SIB1 of the SCell that are broadcast, and obtains only a MIB and the SIB1 of the PCell that are broadcast. Therefore, based on a conventional technology, the terminal device can obtain, through parsing based only on a CORESET #0 in the MIB of the PCell and an initial BWP in the SIB1 of the PCell, the broadcast CFR that is of the SCell and that is indicated in the SIB20 of the SCell. However, the CORESET #0 indicated in the MIB of the PCell and the CORESET #0 indicated in the MIB of the SCell may be different, and the initial BWP indicated in the SIB1 of the PCell and the initial BWP indicated in the SIB1 of the SCell may also be different. In this case, when the terminal device determines, based on the MIB and the SIB1 that are of the PCell, the broadcast CFR that is of the SCell and that is indicated in the SIB20 of the SCell, an interpretation error may occur. For example, consequently, the terminal device does not learn what the CFR indicated in the SIB20 of the SCell should be; or the terminal device receives the MCCH message and the MTCH message of the SCell on an incorrect broadcast CFR, further the terminal device cannot successfully receive the MCCH message and the MTCH message of the SCell, and the performance of performing broadcast reception by the terminal device on the SCell is affected.

In the foregoing step 302, for indication content of a PDSCH configuration of the MCCH, the SIB20 of the SCell may indicate that the PDSCH configuration of the MCCH is the same as a PDSCH configuration provided in initialDownlinkBWP of the SIB1. However, because the terminal device does not obtain the SIB1 of the SCell, the terminal device does not learn of the PDSCH configuration provided in initialDownlinkBWP of the SIB1, and therefore does not learn of the PDSCH configuration of the MCCH. Consequently, the terminal device may be incapable of successfully receiving the MCCH message of the SCell, and the performance of performing broadcast reception by the terminal device on the SCell is affected.

In the foregoing step 303, for indication content of a quantity N of SSBs used for SSB mapping of the MTCH, a reference of the quantity N of SSBs used for SSB mapping of the MTCH is provided in the SIB1. However, because the terminal device does not obtain the SIB1 of the SCell, the terminal device does not learn of N provided in the SIB1, and therefore does not learn of the quantity N of SSBs used for SSB mapping of the MTCH. Consequently, the terminal device may be incapable of successfully receiving the MTCH of the SCell, and the performance of performing broadcast reception by the terminal device on the SCell is affected.

Embodiments of this application provide a corresponding solution to each of the foregoing three problems. For details, refer to the following implementation solution 1 to implementation solution 4. Details are not described herein.

FIG. 4 is a diagram of a procedure of implementing an MBS multicast service. The procedure includes the following steps.

Step 401: A network device sends a paging message to a terminal device.

The paging message includes an activation notification of one or more multicast services, and an activation notification of one multicast service is indicated by information about an identifier of the multicast service.

For example, the multicast service supports an activation and deactivation mechanism. During deactivation, the terminal device may enter an idle (idle) state or a non-connected (inactive) state. When the multicast service is activated, the network device may send the paging message (paging message), to wake up the terminal device to enter a connected state.

For example, the network device may send the paging message to the terminal device via downlink control information (downlink control information, DCI) scrambled by using a paging radio network temporary identifier (paging radio network temporary identifier, P-RNTI). The DCI includes a short message indicator, and the short message indicator indicates whether there is scheduling information of the paging message in the DCI and/or whether there is a short message in the DCI. For the terminal device in the idle state or the inactive state, if the short message indicator in the DCI scrambled by using the P-RNTI indicates that there is scheduling information of the paging message, the terminal device receives the paging message.

Step 402: The terminal device determines that a multicast service joined by the terminal device is included in the one or more multicast services indicated by the paging message, and responds to the paging message.

For example, after receiving the paging message, if the terminal device determines, based on information about an identifier of each multicast service included in the paging message, that the paging message includes an activation notification of the multicast service joined by the terminal device, the terminal device may respond to paging, and receive the corresponding multicast service.

In the foregoing MBS multicast procedure, the terminal device and the network device need to exchange the information about the identifier of the multicast service. However, there is also a problem with indication or interpretation of the information about the identifier of the multicast service in an existing procedure. The problem mainly includes:

Problem 4: In the foregoing step 402, after the terminal device receives the paging message, based on the existing procedure, the terminal device may respond to the paging information provided that a TMGI of the multicast service joined by the terminal device is the same as a TMGI of the multicast service indicated in the paging message. Regardless of whether the multicast service corresponds to a public network, a PNI-NPN, or an SNPN, the information about the identifier of the multicast service may be indicated by an explicit ID or an implicit index. However, if the information about the identifier of the multicast service in the paging message is indicated by the explicit ID (for example, a PLMN ID), the multicast service may correspond to the public network or the PNI-NPN. However, the multicast service joined by the terminal device corresponds to the SNPN. In this case, for the SNPN, one multicast service is actually uniquely identified by one TMGI and one NID. If the terminal device compares only TMGIs, a false response may be caused, and performance of receiving the multicast service by the terminal device, power consumption of the terminal device, or the like is affected.

In view of the foregoing technical problems, with reference to the accompanying drawings, the following describes the technical solutions provided in embodiments of this application.

In the following description process, for example, a communication method is applied to the architecture of the system shown in FIG. 1. In addition, the communication method may be performed by two communication apparatuses. The two communication apparatuses are described by using a first communication apparatus and a second communication apparatus as an example. The first communication apparatus may be a terminal device or a communication apparatus that can support implementation of a function needed for the method, or certainly may be another communication apparatus, for example, a chip system. Likewise, the second communication apparatus may be a network device or a communication apparatus that can support implementation of a function needed for the method, or certainly may be another communication apparatus, for example, a chip system. In addition, implementations of neither of the first communication apparatus and the second communication apparatus are limited. For example, the first communication apparatus may be the terminal device, and the second communication apparatus is the network device; or the first communication apparatus is the terminal device, and the second communication apparatus is the communication apparatus that can support implementation of the function needed by the network device to implement the method. For ease of description, in the following descriptions, an example in which the method is performed by the network device and the terminal device is used.

In the following descriptions, "at least one" means one or more, and "a plurality of" means two or more than two. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following" or a similar expression thereof indicates any combination of the items, and includes a singular item or any combination of plural items. For example, at least one of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit sizes, content, an order, a time sequence, priorities, importance, or the like of the plurality of objects. For example, a first cell and a second cell are merely for distinguishing between cells, but do not indicate different locations, coverage, priorities, importance degrees, or the like of the two cells.

In addition, in embodiments of this application, "multicast" may alternatively be replaced with a term like "groupcast". Correspondingly, a multicast service may alternatively be replaced with a groupcast service, and an identifier of the multicast service may alternatively be replaced with an identifier of the groupcast service. In this embodiment of this application, a service may include/be replaced with/be understand as a session. For example, the multicast service may include/be replaced with/be understand as a multicast session, an MBS session, an MBS service, or the like, and a broadcast service may include/be replaced with/be understand as a broadcast session, an MBS session, an MBS service, or the like.

In the following descriptions, the implementation solution 1 and the implementation solution 2 are solutions proposed for the foregoing problem 1, the implementation solution 3 is a solution proposed for the foregoing problem 2, the implementation solution 4 is a solution proposed for the foregoing problem 3, and an implementation solution 5 is a solution proposed for the foregoing problem 4. The following descriptions are provided only by using an example in which each implementation solution is separately implemented, but one or more of these implementation solutions may be combined with each other to resolve at least two problems in the MBS broadcast procedure and/or the MBS multicast procedure.

Implementation solution 1

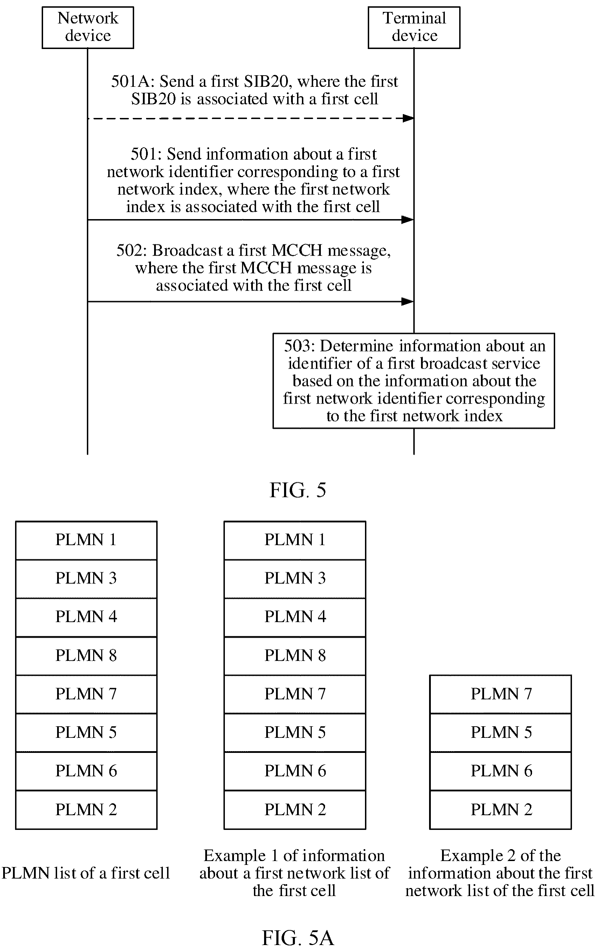

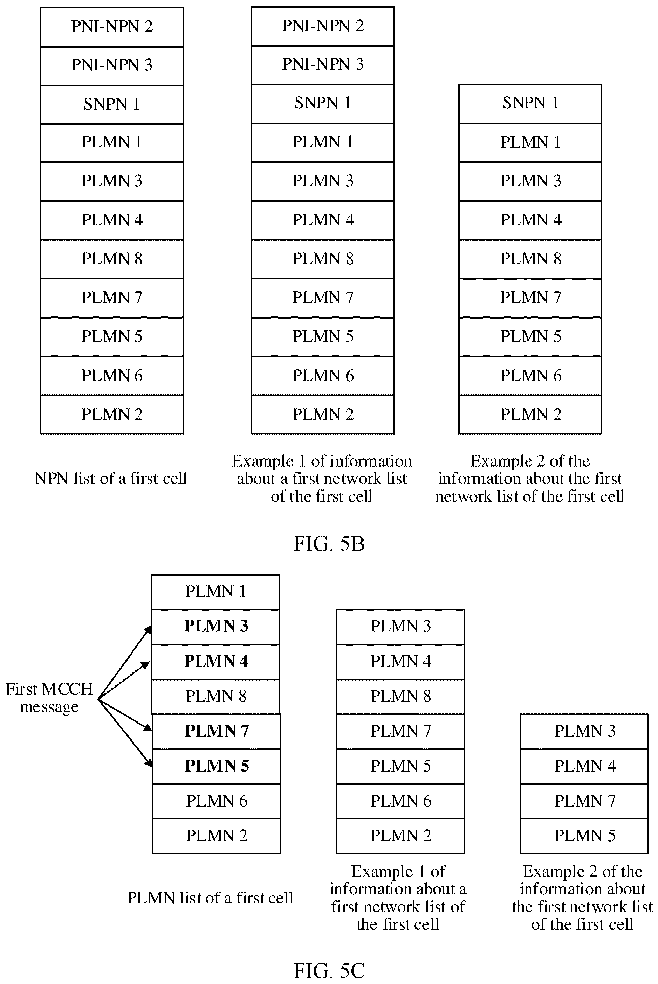

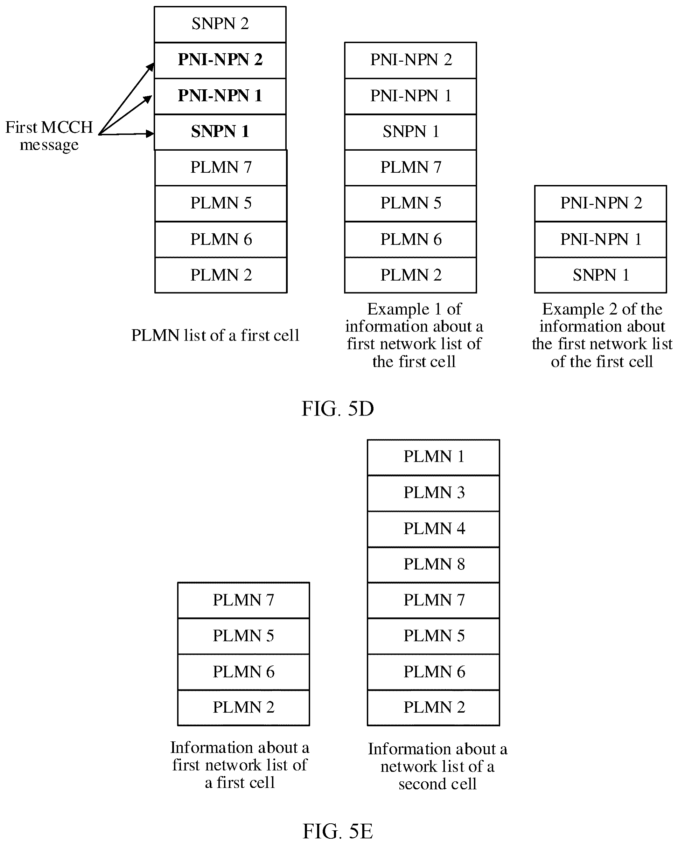

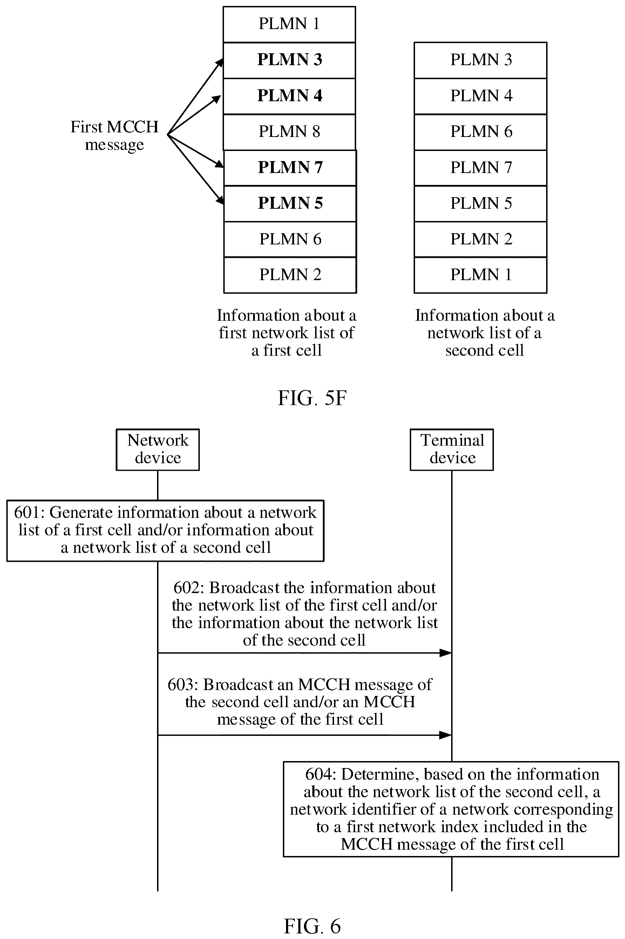

FIG. 5 shows an example of a communication method according to an embodiment of this application. The method includes the following steps.

Step 501: A terminal device obtains information about a first network identifier corresponding to a first network index.

For example, in this application, obtaining may include/be replaced with receiving or determining.

Optionally, a network device sends the information about the first network identifier corresponding to the first network index. Accordingly, the terminal device receives the information about the first network identifier corresponding to the first network index.

Optionally, the first network index is associated with a first cell.

For example, the first cell may be an SCell, a primary secondary cell group cell (Primary Secondary Cell Group Cell, PSCell), an SCell of the terminal device, or a PSCell of the terminal device.

Herein, it should be noted that the first cell is the SCell or the PSCell for the terminal device, but may be a PCell, an SCell, or a PSCell for another terminal device. This is not limited.

Optionally, the first cell is a cell managed by the network device. For example, the network device is a base station; and one base station may manage one cell, or may manage a plurality of cells. For example, the cell is a coverage area centered on the base station. For example, when the base station manages the plurality of cells, the base station may have antennas in a plurality of directions. The antenna is for covering a specific geographical area in a corresponding direction. The geographical area is referred to as a sector. Wireless coverage is completed by using one or more radio carriers in one sector. One carrier frequency is used for one radio carrier. A smallest service unit, namely, the cell, that provides access for the terminal device includes the sector and the carrier.

For example, in this application, managing may include/be replaced with corresponding.

Optionally, that the first network index is associated with the first cell may alternatively be replaced with that the first network index and/or the first network identifier are/is associated with the first cell. For example, the first network index is associated with the first cell, the first network identifier is associated with the first cell, or both the first network index and the first network identifier are associated with the first cell. There are a plurality of possible description manners. This is not specifically limited in this embodiment of this application.

Optionally, the first network index may include any one of a first PLMN index, a first NPN index, or a first SNPN index. For example, if the first network index corresponds to a public network, the first network index may include/be the first PLMN index; if a first network corresponds to an NPN or a private network, the first network index may include/be any one of the first NPN index, the first SNPN index, or the first PLMN index; if the first network corresponds to a PNI-NPN, the first network index may include/be any one of the first PLMN index or the first NPN index; or if the first network corresponds to an SNPN, the first network index may include/be any one of the first SNPN index or the first NPN index.

Optionally, the network device may send, to the terminal device via dedicated signaling, the information about the first network identifier corresponding to the first network index.

In this way, even if the terminal device does not obtain a SIB1 that is of the first cell and that is broadcast by the network device (for example, the SIB1 of the first cell includes information about a network list of the first cell), the terminal device can receive the information about the first network identifier corresponding to the first network index sent by the network device via the dedicated signaling, so that support is provided for obtaining, through parsing, a network index included in a first MCCH message of the first cell.

For example, the dedicated signaling may include/be an RRC message, for example, an RRC reconfiguration message.

Optionally, if a first condition is satisfied, the network device may send, to the terminal device via the dedicated signaling, the information about the first network identifier corresponding to the first network index.

For example, the first condition may include any one or more of a condition 1, a condition 2, or a condition 3.

The condition 1 may include: An MCCH message (for example, the first MCCH message) of the first cell includes information about a broadcast service (for example, a first broadcast service) indicated by a network index.

For example, the first MCCH message of the first cell includes the information about the first broadcast service indicated by the first network index.

The condition 2 may include: The terminal device is interested in a broadcast service (for example, a first broadcast service) included in an MCCH message (for example, the first MCCH message) of the first cell.

For example, that the terminal device is interested in the broadcast service included in the MCCH message of the first cell may include that the network device determines that the terminal device is interested in the broadcast service included in the MCCH message of the first cell.

For example, the terminal device is interested in a broadcast service that is included in the MCCH message of the first cell and that is indicated by a network index.

For example, the terminal device is interested in the first broadcast service that is included in the first MCCH message and that is indicated by the first network index.

The condition 3 may include: The network device sends a SIB20 (for example, a first SIB20) of the first cell to the terminal device via dedicated signaling.

For example, the network device has sent the SIB20 of the first cell to the terminal device via the dedicated signaling.

For example, although the network device has not sent the first SIB20 of the first cell to the terminal device via the dedicated signaling, the network device will/may send the first SIB20 of the first cell to the terminal device via the dedicated signaling in the future.

For example, while the network device sends the SIB20 of the first cell to the terminal device via the dedicated signaling.

Optionally, the method may further include step 501A: The terminal device obtains the first SIB20.

Optionally, the network device may send the first SIB20 to the terminal device via the dedicated signaling. Accordingly, the terminal device receives the first SIB20.

Optionally, the first SIB20 is associated with the first cell.

Optionally, the first SIB20 or the SIB20 may include MCCH-related configuration information and/or MTCH-related configuration information. For example, the first SIB20 may include any one or more of the following: information about a reference of a broadcast CFR, information about the broadcast CFR, information about an MCCH modification periodicity, information about an MCCH repetition periodicity, or information about an MCCH transmission window. For example, the first SIB20 or the SIB20 may alternatively be replaced with another name. This is not limited in this application.

For example, the MCCH message of the first cell includes the information about the first broadcast service indicated by the first network index, the network device determines that the terminal device is interested in the broadcast service that is included in the MCCH message of the first cell and that is indicated by the network index, and the network device may send, to the terminal device via the dedicated signaling, the information about the first network identifier corresponding to the first network index.

For example, the network device has sent the SIB20 of the first cell to the terminal device via the dedicated signaling; although the network device has not sent the SIB20 of the first cell to the terminal device via the dedicated signaling, the network device will/may send the SIB20 of the first cell to the terminal device via the dedicated signaling in the future; or the network device may send, to the terminal device via the dedicated signaling while the network device sends the SIB20 of the first cell to the terminal device via the dedicated signaling, the information about the first network identifier corresponding to the first network index.

In this way, the network device sends, to the terminal device only when determining that the terminal device may use the first network index associated with the first cell, the information about the first network identifier corresponding to the first network index, and may not send, to the terminal device in a scenario in which the first network index associated with the first cell is not used, the information about the first network identifier corresponding to the first network index. This can avoid an unnecessary communication procedure, and help reduce communication overheads and save an air interface resource.

Optionally, the network device may send the first SIB20 to the terminal device via the dedicated signaling, or the network device may send, to the terminal device via the dedicated signaling, the information about the first network identifier corresponding to the first network index. An order of sending the two pieces of information "the first SIB20" and "the information about the first network identifier corresponding to the first network index" is not limited. For example, the two pieces of information may be sent simultaneously, may not be sent simultaneously, may be included in a same message for sending, or may be included in different messages for sending.

Sending information about a PLMN list is used as an example, and a specific form may be the following code:

```
SCellConfig::=              SEQUENCE {
    sCellIndex                 SCellIndex,
    sCellConfigCommon          ServingCellConfigCommon      OPTIONAL,--Cond SCellAdd
    sCellConfigDedicated       ServingCellConfig            OPTIONAL,--Cond SCellAddMod
    ...,
    [[
    smtc                       SSB-MTC                      OPTIONAL,--Need S
    ]],
    [[
    sCellState-r16             ENUMERATED  {activated}      OPTIONAL,--Cond SCellAddSync
    secondaryDRX-GroupConfig-r16  ENUMERATED{true}          OPTIONAL,--Cond DRX-Config2
    ]],
    [[
    preConfGapStatus-r17       BIT STRING (SIZE (maxNrofGapID-r17))    OPTIONAL,--Cond PreConfigMG
    goodServingCellEvaluationBFD-r17    GoodServingCellEvaluation-r17   OPTIONAL,--Need R
    sCellSIB20-r17             SetupRelease          {SCellSIB20-r17}   OPTIONAL,--Need M
    ]]
    [[
    plmn-IdentityInfoList      PLMN-IdentityInfoList,       OPTIONAL,--Need N
    ]]
```

Optionally, this embodiment of this application further includes step 500: The terminal device obtains a first SIB1 of the first cell, or the terminal device obtains information about a first network list of the first cell.

For example, step 500 may be performed before step 501.

Optionally, that the terminal device obtains the information about the first network identifier corresponding to the first network index may include: The terminal device determines, based on the first SIB1 of the first cell or the information about the first network list of the first cell, the information about the first network identifier corresponding to the first network index.

For example, the terminal device determines, based on an order of network identifiers included in the first network list, the information about the first network identifier corresponding to the first network index.

For example, the terminal device parses the first SIB1 of the first cell, to obtain the first network list of the first cell.

The first network list of the first cell includes network identifiers that are of all networks in the first cell and that are presented in a form of a list. The terminal device determines, based on the network identifiers of all the networks in the first cell, a location of each network identifier in the first network list, and an association relationship between a network index indicated by the following formula (1) or formula (2) and a network identifier, the information about the first network identifier corresponding to the first network index.

For example, this embodiment of this application provides the following two manners in which the terminal device obtains the information about the first network identifier corresponding to the first network index.

It should be noted that step 500 may be used as an independent embodiment, and does not depend on another step. Step 501 may alternatively be used as an independent embodiment, and does not depend on another step. Step 500 and step 501 may alternatively be used as independent embodiments, and do not depend on another step.

Manner 1: The network device sends information about the first SIB1 of the first cell to the terminal device.

For example, the network device may send the information about the first SIB1 of the first cell to the terminal device via dedicated signaling. The first cell is the SCell or the PSCell of the terminal device. Therefore, although the network device broadcasts the first SIB1 of the first cell, the terminal device does not receive the first SIB1 that is of the first cell and that is broadcast by the network device. Sending the first SIB1 of the first cell to the terminal device via the dedicated signaling enables the terminal device to obtain the first SIB1 of the first cell.

In the manner 1, the first SIB1 of the first cell includes the information about the network list of the first cell, and the information about the network list of the first cell may include information about the PLMN list of the first cell and/or information about an NPN list of the first cell. For example, if the first cell includes/corresponds to only the public network, the first SIB1 of the first cell includes the information about the PLMN list of the first cell; if the first cell includes/corresponds to only the NPN, the first SIB1 of the first cell includes the information about the NPN list of the first cell, or the first SIB1 of the first cell includes both the information about the PLMN list of the first cell and the information about the NPN list of the first cell; or if the first cell includes/corresponds to both the public network and the NPN, the first SIB1 of the first cell includes both the information about the PLMN list of the first cell and the information about the NPN list of the first cell. In this way, because the first SIB1 of the first cell includes the information about the network list of the first cell, the network device sends the first SIB1 of the first cell to the terminal device, so that the terminal device can obtain a network identifier (for example, the first network identifier) corresponding to a network index (for example, the first network index) associated with the first cell.

For example, the information about the PLMN list of the first cell may include: a PLMN ID of the first cell and a sorting order of PLMN IDs.

For example, the information about the NPN list of the first cell may include: an NPN ID of the first cell and a sorting order of NPN IDs.

Manner 2: The network device sends the information about the first network list of the first cell to the terminal device.

For example, the network device may send, to the terminal device via dedicated signaling, the information about the first network list of the first cell corresponding to the terminal device. For example, the information about the first network list of the first cell may be information associated with the network list of the first cell. In this way, even if the terminal device does not obtain the first SIB1 of the first cell, the terminal device can receive, via the dedicated signaling, the information that is associated with the network list of the first cell and that is sent by the network device, thereby obtaining a network identifier (for example, the first network identifier) corresponding to a network index (for example, the first network index) associated with the first cell.

For example, the information about the first network list of the first cell includes information about a first PLMN list of the first cell and/or information about a first NPN list of the first cell. For example, the information about the first network list of the first cell may include only the information about the first PLMN list of the first cell, may include only the information about the first NPN list of the first cell, or may include both the information about the first PLMN list of the first cell and the information about the first NPN list of the first cell.

Optionally, the information about the list (for example, any one or more of the information about the first network list of the first cell, the information about the first PLMN list of the first cell, or the information about the first NPN list of the first cell) may refer to any one or more of the following (or may include any one or more of the following): the list, a network identifier of a network included in the list, a quantity of network identifiers included in the list, an association relationship between a network index of the network included in the list and a network identifier, a network identifier, a quantity of network identifiers corresponding to the first cell, or an association relationship between a network index of a network corresponding to the first cell and a network identifier. For example, for the information about the first network list of the first cell, this embodiment of this application may include any one or more of the following cases:

Case A: The information about the first network list of the first cell includes information about all or a part of the PLMN list of the first cell and/or information about all or a part of the NPN list of the first cell.

For example, as shown in FIG. 5A, the information about the PLMN list of the first cell sequentially includes a PLMN 2, a PLMN 6, a PLMN 5, a PLMN 7, a PLMN 8, a PLMN 4, a PLMN 3, and a PLMN 1 from front to back; and the information about the first network list of the first cell may include the entire PLMN list of the first cell as shown in an example 1; may include only a part of the PLMNs in the PLMN list as shown in an example 2, for example, include the first four PLMNs as shown in the example 2; may include at least two PLMNs in another example; or may include one PLMN in another example. This is not limited.

For example, as shown in FIG. 5B, NPNs in the NPN list of the first cell are sorted after the PLMN list, and the NPNs sequentially include an SNPN 1, a PNI-NPN 3, and a PNI-NPN 1 from front to back; and the information about the first network list of the first cell may include the entire NPN list of the first cell as shown in an example 1; may include only a part of the NPNs in the NPN list as shown in an example 2, for example, include a 1st NPN as shown in the example 2; or may include at least two NPNs in another example. This is not limited. Herein, it should be noted that, that the information about the first network list of the first cell includes all PLMNs is merely an example, or may include a part of the PLMNs or no PLMN in another example.

For example, in this application, from front to back may include/be replaced with from a 1st one to a last one, or starting from the 1st one.

In the case A, all or a part of the network list of the first cell is sent to the terminal device, so that the terminal device can obtain a network identifier of all or a part of the networks in the first cell and a corresponding network index.

Case B: The information about the first network list of the first cell includes information about all or a part of the network identifiers corresponding to the first cell. For example, the information about the first network list of the first cell may include all or a part of PLMN IDs in the first cell, include all or a part of NPN IDs corresponding to the first cell, or include all or the part of the PLMN IDs in the first cell and all or the part of the NPN IDs corresponding to the first cell. In this way, the terminal device can obtain a network identifier corresponding to a network index of all or a part of the networks in the first cell, so that support is provided for obtaining, through parsing, an identifier of a network corresponding to the network index in the first cell.

In a possible example of the case B, the information about the first network list of the first cell includes the information about the part of the network identifiers corresponding to the first cell. The part of the networks may be a network identifier corresponding to a largest network index included in the first MCCH message of the first cell and an identifier of a network whose network index is less than the largest network index. For example, the first MCCH message of the first cell includes information about one or more broadcast services, and information about one broadcast service corresponds to one network index or one network identifier. The largest network index included in the first MCCH message of the first cell may be a largest network index in all network indexes corresponding to information about all broadcast services included in the first MCCH message, and the network index indicates a backmost location, where the terminal device uses a network identifier at the location in the network list of the first cell. Alternatively, the part of the networks may be network identifiers of networks corresponding to all network indexes included in the first MCCH message of the first cell. In this way, the network device and the terminal device are configured to exchange only network identifiers corresponding to network indexes that may be used by the terminal device, so that it can be ensured that these network identifiers fully satisfy a requirement for parsing the MCCH message of the first cell by the terminal device, and useless information can be sent as little as possible, which helps reduce air interface overheads.

For example, as shown in FIG. 5C, the PLMN list of the first cell sequentially includes a PLMN 2, a PLMN 6, a PLMN 5, a PLMN 7, a PLMN 8, a PLMN 4, a PLMN 3, and a PLMN 1 from front to back, and network indexes included in the first MCCH message of the first cell are 3, 4, 6, and 7; and the information about the first network list of the first cell may include network identifiers of all networks whose network indexes are less than or equal to 7 in the PLMN list of the first cell as shown in an example 1, for example, network identifiers corresponding to networks whose network indexes are 1 to 7, namely, the PLMN 2, the PLMN 6, the PLMN 5, the PLMN 7, the PLMN 8, the PLMN 4, and the PLMN 3; or may include network identifiers corresponding to network indexes included in the first MCCH message of the first cell as shown in an example 2, for example, network identifiers corresponding to networks whose network indexes are 3, 4, 6, and 7, namely, the PLMN 5, the PLMN 7, the PLMN 4, and the PLMN 3.

For example, as shown in FIG. 5D, the NPN list of the first cell sequentially includes, from front to back, an SNPN 1, a PNI-NPN 1, a PNI-NPN 2, and an SNPN 2 that are sorted after all PLMNs, and network indexes included in the first MCCH message of the first cell are 5, 6, and 7; and the information about the first network list of the first cell may include network identifiers of all networks whose network indexes are less than or equal to 7 in the PLMN list of the first cell as shown in an example 1, for example, network identifiers corresponding to networks whose network indexes are 1 to 7, namely, a PLMN 2, a PLMN 6, a PLMN 5, a PLMN 7, the SNPN 1, the PNI-NPN 1, and the PNI-NPN 2; or may include network identifiers corresponding to the network indexes included in the first MCCH message of the first cell as shown in an example 2, for example, network identifiers corresponding to networks whose network indexes are 5, 6, and 7, namely, the SNPN 1, the PNI-NPN 1, the PNI-NPN 2, and the SNPN 2.

Further, for example, all network identifiers included in the information about the first network list may be carried in the dedicated signaling of the network device in an order pre-negotiated with the terminal device. For example, all the network identifiers are carried in the dedicated signaling in descending order of network indexes, in ascending order of network indexes, or in another specified order. After the terminal device receives the dedicated signaling, because the terminal device learns of the largest network index included in the first MCCH message, the terminal device may learn of, based on a network identifier that is at each location and obtained by parsing the dedicated signaling and the pre-negotiated order, a network index corresponding to each network identifier.

Certainly, this is merely an optional implementation. In another optional implementation, in addition to the network identifier, the information about the first network list of the first cell may further include a network index corresponding to the network identifier. In this implementation, the terminal device can also learn of a correspondence between the network index and the network identifier, but more byte space may be occupied.

Case C: The information about the first network list of the first cell includes an association relationship between a part or all of the network identifiers corresponding to the first cell and a network index. For example, the association relationship between the network identifier and the network index may be any association relationship that can be for obtaining the corresponding network identifier based on the network index corresponding to the first cell. For example, the association relationship may be an expression constructed based on the network index corresponding to the first cell and the corresponding network identifier. The corresponding network identifier may be obtained by substituting the network index corresponding to the first cell into the expression. For example, the association relationship may alternatively be a conversion relationship between the network index corresponding to the first cell and a network index that is of the network index and that is in a PCell. The network index in the PCell may be obtained by substituting the network index corresponding to the first cell into the conversion relationship, and then the corresponding network identifier may be obtained by querying a network list of the PCell based on the network index in the PCell. It should be understood that there are further a plurality of possible association relationships, which are not enumerated herein.

In a possible example of the case C, the information about the first network list of the first cell includes the association relationship between the part of the network identifiers corresponding to the first cell and the network index, and the part of the network identifiers are a network identifier corresponding to the network index included in the first MCCH message of the first cell. In this case, the information about the first network list of the first cell includes an association relationship between a first network index set and a corresponding network identifier, where the first network index set is a set of network indexes included in the first MCCH message of the first cell, and the network indexes included in the set may be consecutive or non-consecutive. For example, if the network indexes included in the first MCCH message of the first cell are 3, 4, 6, and 7, the information about the first network list of the first cell may include an association relationship between network identifiers of networks whose network indexes are respectively 3, 4, 6, and 7 in the network list of the first cell and the corresponding network indexes.

Case D: The information about the first network list of the first cell includes a quantity of PLMNs included in the PLMN list of the first cell. Because a start location of the NPN list of the first cell is determined by the quantity of all PLMNs included in the first cell, sending the quantity of all PLMNs included in the first cell to the terminal device also helps the terminal device obtain, through parsing, a network identifier corresponding to a network index included in the MCCH message of the first cell.

Optionally, the first network index may be determined based on the information about the first network list.

For example, when the information about the first network list includes the PLMN list, the first network index includes a PLMN index, where the PLMN index is defined as the following formula (1), and indicates a PLMN included in an $n^{th}$ entry of the PLMN list and an $i^{th}$ entry of PLMN identification information corresponding to the PLMN:

$$\text{PLMN index} = b1 + b2 + \ldots + b(n-1) + I \quad (1)$$

$b(j)$ is a quantity of PLMN identities included in each piece of PLMN identification information. Optionally, j is a positive integer greater than or equal to 1 and less than n, and i is any positive integer not greater than n.

For another example, when the information about the first network list includes the NPN list, the first network index includes an NPN index, where the NPN index is defined as the following formula (2), and indicates an $i^{th}$ entry of an $m^{th}$ NPN identity list included in an $n^{th}$ NPN identification information list of the NPN list:

$$\text{NPN index} = B + c1 + c2 + \ldots + c(n-1) + d1 + d2 + \ldots + d(m-1) + e(i) \quad (2)$$

For example, B is an index corresponding to a last PLMN in the PLMN list, and a value of B is 0 in a list that includes only an NPN. For example, $c(j)$ is a quantity of NPN indexes used in a $j^{th}$ NPN identification information list. For example, $d(k)$ is a quantity of NPN indexes used in a $k^{th}$ NPN identity list in the $n^{th}$ NPN identification information list. For example, $e(i)$ has different values for different i. For example, if an $n^{th}$ entry of an NPN list entry corresponds to an SNPN(s), a value of $e(i)$ is i. If an $n^{th}$ entry of an NPN list entry corresponds to a PNI-NPN(s), a value of $e(i)$ is 1.

Optionally, when sending the information about the first network list of the first cell, the network device may separately write a field to carry the information about the first network list, or may reuse an existing field in an existing protocol. For example, for the information about the PLMN list, an existing PLMN-IdentityInfoList field (or IE) in the existing protocol may be directly reused. However, considering that two mandatory fields in the field are useless for the information about the first PLMN list of the first cell, a new field may alternatively be written by referencing the PLMN-IdentityInfoList field, and include only the information about the first PLMN list of the first cell. Likewise, for the information about the NPN list, an existing NPN-IdentityInfoList field in the existing protocol may be directly reused; or a new field may be written by referencing an NPN-IdentityInfoList IE field, and include only the information about the first NPN list of the first cell.

Optionally, step 502: The terminal device obtains the first MCCH message.

For example, the network device broadcasts/sends the first MCCH message. Accordingly, the terminal device receives the first MCCH message.

For example, the first MCCH message is associated with the first cell.

For example, the first MCCH message includes the information about the first broadcast service.

For example, the information about the first broadcast service includes information about the first network index.

Optionally, the first MCCH message or the MCCH message may include the MTCH-related configuration information, or control information of the broadcast service. For example, the first MCCH message may include any one or more of the following: information about an identifier of the broadcast service, transmission configuration information (for example, any one or more of the following: a DRX configuration, a beam configuration, a PDSCH configuration, or an SSB configuration) of the broadcast service, or neighboring cell information. For example, the first MCCH message or the MCCH message may alternatively be replaced with another name. This is not limited in this application.

For example, the network device may broadcast the first MCCH message on the broadcast CFR of the first cell. In addition, if the network device determines that a broadcast service that the terminal device is interested in receiving or is receiving is on the first cell, the network device may further send the first SIB20 of the first cell to the terminal device via the dedicated signaling, where the first SIB20 includes information indicating the broadcast CFR of the first cell, so that the terminal device can obtain the first MCCH message of the first cell from the broadcast CFR of the first cell based on the first SIB20 of the first cell.

For example, when determining that the first MCCH message of the first cell includes the network index, the network device may send, to the terminal device, information about the network identifier corresponding to the network index associated with the first cell. It may be considered that the network device sends the information only when determining that the terminal device may use the network identifier corresponding to the network index associated with the first cell, to reduce unnecessary communication overheads.

Optionally, step 503: The terminal device determines information about an identifier of the first broadcast service based on the information about the first network identifier corresponding to the first network index.

Optionally, the information about the identifier of the first broadcast service may include any one of the following: a TMGI corresponding to the first broadcast service; the TMGI corresponding to the first broadcast service and a NID corresponding to the first broadcast service; a PLMN ID corresponding to the first broadcast service; or an SNPN ID corresponding to the first broadcast service.

For example, if the first broadcast service corresponds to the public network or the PNI-NPN, the information about the identifier of the first broadcast service may include the TMGI corresponding to the first broadcast service, or include the PLMN ID corresponding to the first broadcast service; or if the first broadcast service corresponds to the SNPN, the information about the identifier of the first broadcast service may include the TMGI and the NID that correspond to the first broadcast service, or include the SNPN ID corresponding to the first broadcast service.

For example, the terminal device may parse, based on the information about the first network identifier corresponding to the first network index, the information about the first network index corresponding to the first broadcast service included in the first MCCH message, to obtain the first network identifier; and determine the information about the identifier of the first broadcast service based on the first network identifier.

Optionally, this application may further include: If the network device determines that the first cell satisfies at least one of the following condition 1, condition 2, or condition 3, the network device may not send, to the terminal device, the information about the first network identifier corresponding to the first network index.

Condition 1: The information about the first network list of the first cell is the same as information about a network list of a second cell.

For example, the second cell may be a PCell, a PSCell, a PCell of the terminal device, or a PSCell of the terminal device.

Herein, it should be noted that the second cell is the PCell or the PSCell for the terminal device, but may be a PCell, an SCell, or a PSCell for another terminal device. This is not limited.

Optionally, the second cell is a cell managed by the network device.

Optionally, the first cell and the second cell are cells managed by the network device.

For example, the information about the first network list of the first cell may include the information about the PLMN list of the first cell and/or the information about the NPN list of the first cell. For example, that the information about the first network list of the first cell is the same as the information about the network list of the second cell may refer to any one of the following cases: If the information about the first network list of the first cell includes only the information about the PLMN list of the first cell, the information about the PLMN list of the first cell is the same as information about a PLMN list of the second cell; if the information about the first network list of the first cell includes only the information about the NPN list of the first cell, the information about the NPN list of the first cell is the same as information about an NPN list of the second cell; if the information about the first network list of the first cell includes both the information about the PLMN list of the first cell and the information about the NPN list of the first cell, the information about the PLMN list of the first cell is the same as the information about the PLMN list of the second cell, and the information about the NPN list of the first cell is also the same as the information about the NPN list of the second cell; or if the information about the first network list of the first cell includes both the information about the PLMN list of the first cell and the information about the NPN list of the first cell, the quantity of PLMNs included in the information about the PLMN list of the first cell is the same as a quantity of PLMNs included in the information about the PLMN list of the second cell, and the information about the NPN list of the first cell is also the same as the information about the NPN list of the second cell.

Condition 2: An order of the information about the first network list of the first cell is the same as an order of information about a network list of a second cell.

For example, an order of information about a network list may be an order, in the network list, of network identifiers included in the information about the network list. For example, that the order of the information about the first network list of the first cell is the same as the order of the information about the network list of the second cell may mean that all network identifiers in the network list of the first cell are included in the network list of the second cell, and an order, in the network list of the first cell, of all the network identifiers in the network list of the first cell is the same as an order, in the network list of the second cell, of all the network identifiers in the network list of the first cell. For example, as shown in FIG. 5E, the network list of the second cell includes eight network identifiers, which are sequentially a PLMN 2, a PLMN 6, a PLMN 5, a PLMN 7, a PLMN 8, a PLMN 4, a PLMN 3, and a PLMN 1 from front to back, and the network list of the first cell includes four network identifiers, which are sequentially the PLMN 2, the PLMN 6, the PLMN 5, and the PLMN 7 from front to back. It can be learned that names and an order of the four network identifiers included in the network list of the first cell are consistent with those of the first four network identifiers in the network list of the second cell. In this case, it may be considered that the order of the information about the first network list of the first cell is the same as the order of the information about the network list of the second cell, and a network index of a network included in the network list of the first cell may be obtained through parsing by referencing the network list of the second cell.

Condition 3: The network identifier corresponding to the network index included in the first MCCH message of the first cell is the same as a network identifier included in information about a network list of a second cell.

For example, as shown in FIG. 5F, the network list of the first cell includes eight network identifiers, which are sequentially a PLMN 2, a PLMN 6, a PLMN 5, a PLMN 7, a PLMN 8, a PLMN 4, a PLMN 3, and a PLMN 1 from front to back, the network list of the second cell includes seven network identifiers, which are sequentially the PLMN 1, the PLMN 2, the PLMN 5, the PLMN 7, the PLMN 6, the PLMN 4, and the PLMN 3 from front to back, and the first MCCH message of the first cell includes network indexes 3, 4, 6, and 7. It can be learned that, although the network list of the first cell is different from the network list of the second cell, network identifiers corresponding to the four network indexes included in the first MCCH message of the first cell in the network list of the first cell are the same as network identifiers corresponding to the four network indexes included in the first MCCH message of the first cell in the network list of the second cell. In this case, the network indexes included in the first MCCH message of the first cell may alternatively be obtained through parsing by referencing the network list of the second cell.

Optionally, the foregoing step 501 may be replaced with that the terminal device may obtain information about a second network identifier corresponding to the first network index.

For example, the first network index and/or the second network identifier are/is associated with the second cell. For example, the first network index is located in the information about the network list of the second cell, the second network identifier is located in the information about the network list of the second cell, or a correspondence between the first network index and the second network identifier is located in the information about the network list of the second cell.

For example, that the terminal device obtains the information about the second network identifier corresponding to the first network index may include: The terminal device obtains a SIB1 of the second cell. For example, the SIB1 of the second cell includes the information about the second network identifier corresponding to the first network index.

For example, for "the information about the second network identifier corresponding to the first network index", refer to "the information about the first network identifier corresponding to the first network index". Details are not described herein again.

For example, the network device broadcasts the SIB1 of the second cell.

For example, the terminal device determines, based on the order of the network identifiers included in the network list of the second cell, the information about the second network identifier corresponding to the first network index.

For example, the terminal device receives the SIB1 that is of the second cell and that is broadcast by the network device. For example, the SIB1 of the second cell includes the network list of the second cell.

For example, the terminal device parses the SIB1 of the second cell, to obtain the network list of the second cell, where the network list includes network identifiers that are of all networks in the second cell and that are presented in a form of a table. The terminal device may obtain, through parsing based on the network identifiers of all the networks in the second cell and the association relationship between the network index indicated by the foregoing formula (1) or formula (2) and the network identifier, the information about the second network identifier corresponding to the first network index.

Optionally, if the terminal device does not obtain the information about the first network identifier corresponding to the first network index, the foregoing step 503 may be replaced with that the terminal device may determine the information about the identifier of the first broadcast service based on the information about the second network identifier corresponding to the first network index.

As described above, that the terminal device does not obtain the information about the first network identifier corresponding to the first network index may include any one of the following cases: The terminal device does not actively obtain the information about the first network identifier corresponding to the first network index; receiving, performed by the terminal device, of the information about the first network identifier corresponding to the first network index sent by the network device (for example, sent by the network device via the dedicated signaling) fails; the terminal device obtains the information about the first network identifier corresponding to the first network index, but obtaining fails; the information about the first network identifier corresponding to the first network index obtained by the terminal device is invalid; the terminal device receives the first SIB20 that is of the first cell and that is sent by the network device (for example, sent by the network device via the dedicated signaling), but does not receive the information about the first network identifier corresponding to the first network index sent by the network device (for example, sent by the network device via the dedicated signaling); or the like.

For example, for ease of understanding, an example in which receiving, performed by the terminal device, of the information about the first network identifier corresponding to the first network index sent by the network device fails is used. If the terminal device obtains the first SIB20 that is of the first cell and that is sent by the network device via the dedicated signaling, but does not obtain the information about the first network list of the first cell sent by the network device via the dedicated signaling, it indicates that the network list of the first cell is the same as the network list of the second cell; that all the network identifiers included in the network list of the first cell and the order of all the network identifiers are included in the network list of the second cell, and the sorting order of all the network identifiers included in the network list of the first cell is the same as a sorting order of a part or all of the network identifiers included in the network list of the second cell; or that the first network identifier indicated by the first network index included in the first MCCH message of the first cell is the same as the second network identifier indicated by the first network index of the second cell. In this case, the terminal device may directly obtain, through parsing by referencing the network list of the second cell/the correspondence between the network index and the network identifier, the first network index included in the first MCCH message of the first cell. For example, the PLMN index included in the first MCCH message of the first cell is obtained through parsing by referencing the PLMN list of the second cell, or the NPN index included in the MCCH message of the first cell is obtained through parsing by referencing the NPN list (or the NPN list and the PLMN list) of the second cell.

In this solution, if the first network index included in the first MCCH message of the first cell can be obtained through parsing based on the network list of the second cell/information about the correspondence between the network index and the network identifier, the network device may not send the information about the first network identifier corresponding to the first network index of the first cell, and the terminal device may directly perform parsing by referencing the information about the network list of the second cell/the correspondence between the network index and the network identifier. In this way, it can be ensured that the terminal device correctly receives the broadcast service on the first cell, and air interface overheads can be reduced.

In the foregoing implementation solution 1, the network device sends, to the terminal device, information about a network identifier corresponding to a network index associated with an SCell or a PSCell. Even if the terminal device does not obtain a SIB1 of the SCell or the PSCell, and the terminal device does not learn of a network list of the SCell or the PSCell, the terminal device can obtain, through parsing based on the obtained information about the network identifier corresponding to the network index associated with the SCell or the PSCell, an identifier of a broadcast service that is in an MCCH message of the SCell or the PSCell and that is indicated by a network index, to perform broadcast service matching. In this way, the terminal device can correctly receive the broadcast service on the SCell or the PSCell, the foregoing problem 1 in an existing broadcast procedure is effectively resolved, and this helps improve reliability, communication quality, and user experience that are of broadcast communication.

Implementation solution 2

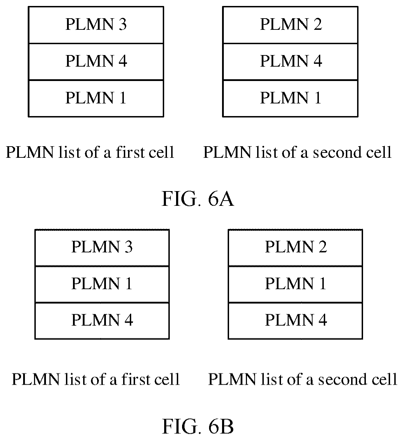

FIG. 6 shows an example of another communication method according to an embodiment of this application. The method includes the following steps.

Step 601: A network device generates information about a network list of a first cell and/or information about a network list of a second cell.

For example, the information about the network list of the first cell includes information about a network identifier of a first-type network.

For example, the information about the network list of the first cell includes information about a network identifier of a first-type network and information about a network identifier of a second-type network.

For example, the information about the network list of the second cell includes the information about the network identifier of the first-type network.

For example, the information about the network list of the second cell includes the information about the network identifier of the first-type network and information about a network identifier of a third-type network.

For example, the first-type network includes a network corresponding to both the first cell and the second cell. For example, the first-type network may include one or more networks.

For example, the second-type network includes a network corresponding to the first cell and not corresponding to the second cell. For example, the second-type network may include one or more networks.

For example, the third-type network includes a network corresponding to the second cell and not corresponding to the first cell. For example, the third-type network may include one or more networks.

Optionally, the first cell is a cell managed by the network device.

Optionally, the second cell is a cell managed by the network device.

Optionally, the first cell and/or the second cell satisfy/satisfies a third condition.

For example, the third condition includes any one or more of the following: There is a broadcast service, there is a broadcast service associated with an SNPN, there is broadcast service transmission, there is a broadcast service for which information about the broadcast service is indicated by a network index, there is MCCH message transmission, or there is a broadcast service for which information about the broadcast service is indicated by a network index in an MCCH message.

For example, the information about the network identifier of the first-type network is before the information about the network identifier of the second-type network.

For example, if the information about the network list of the first cell includes the information about the network identifier of the first-type network and the information about the network identifier of the second-type network, the information about the network identifier of the first-type network is before the information about the network identifier of the second-type network.

For example, if the information about the network list of the second cell includes the information about the network identifier of the first-type network and the information about the network identifier of the third-type network, the information about the network identifier of the first-type network is before the information about the network identifier of the third-type network.

Optionally, a ranking of the first-type network in the network list of the first cell is consistent with a ranking of the first-type network in the network list of the second cell; a network index of any network in the first-type network in the network list of the first cell is consistent with a network index of the any network in the first-type network in the network list of the second cell; or a network index corresponding to the any network in the first-type network in the first cell is consistent with a network index corresponding to the any network in the first-type network in the second cell.

Optionally, for cells (for example, a part or all) managed by the network device, the network device may generate information about network lists of the cells in the following manner: The network device determines, based on networks of the cells managed by the network device, an intersection network (namely, the first-type network) of the cells (for example, all the cells) managed by the network device, places a network identifier of the intersection network in the front of the network lists of the cells, and places a network identifier of a non-intersection network (for example, the second-type network or the third-type network) in the back of the network lists of the cells, obtain the network lists of the cells.

For example, being managed by the network device may include/be replaced with being managed by a network and satisfying the third condition.

For example, the cells managed by the network device may include/be replaced with cells that are managed by the network and that satisfy the third condition.

Optionally, for the cells (for example, the part or all) that are managed by the network and that satisfy the third condition, the network device may generate the information about the network lists of the cells in the following manner: The network device determines, based on the networks of the cells that are managed by the network device and that satisfy the third condition, the intersection network (namely, the first-type network) of the cells (for example, all the cells) that are managed by the network device and that satisfy the third condition, places the network identifier of the intersection network in the front of the network lists of the cells, and places the network identifier of the non-intersection network (for example, the second-type network or the third-type network) in the back of the network lists of the cells, obtain the network lists of the cells.

Optionally, a ranking of the intersection network remains consistent in the network lists of the cells (for example, the part or all) managed by the network device; a network index of any network in the intersection network remains consistent in the network lists of the cells (for example, the part or all) managed by the network device; or a network index corresponding to the any network in the intersection network remains consistent in the cells (for example, the part or all)

EP 4 672 789 A1

managed by the network device.

Optionally, the ranking of the intersection network remains consistent in the network lists of the cells (for example, the part or all) that are managed by the network and that satisfy the third condition; the network index of the any network in the intersection network remains consistent in the network lists of the cells (for example, the part or all) that are managed by the network and that satisfy the third condition; or the network index corresponding to the any network in the intersection network remains consistent in the cells (for example, the part or all) that are managed by the network and that satisfy the third condition.

For example, assuming that the cells managed by the network device include the first cell and the second cell in total, intersection networks of the first cell and the second cell are a PLMN 1 and a PLMN 4, a network that is of the first cell and that is different from the second cell is a PLMN 3, and a network that is of the second cell and that is different from the first cell is a PLMN 2, the network list of the first cell and the network list of the second cell may be any one of the following:

As shown in FIG. 6A, the network list of the first cell sequentially includes an ID of the PLMN 1, an ID of the PLMN 4, and an ID of the PLMN 3 from front to back, and the network list of the second cell sequentially includes the ID of the PLMN 1, the ID of the PLMN 4, and an ID of the PLMN 2 from front to back.

As shown in FIG. 6B, the network list of the first cell sequentially includes an ID of the PLMN 4, an ID of the PLMN 1, and an ID of the PLMN 3 from front to back, and the network list of the second cell sequentially includes the ID of the PLMN 4, the ID of the PLMN 1, and an ID of the PLMN 2 from front to back.

For example, it should be noted that, a ranking of the intersection network in the network lists of the cells, or a ranking, in a network list of each cell, of a network that is of the cell and that is different from another cell may be configured randomly, may be configured according to a specific rule (for example, in reverse chronological order of network deployment dates), or may be configured based on an actual requirement. This is not specifically limited.

In the foregoing solution, a ranking of an intersection network of different cells is configured to remain consistent in network lists of the different cells, so that a network list of any cell may be shared to query for a network identifier corresponding to a network index of the intersection network of the cells.

Optionally, information about a network list may include information about a PLMN list or information about an NPN list. For example, if the first cell includes/corresponds to only a public network, the information about the network list of the first cell includes only information about a PLMN list of the first cell; if the first cell includes/corresponds to only an NPN, the information about the network list of the first cell includes only information about an NPN list of the first cell, or the information about the network list of the first cell includes the information about the PLMN list of the first cell and the information about the NPN list of the first cell; or if the first cell includes/corresponds to both the public network and the NPN, the information about the network list of the first cell includes the information about the PLMN list of the first cell and the information about the NPN list of the first cell.

Optionally, for the information about the PLMN list, the network device may place a PLMN ID of an intersection PLMN of all cells managed by the network device in the front of a PLMN list of each cell, place a PLMN ID of a PLMN that is of each cell and that is different from another cell in the back of the PLMN list of each cell, and configure that PLMN indexes corresponding to each PLMN ID in the intersection PLMN are the same in PLMN lists of all the cells.

For example, all the cells managed by the network device may include/be replaced with all cells that are managed by the network and that satisfy the third condition.

Optionally, for the information about the NPN list, if the network device determines that the following condition A or condition B is satisfied, the network device may place an NPN ID of an intersection NPN of all the cells managed by the network device in the front of an NPN list of each cell, place an NPN ID of an NPN that is of each cell and that is different from another cell in the back of the NPN list of each cell, and configure that NPN indexes corresponding to each NPN ID in the intersection NPN are the same in NPN lists of all cells.

Condition A: The PLMN lists of all the cells managed by the network device are the same. It may be considered that PLMN IDs included in PLMN lists of any two cells managed by the network device are the same. Optionally, PLMN indexes of each PLMN ID in the PLMN lists of the any two cells are also the same.

Condition B: Quantities of PLMN IDs in the PLMN lists of all the cells managed by the network device are the same. In the NPN list, an NPN ID is sorted after a PLMN ID (or an NPN index is sorted after a PLMN index). If quantities of PLMNs of two cells are the same, it means that start indexes corresponding to NPN IDs of the two cells are the same. In this way, NPN lists of the two cells may be sorted according to a same criterion.

For example, after determining that the PLMN lists of the cells are the same and/or the quantities of PLMNs are the same, the network device generates the NPN lists of the cells according to the same criterion.

Step 602: The network device broadcasts the information about the network list of the first cell and/or the information about the network list of the second cell.

Optionally, the terminal device does not receive the information about the network list of the first cell.

Optionally, the terminal device receives the information about the network list of the second cell.

Optionally, the first cell may be a PCell, an SCell, a PSCell, an SCell of the terminal device, or a PSCell of the terminal device. Herein, it should be noted that the first cell is the SCell or the PSCell for the terminal device, but may be a PCell, an SCell, or a PSCell for another terminal device. This is not limited.

For example, the second cell may be a PCell, an SCell, a PSCell, a PCell of the terminal device, or a PSCell of the terminal device. Herein, it should be noted that the second cell is the PCell or the PSCell for the terminal device, but may be a PCell, an SCell, or a PSCell for another terminal device. This is not limited.

For example, the information about the network list may include/be replaced with a SIB1. For example, the information about the network list may be included in the SIB1. For example, the network device broadcasts a SIB1 (for example, a first SIB1) of the first cell and/or a SIB1 (for example, a second SIB1) of the second cell. Optionally, the terminal device does not receive the SIB1 of the first cell. Optionally, the terminal device receives the SIB1 of the second cell.

For example, for the cell managed by the network device, the network device may broadcast a SIB1 of the cell, and the SIB1 of the cell includes the information about the network list of the cell, for example, a PLMN list and/or an NPN list of the cell.

For example, although the network device broadcasts the SIB1 of the first cell and the SIB1 of the second cell, the terminal device may receive only the SIB1 of the PCell, and does not receive the SIB1 of the SCell.

Step 603: The network device broadcasts an MCCH message of the second cell and/or an MCCH message of the first cell.

Optionally, the terminal device receives the MCCH message of the first cell.

For example, the MCCH message of the first cell includes information about a first broadcast service, and the information about the first broadcast service includes information about a first network index.

For example, for the cell (for example, the first cell or the second cell) managed by the network device, the network device may broadcast an MCCH message of the cell on a broadcast CFR of the cell. The MCCH message of the cell includes information about one or more broadcast services. Information about each broadcast service includes information about an identifier of the broadcast service. The information about the identifier of the broadcast service may be explicitly indicated by a network identifier, or may be implicitly indicated by a network index.

For example, in the MCCH message of the SCell of the terminal device, if the broadcast service corresponds to a network that is of the SCell and that is different from another cell (for example, the PCell), the information about the identifier of the broadcast service may be explicitly indicated by the network identifier corresponding to the broadcast service, for example, a PLMN ID corresponding to the broadcast service. If the broadcast service corresponds to an intersection network of the SCell and another cell, the information about the identifier of the broadcast service may be explicitly indicated by the network identifier corresponding to the broadcast service, for example, a PLMN ID corresponding to the broadcast service; or may be implicitly indicated by the network index corresponding to the broadcast service, for example, a PLMN index corresponding to the broadcast service, or an SNPN index or an NPN index corresponding to the broadcast service.

For example, for any cell (for example, the first cell or the second cell) managed by the network device, when the network device generates an MCCH message corresponding to the cell, for any broadcast service on the cell, if the network device determines that a network corresponding to the broadcast service does not belong to the intersection network of all the cells managed by the network device, the network device may use, in the MCCH message of the cell, a PLMN ID corresponding to the broadcast service, to indicate information about an identifier of the broadcast service. If the network device determines that a network corresponding to the broadcast service belongs to the intersection network of all the cells managed by the network device, the network device may use, in an MCCH message of the cell, a PLMN ID corresponding to the broadcast service, to indicate information about an identifier of the broadcast service; or may use a PLMN index corresponding to the broadcast service, or an SNPN index or an NPN index corresponding to the broadcast service, to indicate the information about the identifier of the broadcast service.

The following separately describes indication manners in the MCCH message from perspectives of the PLMN list and the NPN list.

(1) PLMN list:

For example, if a broadcast service in an MCCH message of a cell corresponds to an intersection network, and the network belongs to a PLMN, information about an identifier of the broadcast service may be explicitly indicated by a PLMN ID corresponding to the broadcast service, or may be implicitly indicated by a PLMN index corresponding to the PLMN ID corresponding to the broadcast service.

For example, if a broadcast service in an MCCH message of a cell corresponds to a non-intersection network, and the network belongs to a PLMN, information about an identifier of the broadcast service may be explicitly indicated by a PLMN ID corresponding to the broadcast service.

(2) NPN list:

For example, if a broadcast service in an MCCH message of a cell corresponds to an intersection network, and the network belongs to a PNI-NPN, information about an identifier of the broadcast service may be explicitly indicated by a PLMN ID corresponding to the broadcast service, or may be implicitly indicated by an NPN index corresponding to the PLMN ID corresponding to the broadcast service.

For example, if a broadcast service in an MCCH message of a cell corresponds to an intersection network, and the network belongs to an SNPN, information about an identifier of the broadcast service may be implicitly indicated by an SNPN index or an NPN index corresponding to an SNPN ID or an NPN ID corresponding to the broadcast service.

For example, if a broadcast service in an MCCH message of a cell corresponds to a non-intersection network, and the network belongs to a PNI-NPN, information about an identifier of the broadcast service may be explicitly indicated by a PLMN ID corresponding to the broadcast service.

For example, if a broadcast service in an MCCH message of a cell corresponds to a non-intersection network, and the network belongs to an SNPN, information about an identifier of the broadcast service cannot be indicated. In other words, the MCCH message cannot include the information about the identifier of the broadcast service or information about the broadcast service.

For example, in conclusion, based on the foregoing network list generation manner and MCCH indication manner, if the broadcast service corresponds to a public network (or the PLMN) or the PNI-NPN, regardless of whether a network corresponding to the broadcast service belongs to the intersection network, the MCCH message of the cell can indicate the information about the identifier of the broadcast service. However, if the broadcast service corresponds to the SNPN, the MCCH message of the cell can indicate the information about the identifier of the broadcast service only when a network corresponding to the broadcast service belongs to the intersection network. When a network corresponding to the broadcast service belongs to the non-intersection network, the MCCH message of the cell cannot include the information about the identifier of the broadcast service.

Further, an example in which the network device is a base station is used. To resolve the problem that the broadcast service cannot be indicated in the MCCH message in the SNPN, in a possible implementation solution, a core network may further send a broadcast service establishment message to the base station. The base station determines that a broadcast service indicated by the broadcast service establishment message corresponds to the SNPN, and determines whether the network belongs to the intersection network of the cells managed by the base station. If the network does not belong to the intersection network, the base station may reply to a core network device with an establishment failure indication message.

For example, the broadcast service establishment message is associated with the first broadcast service.

Optionally, the following step 604 may further be included. Step 604: The terminal device determines, based on the information about the network list of the second cell, a network identifier of a network corresponding to the first network index included in the MCCH message of the first cell.

For example, if the network device determines that a broadcast service that the terminal device is interested in receiving or is receiving is on an SCell, the network device may send a SIB20 of the SCell to the terminal device via dedicated signaling, where the SIB20 of the SCell includes information indicating a broadcast CFR of the SCell. In this way, the terminal device can obtain the broadcast CFR of the SCell by parsing the SIB20 of the SCell, thereby receiving an MCCH message of the SCell on the broadcast CFR of the SCell, to obtain a network identifier or a network index corresponding to information about an identifier of the broadcast service included in the MCCH message of the SCell.

For example, the terminal device may obtain only the SIB1 of the PCell, and does not obtain the SIB1 of the SCell. The terminal device parses the SIB1 of the PCell, to obtain the network list of the PCell. A former part of the network list is an intersection network that exists in both the PCell and the SCell, a ranking of the intersection network in the network list of the PCell is consistent with a ranking of the intersection network in the network list of the SCell, and a latter part of the network list is a network that exists in the PCell but may not exist in the SCell.

For example, if the MCCH message of the SCell includes the network index, it indicates that the broadcast service corresponds to the intersection network that exists in both the SCell and the PCell. Therefore, the terminal device may parse, by using the network list of the PCell, the network index included in the MCCH message of the SCell, to obtain the network identifier of the corresponding network, and obtain, through parsing based on the network identifier, the information about the identifier of the broadcast service. If the MCCH message of the SCell includes the network identifier, the terminal device may directly obtain the information about the identifier of the broadcast service through parsing based on the network identifier.

Optionally, the information about the identifier of the broadcast service may include any one of the following: a TMGI corresponding to the broadcast service; the TMGI corresponding to the broadcast service and a NID corresponding to the broadcast service; a PLMN ID corresponding to the broadcast service; or an SNPN ID corresponding to the broadcast service.

For example, if the broadcast service corresponds to the public network or the PNI-NPN, the information about the identifier of the broadcast service may include the TMGI corresponding to the broadcast service, or include the PLMN ID corresponding to the broadcast service; or if the broadcast service corresponds to the SNPN, the information about the identifier of the broadcast service may include the TMGI and the NID that correspond to the broadcast service, or include the SNPN ID corresponding to the broadcast service.

For example, the terminal device may parse, based on information about a network identifier corresponding to a network index, information about a network index corresponding to a broadcast service included in a first MCCH message, to obtain a network identifier; and determine information about an identifier of the broadcast service based on the network identifier.

In the foregoing implementation solution 2, the network device sorts an intersection network of cells in the extreme front of network lists of the cells, so that the intersection network of the cells may have a same network index in different cells. In this way, even if the terminal device does not obtain a SIB1 of an SCell, and the terminal device does not learn of a network list of the SCell, the terminal device can determine, by referencing a network list of a PCell, a network identifier indicated by a network index included in an MCCH message of the SCell. In this manner, the foregoing problem 1 in an existing broadcast procedure can be resolved, and the network device may not need to send information about the network list of the SCell to the terminal device. In other words, no new communication step may be added between the network device and the terminal device, and communication overheads may not be increased.

The foregoing implementation solution 1 and implementation solution 2 merely describe two solutions to the foregoing problem 1 as examples. In an actual operation, the foregoing implementation solutions may be further varied, to obtain another solution. For example, a network index included in an MCCH message of an SCell is obtained through parsing.

In a possible variant solution, if it is determined that a network index of an intersection network of an SCell and a PCell in a network list of the SCell is different from a network index of the intersection network of the SCell and the PCell in a network list of the PCell, a network device may send information about the network list of the SCell to a terminal device via dedicated signaling, so that the terminal device can obtain, through parsing by referencing the information about the network list of the SCell, a network index included in an MCCH message of the SCell. If it is determined that a network index of an intersection network of an SCell and a PCell in a network list of the SCell is the same as a network index of the intersection network of the SCell and the PCell in a network list of the PCell, a network device may not send information about the network list of the SCell to a terminal device, and the terminal device obtains, through parsing by referencing information about the network list of the PCell, a network index included in an MCCH message of the SCell. In this way, a correct network identifier can also be obtained through parsing.

In another possible variant solution, if a network device determines that an MCCH message that is of an SCell and that has been broadcast or will be broadcast in the future does not include an SNPN-related broadcast service, or includes an SNPN but a corresponding SNPN belongs to an intersection network of cells managed by the network device, the network device may generate a network list based on the communication manner in the foregoing implementation 2. If a network device determines that an MCCH message that is of an SCell and that has been broadcast or will be broadcast in the future includes an SNPN-related broadcast service, and a corresponding SNPN belongs to a non-intersection network of cells managed by the network device, the network device may send information about a network list of the SCell to a terminal device based on the communication manner in the foregoing implementation 1. In this way, it can be ensured that the terminal device can obtain, through parsing, a network index included in the MCCH message of the SCell, and sending of additional information can be avoided as much as possible, which helps reduce air interface overheads.

In still another possible variant solution, the solution may be used as an independent embodiment. A core network may send a broadcast service establishment message to a base station. The base station determines that a broadcast service indicated by the broadcast service establishment message corresponds to an SNPN, and determines whether the network belongs to an intersection network of cells managed by the base station. If the network does not belong to the intersection network, the base station may reply to a core network device with an establishment failure indication message. If the SNPN belongs to the intersection network, the base station may generate an MCCH message of a corresponding cell based on an SNPN index of the SNPN, and broadcast the MCCH message in the cell.

It should be understood that there are further many possible variant solutions, which are not enumerated herein.

Implementation solution 3

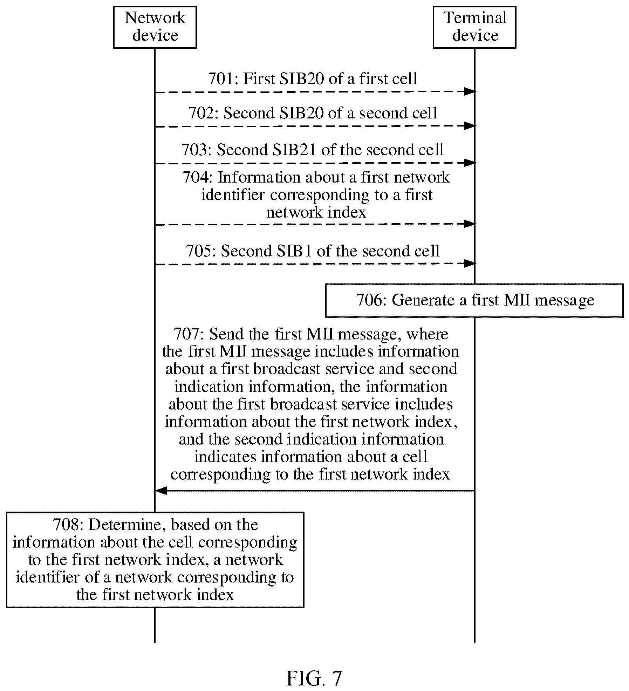

FIG. 7 shows an example of still another communication method according to an embodiment of this application. The method includes the following steps.

Optionally, step 701: A terminal device obtains a first SIB20 of a first cell.

Optionally, a network device sends the first SIB20 of the first cell. Accordingly, the terminal device receives the first SIB20 of the first cell.

For example, the first cell may be an SCell, a primary secondary cell group cell (Primary Secondary Cell Group Cell, PSCell), an SCell of the terminal device, or a PSCell of the terminal device.

For example, the network device may send the SIB20 of the first cell to the terminal device via dedicated signaling. For example, after receiving an MII message sent by the terminal device, the network device may send the SIB20 of the first cell to the terminal device via the dedicated signaling if the network device determines that a broadcast service that the terminal device is interested in is on the first cell.

Optionally, step 702: The terminal device obtains a second SIB20 of a second cell.

Optionally, the network device sends the second SIB20 of the second cell. Accordingly, the terminal device receives the second SIB20 of the second cell.

For example, the second cell may be a PCell, a PSCell, a PCell of the terminal device, or a PSCell of the terminal device.

Optionally, step 703: The terminal device obtains a second SIB21 of the second cell.

For example, the SIB21 may include mapping between a current carrier frequency and/or an adjacent carrier frequency and an MBS frequency selection area identity (Frequency Selection Area Identity, FSAI).

Optionally, the network device sends the second SIB21 of the second cell. Accordingly, the terminal device receives the second SIB21 of the second cell.

Optionally, step 704: The terminal device obtains information about a first network identifier corresponding to a first network index.

Optionally, the first network index and/or the first network identifier are/is associated with the first cell.

For example, for content related to step 704, refer to content in the embodiment shown in FIG. 5 (for example, step 500 and/or step 501). Details are not described herein again.

Optionally, step 705: The terminal device obtains a second SIB1 of the second cell.

Optionally, step 706: The terminal device generates a first MII message.

Step 707: The terminal device sends the first MII message to the network device.

For example, the first MII message includes information about a first broadcast service and second indication information.

For example, the information about the first broadcast service includes information about the first network index.

For example, the second indication information indicates information about a cell (for example, a cell X) corresponding to the first network index.

For example, the second indication information is associated with the first broadcast service and/or the first network index.

For example, if the first MII message includes a plurality of (for example, two) network indexes or broadcast services, the first MII message includes a plurality of (for example, two) pieces of second indication information. Different network indexes may correspond to different second indication information.

For example, the cell X may be the first cell, may be the second cell, or may be another cell.

Optionally, the terminal device indicates, in the MII message, information about an identifier of a broadcast service that the terminal device is interested in receiving or is received. If the information about the identifier of the broadcast service is implicitly indicated by a network index, the terminal device may further include the second indication information in the MII message. Optionally, the second indication information indicates a cell, where information about a network list of the cell is referenced for the network index (for example, the first network index) included in the MII message; indicates whether information about a network list of a PCell is referenced; indicates whether information about a network list of an SCell is referenced; or indicates whether information about a network list of a PSCell is referenced. For example, the second indication information indicates the cell, where the information about the network list of the cell is referenced. If the MII message includes a PLMN index corresponding to the broadcast service, the second indication information indicates a cell, where a PLMN list of the cell is referenced for the PLMN index included in the MII message. If the MII message includes an NPN index corresponding to the broadcast service, the second indication information indicates a cell, where an NPN list (or the NPN list and a PLMN list) of the cell is referenced for the NPN index included in the MII message.

Optionally, the referenced cell (for example, the cell X) may be a PCell, a PSCell, or an SCell. For example, this embodiment of this application provides any one or more of the following four manners of indicating the referenced cell in the MII message.

Indication manner 1: The referenced cell is indicated by an identifier of the referenced cell (for example, the cell X). For example, the second indication information may include the identifier of the referenced cell. For example, if the terminal device sets the network index (for example, the first network index) in the MII message by referencing a network list of a cell, the second indication information in the MII message may include an identifier of the cell. Alternatively, if the terminal device configures the network index (for example, the first network index) in the MII message by referencing the network list of the PCell, the second indication information in the MII message may include an identifier of the PCell.

Indication manner 2: The referenced cell is indicated by information about the SCell. For example, the second indication information may include the information about the SCell, or may include nothing. For example, if the terminal device sets the network index (for example, the first network index) in the MII message by referencing the network list of the SCell, the second indication information in the MII message may include the information about the SCell. If the terminal device sets the network index (for example, the first network index) in the MII message by referencing the network list of the PCell, the second indication information in the MII message may be an empty field. In other words, the second indication

EP 4 672 789 A1

information may indicate nothing.

For example, the information about the SCell may be an identifier of the SCell, or may be a preset field, for example, "0" or "1". For example, the information about the SCell is the field "1". In the MII message, if the second indication information includes "1", it indicates that the network index (for example, the first network index) included in the MII message is configured by referencing the network list of the SCell; or if the second indication information includes nothing, or the second indication information includes "0", it indicates that the network index (for example, the first network index) included in the MII message is configured by referencing the network list of the PCell; or vice versa.

Indication manner 3: The referenced cell is indicated by information about the PCell. In this case, the second indication information may include the information about the PCell. For example, if the terminal device sets the network index (for example, the first network index) in the MII message by referencing the network list of the PCell, the second indication information in the MII message may include the information about the PCell. If the terminal device configures the network index (for example, the first network index) in the MII message by referencing the network list of the SCell, the second indication information in the MII message may be an empty field. In other words, the second indication information may indicate nothing, or the second indication information includes "0". For example, the information about the PCell may be an identifier of the PCell, or may be a preset field, for example, "0" or "1". For specific implementation, refer to the foregoing indication manner 2. Details are not described herein again.

Indication manner 4: The referenced cell is indicated by information about the PSCell. In this case, the second indication information may include the information about the PSCell. For example, if the terminal device configures the network index (for example, the first network index) in the MII message by referencing the network list of the PSCell, the second indication information in the MII message may include the information about the PSCell. If the terminal device sets the network index (for example, the first network index) in the MII message by referencing the network list of the PSCell, the second indication information in the MII message may be an empty field. In other words, the second indication information may indicate nothing. The information about the PSCell may be an identifier of the PSCell, or may be a preset field, for example, "0" or "1". For specific implementation, refer to the foregoing indication manner 2. Details are not described herein again.

Indication manner 5: The referenced cell is indicated by a bitmap. In this case, the second indication information may include a preset bit value. For example, if the second indication information in the MII message includes a bit value "1" (or a bit value "0"), it indicates that the terminal device configures the network index (for example, the first network index) in the MII message by referencing a network list of a PCell. If the second indication information in the MII message includes a bit value "0" (or a bit value "1"), it indicates that the terminal device sets the network index (for example, the first network index) in the MII message by referencing a network list of the SCell or a cell (for example, the SCell or the PSCell) that obtains the network list.

For example, the second indication information may be implemented by adding a list parallel to MBS-ServiceList or the bitmap to the MII message. For example, a specific form of the MII message may be the following code:

```
MBSInterestIndication-r17-IEs::=SEQUENCE {

mbs-FreqList-r17          CarrierFreqListMBS-r17      OPTIONAL,

mbs-Priority-r17          ENUMERATED{true}           OPTIONAL,

mbs-ServiceList-r17       MBS-ServiceList-r17         OPTIONAL,

lateNonCriticalExtension    OCTET STRING                OPTIONAL,

nonCriticalExtension       SEQUENCE{}               OPTIONAL,

}
```

```
MBS-ServiceList-r17::=SEQUENCE (SIZE(1..maxNrofMBS-ServiceListPerUE-r17))
OF MBS-ServiceInfo-r17
```

```
MBS-ServiceList-r17::=SEQUENCE (

tmgi-r17                  TMGI-r17

}
```

Optionally, the second indication information may indicate that the terminal device determines information about an identifier of the first broadcast service based on information corresponding to a cell (or a specific cell). For example, the terminal device may determine, based on a network list of the cell indicated by the second indication information, a network index, in the network list of the cell, of a network identifier corresponding to the broadcast service that the terminal device is interested in receiving or is receiving, and generate the MII message based on the network index and the second indication information.

For example, assuming that the broadcast service that the terminal device is interested in receiving or is receiving is located on an SCell A, but the network identifier corresponding to the broadcast service on the SCell A is not included in the network list of the PCell, but is included in a network list of the SCell A, the terminal device may generate the MII message based on a network index corresponding to the network identifier in the network list of the SCell A and information about the SCell A.

Step 708: The network device determines, based on the information about the cell corresponding to the first network index, a network identifier of a network corresponding to the first network index.

Optionally, the second indication information may indicate the network device to determine the information about the identifier of the first broadcast service based on the information corresponding to the cell (or the specific cell, or the cell X). For example, if the second indication information in the MII message indicates the information about the SCell A, the network device may obtain, through parsing by referencing the network list of the SCell A, the network index included in the MII message, to obtain the network identifier corresponding to the broadcast service that the terminal device is interested in receiving or is receiving, thereby obtaining information about an identifier of the broadcast service on the SCell A based on the network identifier.

In the foregoing implementation solution 3, indication information of the reference cell is additionally added to the MII message, so that the terminal device can report, in the MII message, the information about the identifier of the broadcast service that the terminal device is interested in receiving or is receiving, and the network device can also obtain, through parsing by referencing a network list of a reference cell indicated by indication information in the MII, a broadcast service indicated by the network index in the MII message. In this way, the network device can learn of the broadcast service that the terminal device is interested in receiving or is receiving. This facilitates subsequent decision-making of the network device, ensures subsequent receiving of the broadcast service, and effectively resolves the foregoing problem 2 in an existing broadcast procedure.

In addition, it should be noted that, in all examples provided in the foregoing implementation solution 3, descriptions are provided in a case in which the terminal device sets the network index in the MII by referencing the network list of the cell (for example, the SCell or the PSCell). However, in actual implementation, an reference object may not be limited to the network list, and may be any one of the information about the network list in the foregoing implementation solution 1, for example, any one or more of the list, the network identifier of the network included in the list, the quantity of network identifiers included in the list, the association relationship between the network index of the network included in the list and the network identifier, an association relationship between a network index and a network identifier, the network identifier, the quantity of network identifiers corresponding to the first cell, or the association relationship between the network index of the network corresponding to the first cell and the network identifier. This is not specifically limited in this embodiment of this application.

Implementation solution 4

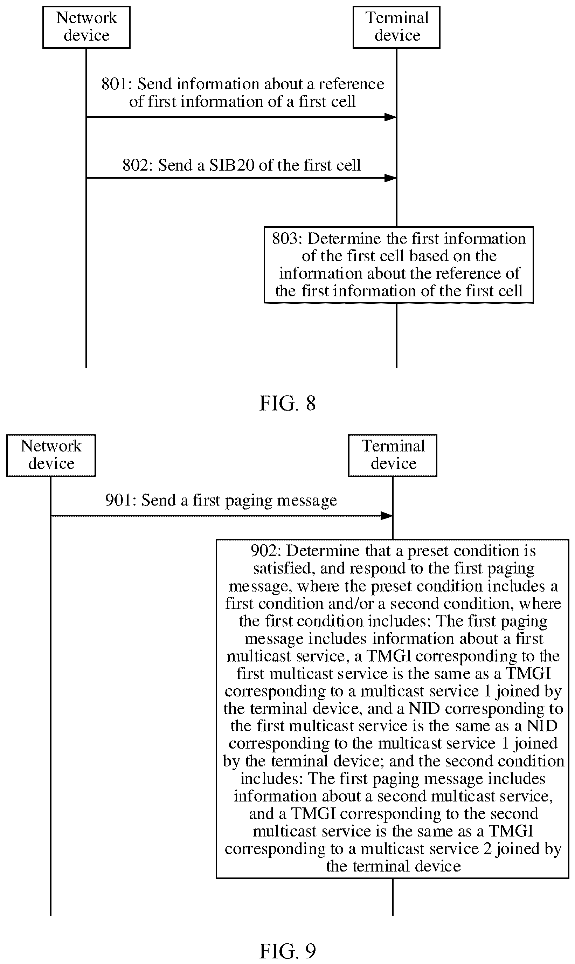

FIG. 8 shows an example of yet another communication method according to an embodiment of this application. The method includes the following steps.

Step 801: A terminal device obtains information about a reference of first information of a first cell.

For example, the first information may be one or more of a broadcast CFR, a PDSCH configuration of an MCCH, or a quantity N of SSBs used for SSB mapping of an MTCH.

For example, the quantity N of SSBs used for SSB mapping of the MTCH may include/be replaced with a quantity N of SSBs, a quantity N of actually transmitted SSBs, or a quantity N of actually transmitted SSBs used for SSB mapping of the MTCH.

For example, the terminal device obtains information about a reference of the broadcast CFR of the first cell.

Optionally, a network device sends the information about the reference of the broadcast CFR of the first cell. Accordingly, the terminal device receives the information about the reference of the broadcast CFR of the first cell.

For example, the terminal device obtains information about a reference of the PDSCH configuration of the MCCH of the first cell.

Optionally, the network device sends the information about the reference of the PDSCH configuration of the MCCH of the first cell. Accordingly, the terminal device receives the information about the reference of the PDSCH configuration of the MCCH of the first cell.

For example, the terminal device obtains information about a reference of the quantity N of SSBs used for SSB mapping of the MTCH of the first cell.

Optionally, the network device sends the information about the reference of the quantity N of SSBs used for SSB mapping of the MTCH of the first cell. Accordingly, the terminal device receives the information about the reference of the quantity N of SSBs used for SSB mapping of the MTCH of the first cell.

Optionally, the first cell may be an SCell, a primary secondary cell group cell (Primary Secondary Cell Group Cell, PSCell), an SCell of the terminal device, or a PSCell of the terminal device.

Herein, it should be noted that the first cell is the SCell or the PSCell for the terminal device, but may be a PCell, an SCell, or a PSCell for another terminal device. This is not limited.

Optionally, the information about the reference of the PDSCH configuration of the MCCH of the first cell may include information about a PDSCH configuration provided in initialDownlinkBWP of a SIB1 of the first cell.

Optionally, the information about the reference of the quantity N of SSBs used for SSB mapping of the MTCH of the first cell may include information about a quantity N that is of SSBs and that is provided in the SIB1 of the first cell.

Optionally, the information about the reference of the broadcast CFR of the first cell may include information about a first initial BWP of the first cell and/or information about a first CORESET #0 of the first cell. For example, the information about the reference of the broadcast CFR of the first cell may include only the information about the first initial BWP of the first cell, include only the information about the first CORESET #0 of the first cell, or include both the information about the first initial BWP of the first cell and the information about the first CORESET #0 of the first cell.

For example, the SIB1 of the first cell includes the information about the first initial BWP of the first cell.

For example, a MIB of the first cell includes the information about the first CORESET #0 of the first cell.

Optionally, an initial BWP may include an initial BWP related to RedCap.

For example, the information about the first initial BWP may include any one or more of the following: a bandwidth of the first initial BWP, a location of the first initial BWP, or a first subcarrier spacing (subcarrier spacing, SCS) corresponding to the first initial BWP. The information about the first initial BWP may further include other content. This is not limited in this application.

For example, the information about the first CORESET #0 may include any one or more of the following: a bandwidth of the first CORESET #0, a location of the first CORESET #0, or a first subcarrier spacing (subcarrier spacing, SCS) corresponding to the first CORESET #0. The information about the first CORESET #0 may further include other content. This is not limited in this application.

For example, the location may include/be replaced with a frequency domain location.

For example, the information about the first initial BWP of the first cell may be the first initial BWP of the first cell, or may be information that can indicate the first initial BWP of the first cell. The first initial BWP of the first cell can be obtained through parsing based on the information indicating the first initial BWP of the first cell. Likewise, the information about the first CORESET #0 of the first cell may be the first CORESET #0 of the first cell, or may be information that can indicate the first CORESET #0 of the first cell. The first CORESET #0 of the first cell can be obtained through parsing based on the information indicating the first CORESET #0 of the first cell. For ease of understanding, the following provides descriptions by using an example in which the information about the first initial BWP of the first cell includes the first initial BWP of the first cell and the information about the first CORESET #0 of the first cell includes the first CORESET #0 of the first cell.

Optionally, the information about the reference of the broadcast CFR of the first cell may include information about a reference of the broadcast CFR needed to be used for obtaining a broadcast CFR in a SIB20 of the first cell through parsing. For example, if the SIB20 of the first cell indicates that the broadcast CFR of the first cell is the same as an initial BWP of the first cell, the information about the reference of the broadcast CFR of the first cell may include information about the initial BWP of the first cell. Alternatively, if the SIB20 of the first cell indicates that the broadcast CFR of the first cell is the same as a CORESET #0 of the first cell, the information about the reference of the broadcast CFR of the first cell may include information about the CORESET #0 of the first cell.

Optionally, the network device may send, to the terminal device via dedicated signaling, the information about the reference of the broadcast CFR of the first cell. In this way, although the network device broadcasts the SIB1 of the first cell and/or the MIB of the first cell, the terminal device does not obtain the broadcast SIB1 of the first cell and/or the broadcast MIB of the first cell. Consequently, the terminal device does not learn of the initial BWP and the CORESET #0 of the first cell. However, the network device sends the initial BWP of the first cell and/or the CORESET #0 of the first cell to the terminal device in a form of the dedicated signaling, so that the terminal device can learn of the initial BWP of the first cell and/or the CORESET #0 of the first cell.

For example, the dedicated signaling may include/be an RRC message, for example, an RRC reconfiguration message.

Optionally, the information about the reference of the broadcast CFR of the first cell may include/be the information about the reference of the broadcast CFR of the first cell included in the dedicated signaling; or the information about the reference of the broadcast CFR of the first cell, in the SIB1 of the first cell included in the dedicated signaling.

Optionally, this embodiment of this application provides the following two manners in which the network device sends the information about the reference of the broadcast CFR of the first cell to the terminal device:

Manner 1: The network device sends the SIB1 of the first cell and/or the MIB of the first cell to the terminal device.

For example, the network device sends the SIB1 of the first cell and/or the MIB of the first cell to the terminal device via the dedicated signaling.

Manner 2: The network device sends the information about the first initial BWP of the first cell and/or the information about the first CORESET #0 of the first cell to the terminal device.

For example, the network device sends the first initial BWP of the first cell and/or the first CORESET #0 of the first cell to the terminal device via the dedicated signaling.

Optionally, step 802: The terminal device obtains a first SIB20 or a first MCCH message of the first cell.

Optionally, the network device sends the first SIB20 of the first cell. Accordingly, the terminal device receives the first SIB20 of the first cell.

Optionally, the first SIB20 or the first MCCH message includes first indication information.

Optionally, the first SIB20, the first indication information, or the first MCCH message indicates one or more of the following content:

Content 1: a relationship between the broadcast CFR of the first cell and the reference of the broadcast CFR of the first cell.

Content 2: a relationship between the PDSCH configuration of the MCCH of the first cell and the reference of the PDSCH configuration of the MCCH of the first cell.

Content 3: a relationship between the quantity N of SSBs used for SSB mapping of the MTCH of the first cell and the reference of the quantity N of SSBs used for SSB mapping of the MTCH of the first cell.

Optionally, the first SIB20, the first indication information, or the first MCCH message indicates the content 1. The content indicated by the first indication information or the content indicated by the first SIB20 may include any one or more of the following five types of indication content:

Indication content 1: The first indication information or the first SIB20 indicates that the broadcast CFR of the first cell is the same as the reference of the broadcast CFR of the first cell. For example, the first indication information indicates that the broadcast CFR of the first cell is the same as the first initial BWP of the first cell or the first CORESET #0 of the first cell, or is the same as the first initial BWP in the SIB1 of the first cell or the first CORESET #0 in the MIB of the first cell.

For example, being in the SIB1 may include/be replaced with being indicated by the SIB1 or configured by the SIB1.

For example, being in the MIB may include/be replaced with being indicated by the MIB or configured by the MIB.

Indication content 2: The first indication information or the first SIB20 indicates that the broadcast CFR of the first cell is the same as the initial BWP, for example, the initial BWP in the SIB1.

Indication content 3: The first indication information or the first SIB20 indicates that the broadcast CFR of the first cell is the same as the first initial BWP of the first cell.

Indication content 4: The first indication information or the first SIB20 indicates that the broadcast CFR of the first cell is the same as the CORESET #0, for example, the CORESET #0 in the MIB.

Indication content 5: The first indication information or the first SIB20 indicates that the broadcast CFR of the first cell is the same as the first CORESET #0 of the first cell.

For example, the first indication information or the first SIB20 indicates that the broadcast CFR of the first cell is the same as the first initial BWP in the SIB1 of the first cell.

For example, the first indication information or the first SIB20 indicates that the broadcast CFR of the first cell is the same as the first initial BWP that is in the SIB1 of the first cell and that is included in the dedicated signaling.

For example, being included in the dedicated signaling may include/be replaced with being sent via the dedicated signaling, indicated by the dedicated signaling, configured via the dedicated signaling, or in the dedicated signaling.

For example, the first indication information or the first SIB20 indicates that the broadcast CFR of the first cell is the same as the first initial BWP that is of the first cell and that is included in the dedicated signaling.

For example, the first indication information or the first SIB20 indicates that the broadcast CFR of the first cell is the same as the first CORESET #0 in the MIB of the first cell.

For example, the first indication information or the first SIB20 indicates that the broadcast CFR of the first cell is the same as the first CORESET #0 that is in the MIB of the first cell and that is included in the dedicated signaling.

For example, the first indication information or the first SIB20 indicates that the broadcast CFR of the first cell is the same as the first CORESET #0 that is of the first cell and that is included in the dedicated signaling.

For example, if there is no first field, or if there is a first field and there is no second field in the first field, it indicates (for example, the first indication information indicates or the first SIB20 indicates) that the broadcast CFR of the first cell is the same as the CORESET #0 (the first CORESET #0 of the first cell, the first CORESET #0 that is in the MIB of the first cell and that is included in the dedicated signaling, or the first CORESET #0 that is of the first cell and that is included in the dedicated signaling).

For example, that there is no first field may include/be replaced with that there is no first field in the first SIB20.

For example, the first field is for configuring the broadcast CFR. For example, the first field includes any one or more of the following: information about the broadcast CFR, information about the PDSCH configuration of the MCCH, or information about an additional control-resource set. For example, the first field is cfr-ConfigMCCH-MTCH.

For example, the second field indicates the information about the broadcast CFR. For example, the second field is locationAndBandwidthBroadcast.

For example, the field may include/be replaced with an information element (Information element, IE).

For example, if there is a first field, there is a second field in the first field, and the second field includes a first value, it indicates (for example, the first indication information indicates or the first SIB20 indicates) that the broadcast CFR of the first cell is the same as the initial BWP (or the first initial BWP of the first cell, the first initial BWP that is in the SIB1 of the first cell and that is included in the dedicated signaling, or the first initial BWP that is of the first cell and that is included in the dedicated signaling).

For example, the first value indicates that the broadcast CFR of the first cell is the same as the initial BWP (or the first initial BWP of the first cell, the first initial BWP that is in the SIB1 of the first cell and that is included in the dedicated signaling, or the first initial BWP that is of the first cell and that is included in the dedicated signaling). For example, the first value is sameAsSib1 ConfiguredLocationAndBW.

For example, if there is a first field, there is a second field in the first field, and the second field includes a second value, it indicates (for example, the first indication information indicates or the first SIB20 indicates) that the broadcast CFR of the first cell covers and is greater than the initial BWP (or the first initial BWP of the first cell, the first initial BWP that is in the SIB1 of the first cell and that is included in the dedicated signaling, or the first initial BWP that is of the first cell and that is included in the dedicated signaling).

For example, the second value indicates that the broadcast CFR of the first cell covers and is greater than the initial BWP (or the first initial BWP of the first cell, the first initial BWP that is in the SIB1 of the first cell and that is included in the dedicated signaling, or the first initial BWP that is of the first cell and that is included in the dedicated signaling). For example, the second value is locationAndBandwidth.

Optionally, the first SIB20, the first indication information, or the first MCCH message indicates the content 2. The content indicated by the first indication information, the content indicated by the first SIB20, or the content indicated by the first MCCH message may include the following indication content: The PDSCH configuration of the MCCH of the first cell is the same as the information about the reference of the PDSCH configuration of the MCCH of the first cell.

Optionally, the first SIB20, the first indication information, or the first MCCH message indicates the content 3. The content indicated by the first indication information, the content indicated by the first SIB20, or the content indicated by the first MCCH message may include the following indication content: The quantity N of SSBs used for SSB mapping of the MTCH of the first cell is the same as the information about the reference of the quantity N of SSBs used for SSB mapping of the MTCH of the first cell.

Step 803: The terminal device determines the first information of the first cell based on the information about the reference of the first information of the first cell.

For example, based on the first initial BWP of the first cell and/or the CORESET #0 of the first cell that are/is sent by the network device via the dedicated signaling, or based on the SIB1 of the first cell and/or the MIB of the first cell that are/is sent by the network device via the dedicated signaling, if the first indication information indicates that the broadcast CFR of the first cell is the same as the initial BWP or the first initial BWP of the first cell, the terminal device may determine that the broadcast CFR of the first cell is the first initial BWP of the first cell; or if the first indication information indicates that the broadcast CFR of the first cell is the same as the CORESET #0 or the first CORESET #0 of the first cell, the terminal device may determine that the broadcast CFR of the first cell is the first CORESET #0 of the first cell.

In the foregoing implementation solution 4, the network device sends information about a reference of a broadcast CFR of an SCell to the terminal device. Even if the terminal device does not obtain a SIB1 and a MIB of the SCell that are broadcast, the terminal device can correctly obtain a broadcast CFR in a SIB20 of the SCell through interpretation based on the information about the reference of the broadcast CFR of the SCell, so that the terminal device can correctly receive a broadcast service on the SCell. This effectively resolves the foregoing problem 3 in an existing broadcast procedure.

It should be noted that, although the foregoing implementation solution 1 to implementation solution 4 are proposed for different problems in the MBS broadcast procedure, in actual application, these implementation solutions may be combined with each other. For example, the implementation solution 1 may be combined with any one or more of the implementation solution 3 or the implementation solution 4, or the implementation solution 2 may be combined with any one or more of the implementation solution 3 or the implementation solution 4, to simultaneously resolve at least two problems in the MBS broadcast procedure.

The foregoing content mainly describes how to solve the problems in the MBS broadcast procedure. The following describes how to resolve the problem in the MBS multicast procedure.

Implementation solution 5

FIG. 9 shows an example of still another communication method according to an embodiment of this application. The method includes the following steps.

Step 901: A terminal device receives a first paging message.

For example, a network device sends the first paging message. Accordingly, the terminal device may receive the first paging message. For example, the network device may be an access network device, for example, a base station.

For example, in step 901, the terminal device may be in an RRC inactive state or an RRC idle state.

For example, the network device may send the first paging message to the terminal device in the following manner. For example, the network device includes scheduling information of the first paging message in downlink control information (downlink control information, DCI) (for example, DCI scrambled by using a P-RNTI) carried on a physical downlink control channel (physical downlink control channel, PDCCH).

For example, in this application, including may include/be replaced with including.

For example, the first paging message in this application may include/be replaced with another name, for example, a ninth message.

For example, in this embodiment of this application, information about a multicast service may also be referred to as a multicast activation notification. For example, one paging message may include one or more multicast activation notifications. For example, each multicast activation notification is identified by information about an identifier of a corresponding multicast service. For example, information about an identifier of the multicast service may be indicated by an explicit ID or an implicit index.

Optionally, the network device may indicate, by using the implicit index, for example, an NPN index or an SNPN index, a multicast activation notification associated with an SNPN. Optionally, the network device may not indicate, by using the explicit ID, for example, a PLMN ID, the multicast activation notification associated with the SNPN.

Optionally, the network device may indicate, by using the explicit ID, for example, the PLMN ID, a multicast activation notification not associated with the SNPN, for example, a multicast activation notification associated with a public network (or a PLMN) or a PNI-NPN; or the network device may indicate, by using the implicit index, for example, the NPN index or a PLMN index, the multicast activation notification not associated with the SNPN.

Step 902: If a preset condition is satisfied, the terminal device responds to the first paging message.

For example, the preset condition may include the following first condition and/or second condition. For example, the preset condition may include only the following first condition, may include only the following second condition, or may include both the following first condition and the following second condition:

For example, the first condition includes: The first paging message includes information about a first multicast service, a TMGI corresponding to the first multicast service is the same as a TMGI corresponding to a multicast service 1 joined by the terminal device, and a NID corresponding to the first multicast service is the same as a NID corresponding to the multicast service 1 joined by the terminal device.

For example, joining may include/be replaced with subscribing.

Optionally, the information about the first multicast service includes a first network index.

Optionally, the first multicast service is associated with the SNPN.

Optionally, the multicast service 1 joined by the terminal device is associated with the SNPN.

For example, the second condition includes: The first paging message includes information about a second multicast service, and a TMGI corresponding to the second multicast service is the same as a TMGI corresponding to a multicast service 2 joined by the terminal device.

Optionally, the information about the second multicast service includes a second network identifier or a second network index.

Optionally, the second multicast service is not associated with the SNPN. Optionally, the second multicast service is associated with the public network (or the PLMN) or the PNI-NPN.

Optionally, the multicast service 2 joined by the terminal device is not associated with the SNPN. Optionally, the multicast service 2 joined by the terminal device is associated with the public network (or the PLMN) or the PNI-NPN.

It should be noted that, when receiving the first paging message, the terminal device may determine only the first condition, may determine only the second condition, or may determine both the first condition and the second condition. This is not specifically limited in this embodiment of this application.

Optionally, the terminal device may determine, by referencing the following three cases, whether to respond to the first paging message:

Case 1: If a multicast service in the first paging message is indicated by an implicit network index (index), the terminal device parses the implicit network index.

(1) If the multicast service corresponds to the SNPN, an SNPN ID corresponding to the multicast service may be obtained. The SNPN ID of the multicast service includes a PLMN ID and a NID. Therefore, the terminal device may compare a TMGI of a multicast service joined by the terminal device with a TMGI of the multicast service included in the first paging message, and compare a NID of the multicast service joined by the terminal device with the NID of the multicast service included in the first paging message. If two comparison results are both same, it indicates that the terminal device has joined the multicast service included in the first paging message, and the terminal device may respond to the first paging message. If two comparison results are not both same, it indicates that the terminal device has not joined the multicast service included in the first paging message, and the terminal device does not respond to the first paging message.

(2) If the multicast service corresponds to the public network or the PNI-NPN, a PLMN ID corresponding to the multicast service may be obtained. Therefore, the terminal device may compare a TMGI of a multicast service that is joined by the terminal device and that is not associated with the SNPN with a TMGI of the multicast service included in the first paging message. If a comparison result is same, it indicates that the terminal device has joined the multicast service included in the first paging message, and the terminal device may respond to the first paging message. If a comparison result is different, it indicates that the terminal device has not joined the multicast service included in the first paging message, and the terminal device does not respond to the first paging message

Case 2: If a multicast service in the first paging message is indicated by an explicit network identifier (for example, the PLMN ID), it indicates that the multicast service corresponds to the public network or the PNI-NPN. The terminal device may obtain the PLMN ID corresponding to the multicast service included in the first paging message, and may determine whether a TMGI of a multicast service that is joined by the terminal device and that is not associated with the SNPN is included in a TMGI of the multicast service included in the first paging message. If the TMGI of the multicast service that is joined by the terminal device and that is not associated with the SNPN is included in the TMGI of the multicast service included in the first paging message, it indicates that the terminal device has joined the multicast service included in the first paging message, and the terminal device may respond to the first paging message. If the TMGI of the multicast service that is joined by the terminal device and that is not associated with the SNPN is not included in the TMGI of the multicast service included in the first paging message, it indicates that the terminal device has not joined the multicast service included in the first paging message, and the terminal device does not respond to the first paging message.

Case 3: If a multicast service in the first paging message is indicated by an explicit network identifier (for example, the PLMN ID), but a multicast service joined by the terminal device corresponds to the SNPN, the terminal device may ignore a TMGI indicated by the explicit network identifier in the first paging message, and the terminal device may not respond to the first paging message, to avoid a false response caused because the terminal device compares only TMGIs in a case of the SNPN.

For example, the public network may include/be replaced with the PLMN.

Optionally, that the terminal device responds to the first paging message may include/be replaced with any one or more of the following content:

1. The terminal device responds to the multicast service in the first paging message. For example, if the first condition is satisfied, the terminal device responds to the first multicast service. For example, if the second condition is satisfied, the terminal device responds to the second multicast service.

2. The terminal device responds to a multicast activation notification in the first paging message. For example, if the first condition is satisfied, the terminal device responds to a multicast activation notification corresponding to the first multicast service. For example, if the second condition is satisfied, the terminal device responds to a multicast activation notification corresponding to the second multicast service.

3. The terminal device enters a radio resource control (radio resource control, RRC) connected state.

4. The terminal device initiates RRC connection resume.

5. The terminal device initiates RRC connection establishment.

6. The terminal device forwards the TMGI of the multicast service.

For example, the terminal device forwards the TMGI of the multicast service (for example, the first multicast service or the second multicast service) to an upper layer (for example, a NAS layer).

For example, the terminal device forwards the TMGI and the NID of the first multicast service to the upper layer.

For example, after the terminal device receives a paging message, the terminal device may perform one or more of the following operations:

1> if UE is in an RRC_IDLE state, for each PagingRecord (if any) included in pagingGroupList included in the paging message:

2> if the UE has joined an MBS session indicated by a TMGI included in pagingGroupList:

3> if the MBS session joined by the UE corresponds to an SNPN, and the TMGI that is in the paging message and that corresponds to the MBS session indicates an SNPN index by using a PLMN-index; or

3> if the MBS session joined by the UE does not correspond to an SNPN:

4> forward the TMGI to the upper layer;

1> if UE is in an RRC_INACTIVE state, and the UE has joined one or more MBS sessions indicated by a TMGI included in pagingGroupList:

2> if at least one of the one or more MBS sessions joined by the UE corresponds to an SNPN, and the TMGI that is in the paging message and that corresponds to the at least one MBS session indicates an SNPN index by using a PLMN-index; or

2> if at least one of the one or more MBS sessions joined by the UE does not correspond to an SNPN:

3> if no ue-Identity included in PagingRecord (if included in the paging message) matches a UE identity allocated by an upper layer:

4> start an RRC connection resume process, and set resumeCause as follows:

5> if the UE is configured with an access identity 1 by the upper layer:
6> set resumeCause to mps-PriorityAccess;
5> else if the UE is configured with an access identity 2 by the upper layer:
6> set resumeCause to mcs-PriorityAccess;
5> else if the UE is configured, by the upper layer, with one or more access identities equal to 11 to 15:
6> set resumeCause to highPriorityAccess.
5> else:
6> set resumeCause to mt-Access;
3> else:
4> forward the TMGI to the upper layer.

For example, forwarding the TMGI to the upper layer may be understood as forwarding the TMGI to the NAS layer. For example, the NAS layer is for triggering RRC connection establishment.

In the foregoing implementation solution 5, when a multicast service corresponds to the SNPN, the network device is restricted to implicitly indicate information about an identifier of the multicast service by using a network index in a multicast activation notification, so that the terminal device can compare both TMGIs of multicast services and NIDs of the multicast services. In this way, the terminal device can correctly respond to the multicast activation notification, thereby avoiding a false response caused because the terminal device compares only the TMGIs of the multicast services, and effectively resolving the foregoing problem 4 in an existing multicast procedure.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in the descriptions in embodiments of this application, "a plurality of" means two or more than two.

Terms "first" and "second" below are merely intended for a purpose of description, and cannot be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

In addition, the terms "including" and "having" and any variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, a term like "example" or "for example" is for representing giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner for ease of understanding.

It should be understood that, in this application, "at least one" means one or more. '"A plurality of" means two or more. "At least two" means two, three, or more than three. "And/or" is for describing an association relationship between associated objects, and indicates that three relationships may exist. For example, "A and/or B" may indicate three cases: Only A exists, only B exists, and both A and B exist, where A and B may be singular or plural. The character "/" usually indicates an "or" relationship between the associated objects. "At least one of the following" or a similar expression thereof indicates any combination of the items, and includes a singular item or any combination of plural items. For example, at least one of a, b, or c may indicate a, b, c, "a and b", "a and c", "b and c", or "a, b, and c", where a, b, and c may be singular or plural. "When" and "if" both mean that corresponding processing is performed in an objective case, are not intended to limit time, do not require a determining action during implementation, and do not mean other limitations.

It should be understood that, the conventional technology may change with evolution of the technical solutions, and the technical solutions provided in this application are not limited to the provided conventional technology.

It should be noted that different embodiments of this application or some steps (for example, any one or more steps) in different embodiments may be combined with each other to form a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise stated or there is a logic conflict, terms and/or descriptions in the different embodiments are consistent, and may be mutually referenced.

It should be noted that an order of the steps in embodiments of this application is not limited in this application.

It should be noted that an order of determining different conditions in embodiments of this application is not limited in this application.

It should be noted that "after" and "when" in this application do not strictly limit a time point.

It should be noted that nouns, terms, and the like in this application are merely examples, or may have other names. This is not limited in this application.

With reference to the accompanying drawings, the following describes communication apparatuses, in embodiments of this application, configured to implement the foregoing methods. Therefore, all of the foregoing content may be used in subsequent embodiments. Repeated content is not described again.

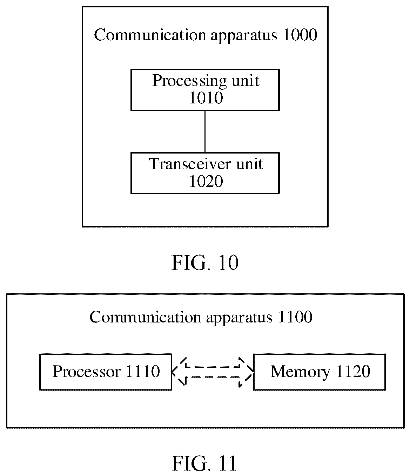

FIG. 10 is a schematic block diagram of a communication apparatus 1000 according to an embodiment of this application. The communication apparatus 1000 may correspondingly implement functions or steps implemented by the terminal device or the network device in the foregoing method embodiments. The communication apparatus may include a processing unit 1010 and a transceiver unit 1020. Optionally, a storage unit may further be included. The storage unit may be configured to store instructions (code or a program) and/or data. The processing unit 1010 and the transceiver unit 1020 may be coupled to the storage unit. For example, the processing unit 1010 may read the instructions (the code or the program) and/or the data in the storage unit, to implement corresponding methods. The foregoing units may be independently disposed, or may be partially or completely integrated.

In some possible implementations, the communication apparatus 1000 can correspondingly implement behavior and functions of the terminal device in the foregoing method embodiments. For example, the communication apparatus 1000 may be a terminal device, or may be an apparatus, for example, a chip, a chip system, a circuit, or a circuit system, that can implement a function implemented by the terminal device. The transceiver unit 1020 may be configured to perform all receiving or sending operations performed by the terminal device in the embodiment shown in FIG. 5, for example, step 501 and step 502 in the embodiment shown in FIG. 5, and/or configured to support another process of the technology described in this specification. The processing unit 1010 is configured to perform all operations other than the receiving or sending operations performed by the terminal device in the embodiment shown in FIG. 5, for example, step 503 in the embodiment shown in FIG. 5, and/or configured to support another process of the technology described in this specification.

For example, the transceiver unit 1020 is configured to obtain information about a first network identifier corresponding to a first network index, and obtain a first MCCH message, where the first network index is associated with a first cell, the first MCCH message is associated with the first cell, the first cell is an SCell or a PSCell, the first MCCH message includes information about a first broadcast service, and the information about the first broadcast service includes information about the first network index. The processing unit 1010 is configured to determine information about an identifier of the first broadcast service based on the information about the first network identifier corresponding to the first network index.

In some possible implementations, the communication apparatus 1000 can correspondingly implement behavior and functions of the terminal device in the foregoing method embodiments. For example, the communication apparatus 1000 may be a terminal device, or may be an apparatus, for example, a chip, a chip system, a circuit, or a circuit system, that can implement a function implemented by the terminal device. The transceiver unit 1020 may be configured to perform all receiving or sending operations performed by the terminal device in the embodiment shown in FIG. 6, for example, step 602 and step 603 in the embodiment shown in FIG. 6, and/or configured to support another process of the technology described in this specification. The processing unit 1010 is configured to perform all operations other than the receiving or sending operations performed by the terminal device in the embodiment shown in FIG. 6, for example, step 604 in the embodiment shown in FIG. 6, and/or configured to support another process of the technology described in this specification.

For example, the transceiver unit 1020 is configured to obtain information about a network list of a first cell, and obtain an MCCH message of a second cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and the second cell, the second-type network includes a network corresponding to the first cell but not corresponding to the second cell, the MCCH message of the second cell includes information about a second broadcast service, and the information about the second broadcast service includes information about a second network index. The processing unit 1010 is configured to determine, based on the information about the network list of the first cell, a network identifier of a network corresponding to the second network index.

In some possible implementations, the communication apparatus 1000 can correspondingly implement behavior and functions of the terminal device in the foregoing method embodiments. For example, the communication apparatus 1000 may be a terminal device, or may be an apparatus, for example, a chip, a chip system, a circuit, or a circuit system, that can implement a function implemented by the terminal device. The transceiver unit 1020 in combination with the processing unit 1010, may be configured to perform all receiving or sending operations performed by the terminal device in the embodiment shown in FIG. 7, for example, step 701 and step 702 in the embodiment shown in FIG. 7, and/or configured to support another process of the technology described in this specification. The processing unit 1010 is configured to perform all operations other than the receiving or sending operations performed by the terminal device in the embodiment shown in FIG. 7.

For example, the transceiver unit 1020 in combination with the processing unit 1010 is configured to send an MII message, where the MII message includes information about a first broadcast service and second indication information, the information about the first broadcast service includes information about a first network index, and the second indication information indicates information about a cell corresponding to the first network index.

In some possible implementations, the communication apparatus 1000 can correspondingly implement behavior and functions of the terminal device in the foregoing method embodiments. For example, the communication apparatus 1000 may be a terminal device, or may be an apparatus, for example, a chip, a chip system, a circuit, or a circuit system, that can implement a function implemented by the terminal device. The transceiver unit 1020 may be configured to perform all receiving or sending operations performed by the terminal device in the embodiment shown in FIG. 8, for example, step 801 and step 802 in the embodiment shown in FIG. 8, and/or configured to support another process of the technology described in this specification. The processing unit 1010 is configured to perform all operations other than the receiving or sending operations performed by the terminal device in the embodiment shown in FIG. 8, for example, step 803 in the embodiment shown in FIG. 8, and/or configured to support another process of the technology described in this specification.

For example, the transceiver unit 1020 is configured to: obtain information about a reference of a broadcast CFR of a first cell, where the first cell is a secondary cell SCell or a primary secondary cell group cell PSCell; and obtain a SIB20 of the first cell, where the first SIB20 includes first indication information, and the first indication information indicates a relationship between the broadcast CFR of the first cell and the reference of the broadcast CFR of the first cell. The processing unit 1010 is configured to determine, based on the information about the reference of the broadcast CFR of the first cell, information about the broadcast CFR of the first cell.

In some possible implementations, the communication apparatus 1000 can correspondingly implement behavior and functions of the terminal device in the foregoing method embodiments. For example, the communication apparatus 1000 may be a terminal device, or may be an apparatus, for example, a chip, a chip system, a circuit, or a circuit system, that can implement a function implemented by the terminal device. The transceiver unit 1020 may be configured to perform all receiving or sending operations performed by the terminal device in the embodiment shown in FIG. 9, for example, step 901 in the embodiment shown in FIG. 9, and/or configured to support another process of the technology described in this specification. The processing unit 1010 is configured to perform all operations other than the receiving or sending operations performed by the terminal device in the embodiment shown in FIG. 9, for example, step 902 in the embodiment shown in FIG. 9, and/or configured to support another process of the technology described in this specification.

For example, the transceiver unit 1020 is configured to obtain a first paging message. The processing unit 1010 is configured to determine that a first condition or a second condition is satisfied, and respond to the first paging message, where the first condition includes: The first paging message includes information about a first multicast service, a TMGI corresponding to the first multicast service is the same as a TMGI corresponding to a multicast service 1 joined by the terminal device, and a NID corresponding to the first multicast service is the same as a NID corresponding to the multicast service 1 joined by the terminal device, where the information about the first multicast service includes a first network index, and the multicast service 1 joined by the terminal device is associated with an SNPN; and the second condition includes: The first paging message includes information about a second multicast service, and a TMGI corresponding to the second multicast service is the same as a TMGI corresponding to a multicast service 2 joined by the terminal device, where the multicast service 2 joined by the terminal device is not associated with the SNPN.

In some possible implementations, the communication apparatus 1000 can correspondingly implement behavior and functions of the network device in the foregoing method embodiments. For example, the communication apparatus 1000 may be a network device, or may be an apparatus, for example, a chip, a chip system, a circuit, or a circuit system, that can implement a function implemented by the network device. The transceiver unit 1020 may be configured to perform all receiving or sending operations performed by the network device in the embodiment shown in FIG. 5, for example, step 501 and step 502 in the embodiment shown in FIG. 5, and/or configured to support another process of the technology described in this specification. The processing unit 1010 is configured to perform all operations other than the receiving or sending operations performed by the network device in the embodiment shown in FIG. 5.

For example, the transceiver unit 1020 is configured to send information about a first network identifier corresponding to a first network index, and send a first MCCH message, where the first network index is associated with a first cell, the first MCCH message is also associated with the first cell, the first cell is a secondary cell SCell or a primary secondary cell group cell PSCell, the first MCCH message includes information about a first broadcast service, and the information about the first broadcast service includes information about the first network index.

In some possible implementations, the communication apparatus 1000 can correspondingly implement behavior and functions of the network device in the foregoing method embodiments. For example, the communication apparatus 1000 may be a network device, or may be an apparatus, for example, a chip, a chip system, a circuit, or a circuit system, that can implement a function implemented by the network device. The transceiver unit 1020 may be configured to perform all receiving or sending operations performed by the network device in the embodiment shown in FIG. 6, for example, step 602 and step 603 in the embodiment shown in FIG. 6, and/or configured to support another process of the technology described in this specification. The processing unit 1010 is configured to perform all operations other than the receiving or sending operations performed by the network device in the embodiment shown in FIG. 6, for example, step 601 in the embodiment shown in FIG. 6, and/or configured to support another process of the technology described in this specification.

For example, the processing unit 1010 is configured to generate information about a network list of a first cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and a second cell, and the second-type network includes a network corresponding to the first cell but not corresponding to the second cell. The transceiver unit 1020 is configured to send the information about the network list of the first cell.

In some possible implementations, the communication apparatus 1000 can correspondingly implement behavior and functions of the network device in the foregoing method embodiments. For example, the communication apparatus 1000 may be a network device, or may be an apparatus, for example, a chip, a chip system, a circuit, or a circuit system, that can implement a function implemented by the network device. The transceiver unit 1020 may be configured to perform all receiving or sending operations performed by the network device in the embodiment shown in FIG. 7, for example, step 701 and step 702 in the embodiment shown in FIG. 7, and/or configured to support another process of the technology described in this specification. The processing unit 1010 is configured to perform all operations other than the receiving or sending operations performed by the network device in the embodiment shown in FIG. 7, for example, step 701 in the embodiment shown in FIG. 7, and/or configured to support another process of the technology described in this specification.

For example, the transceiver unit 1020 is configured to send a first SIB20, and obtain a first MII message, where the first MII message includes information about a first broadcast service and second indication information, the information about the first broadcast service includes information about a first network index, and the second indication information indicates information about a cell corresponding to the first network index. The processing unit is configured to determine, based on the information about the cell corresponding to the first network index, a network identifier of a network corresponding to the first network index.

In some possible implementations, the communication apparatus 1000 can correspondingly implement behavior and functions of the network device in the foregoing method embodiments. For example, the communication apparatus 1000 may be a network device, or may be an apparatus, for example, a chip, a chip system, a circuit, or a circuit system, that can implement a function implemented by the network device. The transceiver unit 1020 may be configured to perform all receiving or sending operations performed by the network device in the embodiment shown in FIG. 8, for example, step 801 and step 802 in the embodiment shown in FIG. 8, and/or configured to support another process of the technology described in this specification. The processing unit 1010 is configured to perform all operations other than the receiving or sending operations performed by the network device in the embodiment shown in FIG. 8.

For example, the transceiver unit 1020 is configured to send information about a reference of a broadcast CFR of a first cell, where the first cell is a secondary cell SCell or a primary secondary cell group cell PSCell; and send a first SIB20 of the first cell, where the first SIB20 includes first indication information, and the first indication information indicates a relationship between the broadcast CFR of the first cell and the reference of the broadcast CFR of the first cell.

In some possible implementations, the communication apparatus 1000 can correspondingly implement behavior and functions of the network device in the foregoing method embodiments. For example, the communication apparatus 1000 may be a network device, or may be an apparatus, for example, a chip, a chip system, a circuit, or a circuit system, that can implement a function implemented by the network device. The transceiver unit 1020 may be configured to perform all receiving or sending operations performed by the network device in the embodiment shown in FIG. 9, for example, step 901 in the embodiment shown in FIG. 9, and/or configured to support another process of the technology described in this specification. The processing unit 1010 is configured to perform all operations other than the receiving or sending operations performed by the network device in the embodiment shown in FIG. 9.

For example, the transceiver unit 1020 is configured to send a first paging message, where the first paging message includes information about a first multicast service, the information about the first multicast service includes a first network index, and the first multicast service is associated with an SNPN; or the first paging message includes information about a second multicast service, and the second multicast service is not associated with the SNPN.

For operations performed by the processing unit 1010 and the transceiver unit 1020, refer to the related descriptions in the foregoing method embodiments.

It should be understood that the processing unit 1010 in this embodiment of this application may be implemented by a processor or a processor-related circuit component, and the transceiver unit 1020 may be implemented by a transceiver, a transceiver-related circuit component, or a communication interface.

Based on a same concept, as shown in FIG. 11, an embodiment of this application provides a communication apparatus 1100. The communication apparatus 1100 includes a processor 1110. Optionally, the communication apparatus 1100 may further include a memory 1120, configured to store instructions executed by the processor 1110, input data needed by the processor 1110 to run the instructions, or data generated by running the instructions by the processor 1110. The processor 1110 may implement the methods shown in the foregoing method embodiments by using the instructions stored in the memory 1120.

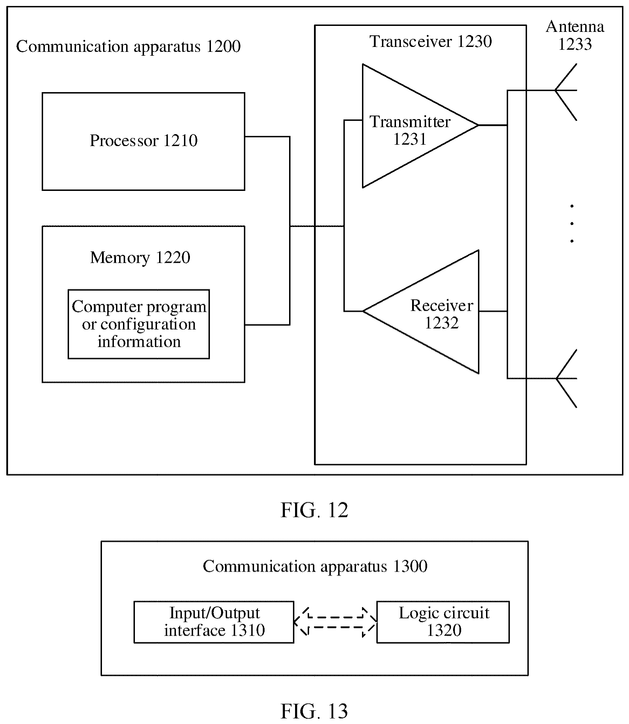

Based on a same concept, as shown in FIG. 12, an embodiment of this application provides a communication apparatus 1200. The communication apparatus 1200 may be a chip or a chip system. Optionally, in this embodiment of this application, the chip system may include a chip, or may include the chip and another discrete device.

The communication apparatus 1200 may include at least one processor 1210. The processor 1210 is coupled to a memory. Optionally, the memory may be located inside the apparatus, or may be located outside the apparatus. For example, the communication apparatus 1200 may further include at least one memory 1220. The memory 1220 stores a necessary computer program, configuration information, a computer program or instructions, and/or data for implementing any one of the foregoing embodiments. The processor 1210 may execute the computer program stored in the memory 1220, to complete the method in any one of the foregoing embodiments.

The communication apparatus 1200 may further include a transceiver 1230, and the communication apparatus 1200 may exchange information with another device via the transceiver 1230. The transceiver 1230 may be a circuit, a bus, a transceiver, or any other apparatus that may be configured to exchange information, or is referred to as a signal transceiver unit. As shown in FIG. 12, the transceiver 1230 includes a transmitter 1231, a receiver 1232, and an antenna 1233. In addition, when the communication apparatus 1200 is a chip-type apparatus or a circuit, the transceiver in the communication apparatus 1200 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

Coupling in embodiments of this application may be indirect coupling or a communication connection between apparatuses, units, or modules, may be in an electrical form, a mechanical form, or another form, and is for information exchange between the apparatuses, the units, or the modules. The processor 1210 may operate in cooperation with the memory 1220. A specific connection medium between a transceiver 1230, the processor 1210, and the memory 1220 is not limited in this embodiment of this application.

In a possible implementation, the communication apparatus 1200 may be used in a terminal device. Specifically, the communication apparatus 1200 may be a terminal device, or may be an apparatus that can support the terminal device in implementing functions of the terminal device in any one of the foregoing embodiments. The memory 1220 stores a necessary computer program, a computer program or instructions, and/or data for implementing functions of the terminal device in any one of the foregoing embodiments. The processor 1210 may execute the computer program stored in the memory 1220, to complete the method performed by the terminal device in any one of the foregoing embodiments.

In a possible implementation, the communication apparatus 1200 may be used in a network device. Specifically, the communication apparatus 1200 may be a network device, or may be an apparatus that can support the network device in implementing functions of the network device in any one of the foregoing embodiments. The memory 1220 stores a necessary computer program, a computer program or instructions, and/or data for implementing functions of the network device in any one of the foregoing embodiments. The processor 1210 may execute the computer program stored in the memory 1220, to complete the method performed by the network device in any one of the foregoing embodiments.

The communication apparatus 1200 provided in this embodiment may be used in the network device to complete the method performed by the network device, or may be used in the terminal device to complete the method performed by the terminal device. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

In embodiments of this application, the memory may be a nonvolatile memory such as a hard disk drive (hard disk drive, HDD) or a solid-state drive (solid-state drive, SSD), or may be a volatile memory (volatile memory) such as a random access memory (random access memory, RAM). The memory may alternatively be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 13. Based on the foregoing embodiments, an embodiment of this application further provides another communication apparatus 1300, including an input/output interface 1310 and a logic circuit 1320. The input/output interface 1310 is configured to receive code instructions and transmit the code instructions to the logic circuit 1320. The logic circuit 1320 is configured to run the code instructions to perform the method performed by the network device or the terminal device in any one of the foregoing embodiments.

The following describes in detail an operation performed by the communication apparatus used in a network device or a terminal device.

In an optional implementation, the communication apparatus 1300 may be used in the terminal device, to perform the method performed by the terminal device, specifically, for example, the method performed by the terminal device in the embodiment shown in FIG. 5.

The input/output interface 1310 is configured to obtain information about a first network identifier corresponding to a first network index, and obtain a first MCCH message, where the first network index is associated with a first cell, the first MCCH message is associated with the first cell, the first cell is an SCell or a PSCell, the first MCCH message includes information about a first broadcast service, and the information about the first broadcast service includes information about the first network index. The logic circuit 1320 is configured to determine information about an identifier of the first broadcast service based on the information about the first network identifier corresponding to the first network index.

In an optional implementation, the communication apparatus 1300 may be used in the terminal device, to perform the method performed by the terminal device, specifically, for example, the method performed by the terminal device in the embodiment shown in FIG. 6.

The input/output interface 1310 is configured to obtain information about a network list of a first cell, and obtain an MCCH message of a second cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and the second cell, the second-type network includes a network corresponding to the first cell but not corresponding to the second cell, the MCCH message of the second cell includes information about a second broadcast service, and the information about the second broadcast service includes information about a second network index. The logic circuit 1320 is configured to determine, based on the information about the network list of the first cell, a network identifier of a network corresponding to the second network index.

In an optional implementation, the communication apparatus 1300 may be used in the terminal device, to perform the method performed by the terminal device, specifically, for example, the method performed by the terminal device in the embodiment shown in FIG. 7.

The input/output interface 1310 is configured to send an MII message, where the MII message includes information about a first broadcast service and second indication information, the information about the first broadcast service includes information about a first network index, and the second indication information indicates information about a cell corresponding to the first network index.

In an optional implementation, the communication apparatus 1300 may be used in the terminal device, to perform the method performed by the terminal device, specifically, for example, the method performed by the terminal device in the embodiment shown in FIG. 8.

The input/output interface 1310 is configured to: obtain information about a reference of a broadcast CFR of a first cell, where the first cell is a secondary cell SCell or a primary secondary cell group cell PSCell; and obtain a SIB20 of the first cell, where the first SIB20 includes first indication information, and the first indication information indicates a relationship between the broadcast CFR of the first cell and the reference of the broadcast CFR of the first cell. The logic circuit 1320 is configured to determine, based on the information about the reference of the broadcast CFR of the first cell, information about the broadcast CFR of the first cell.

In an optional implementation, the communication apparatus 1300 may be used in the terminal device, to perform the method performed by the terminal device, specifically, for example, the method performed by the terminal device in the embodiment shown in FIG. 9.

The input/output interface 1310 is configured to obtain a first paging message. The logic circuit 1320 is configured to determine that a first condition or a second condition is satisfied, and the terminal device responds to a first multicast service and/or the first paging message. Herein, the first condition includes: The first paging message includes information about the first multicast service, a TMGI corresponding to the first multicast service is the same as a TMGI corresponding to a multicast service 1 joined by the terminal device, and a NID corresponding to the first multicast service is the same as a NID corresponding to the multicast service 1 joined by the terminal device, where the information about the first multicast service includes a first network index, and the multicast service 1 joined by the terminal device is associated with an SNPN; and the second condition includes: The first paging message includes information about a second multicast service, and a TMGI corresponding to the second multicast service is the same as a TMGI corresponding to a multicast service 2 joined by the terminal device, where the multicast service 2 joined by the terminal device is not associated with the SNPN.

The communication apparatus 1300 provided in this embodiment may be used in the terminal device to complete the method performed by the terminal device. Therefore, for technical effects that can be achieved by this embodiment, refer to the foregoing method embodiments. Details are not described herein again.

In an optional implementation, the communication apparatus 1300 may be used in the network device to perform the method performed by the network device, specifically, for example, the method performed by the network device in the embodiment shown in FIG. 5.

The input/output interface 1310 is configured to send information about a first network identifier corresponding to a first network index, and send a first MCCH message, where the first network index is associated with a first cell, the first MCCH message is also associated with the first cell, the first cell is a secondary cell SCell or a primary secondary cell group cell PSCell, the first MCCH message includes information about a first broadcast service, and the information about the first broadcast service includes information about the first network index.

In an optional implementation, the communication apparatus 1300 may be used in the network device to perform the method performed by the network device, specifically, for example, the method performed by the network device in the embodiment shown in FIG. 6.

The logic circuit 1320 is configured to generate information about a network list of a first cell, where the information about the network list of the first cell includes information about a network identifier of a first-type network and information about a network identifier of a second-type network, the information about the network identifier of the first-type network is before the information about the network identifier of the second-type network, the first-type network includes a network corresponding to both the first cell and a second cell, and the second-type network includes a network corresponding to the first cell but not corresponding to the second cell. The input/output interface 1310 is configured to send the information about the network list of the first cell.

In an optional implementation, the communication apparatus 1300 may be used in the network device to perform the method performed by the network device, specifically, for example, the method performed by the network device in the embodiment shown in FIG. 7.

The input/output interface 1310 is configured to send a first SIB20, and obtain a first MII message, where the first MII message includes information about a first broadcast service and second indication information, the information about the first broadcast service includes information about a first network index, and the second indication information indicates information about a cell corresponding to the first network index. The processing unit is configured to determine, based on the information about the cell corresponding to the first network index, a network identifier of a network corresponding to the first network index.

In an optional implementation, the communication apparatus 1300 may be used in the network device to perform the method performed by the network device, specifically, for example, the method performed by the network device in the embodiment shown in FIG. 8.

The input/output interface 1310 is configured to send information about a reference of a broadcast CFR of a first cell, where the first cell is a secondary cell SCell or a primary secondary cell group cell PSCell; and send a first SIB20 of the first cell, where the first SIB20 includes first indication information, and the first indication information indicates a relationship between the broadcast CFR of the first cell and the reference of the broadcast CFR of the first cell.

In an optional implementation, the communication apparatus 1300 may be used in the network device to perform the method performed by the network device, specifically, for example, the method performed by the network device in the embodiment shown in FIG. 9.

The input/output interface 1310 is configured to send a first paging message, where the first paging message includes information about a first multicast service, the information about the first multicast service includes a first network index, and the first multicast service is associated with an SNPN; or the first paging message includes information about a second multicast service, and the second multicast service is not associated with the SNPN.

The communication apparatus 1300 provided in this embodiment may be used in the network device to complete the method performed by the network device. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a network device and at least one communication apparatus used in a terminal device. For technical effects that can be achieved, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the network device or the method performed by the terminal device in any one of the foregoing embodiments is enabled to be implemented. The computer-readable storage medium may include any medium that can store program code, for example, a USB flash drive, a removable hard disk, a read-only memory, a random access memory, a magnetic disk, or an optical disc.

To implement the functions of the communication apparatuses in FIG. 10 to FIG. 13, an embodiment of this application further provides a chip, including a processor, configured to support the communication apparatuses in implementing the functions of the network device or the terminal device in the foregoing method embodiments. In a possible design, the chip is connected to a memory, or the chip includes a memory. The memory is configured to store a computer program or instructions and data that are necessary for the communication apparatuses.

Based on the foregoing embodiments, an embodiment of this application further provides a computer program product. The computer program product includes a computer program or instructions. When the computer program or the instructions are run on a computer, the computer is enabled to perform the method in any one of the embodiments shown in FIG. 5 to FIG. 9.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be for implementing each procedure and/or each block in the flowcharts and/or the block diagrams and a combination of a procedure and/or a block in the flowcharts and/or the block diagrams. The computer programs or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer programs or the instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer programs or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

Mutual reference may be made to content in embodiments of this application. Unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device and/or the network device may perform some or all steps in embodiments of this application. These steps or operations are merely examples. In embodiments of this application, other operations or variations of various operations may be further performed. In addition, the steps may be performed in an order different from an order presented in embodiments of this application, and not all the operations in embodiments of this application may be necessarily performed.

**Claims**

1. A communication method, comprising:

   obtaining information about a first network identifier corresponding to a first network index, wherein the first network index is associated with a first cell, and the first cell is a secondary cell SCell or a primary secondary cell group cell PSCell;
   obtaining a first multicast/broadcast service control channel MCCH message, wherein the first MCCH message is associated with the first cell, the first MCCH message comprises information about a first broadcast service, and the information about the first broadcast service comprises information about the first network index; and
   determining information about an identifier of the first broadcast service based on the information about the first network identifier corresponding to the first network index.

2. The method according to claim 1, wherein the first network index comprises any one of the following:

   a first public land mobile network PLMN index;
   a first non-public network NPN index; or
   a first standalone non-public network SNPN index.

3. The method according to claim 1 or 2, wherein the information about the identifier of the first broadcast service comprises any one of the following:

   a temporary mobile group identity TMGI corresponding to the first broadcast service;
   a TMGI corresponding to the first broadcast service and a network identifier NID corresponding to the first broadcast service;

a PLMN ID corresponding to the first broadcast service; or
an SNPN ID corresponding to the first broadcast service.

4. The method according to any one of claims 1 to 3, wherein the method further comprises:
obtaining information about a first system information block SIB20, wherein the information about the first SIB20 is associated with the first cell.

5. The method according to any one of claims 1 to 4, wherein the obtaining the information about the first network identifier corresponding to the first network index comprises:

obtaining information about a first network list of the first cell; or
obtaining information about a first system information block SIB1 of the first cell.

6. The method according to claim 5, wherein the information about the first network list of the first cell comprises:

information about a first public land mobile network PLMN list of the first cell; and/or
information about a first non-public network NPN list of the first cell.

7. The method according to claim 6, wherein the first network index is determined based on the information about the first network list.

8. The method according to any one of claims 5 to 7, wherein the information about the first network list of the first cell comprises information about an identifier of each of all or a part of networks corresponding to the first cell.

9. The method according to any one of claims 5 to 8, wherein the information about the first network list of the first cell comprises:
a network identifier of a network corresponding to a largest network index comprised in the first MCCH message of the first cell and a network identifier of a network whose network index is less than the largest network index.

10. The method according to claim 5, wherein the information about the first network list of the first cell comprises an association relationship between a network identifier of a part or all of networks corresponding to the first cell and a network index of all or the part of the networks.

11. The method according to claim 5 or 10, wherein the information about the first network list of the first cell comprises an association relationship between the first network index set and a corresponding network identifier, and the first network index set is a set of network indexes comprised in the first MCCH message of the first cell.

12. The method according to any one of claims 1 to 11, wherein the obtaining the information about the first network identifier corresponding to the first network index comprises:
receiving the information about the first network identifier corresponding to the first network index sent by a network device via dedicated signaling.

13. The method according to any one of claims 1 to 12, wherein the method further comprises:

determining that the information about the first network identifier corresponding to the first network index is not obtained, and obtaining information about a second network identifier corresponding to the first network index; and
determining the information about the identifier of the first broadcast service based on the information about the second network identifier corresponding to the first network index, wherein the first network index and/or the second network identifier are/is associated with a second cell, and the second cell is a primary cell PCell or a primary secondary cell group cell PSCell.

14. A communication method, comprising:

sending information about a first network identifier corresponding to a first network index, wherein the first network index is associated with a first cell, and the first cell is a secondary cell SCell or a primary secondary cell group cell PSCell; and
sending a first multicast/broadcast service control channel MCCH message, wherein the first MCCH message is associated with the first cell, the first MCCH message comprises information about a first broadcast service, and the information about the first broadcast service comprises information about the first network index.

15. The method according to claim 14, wherein the method further comprises:
determining that any one of the following conditions is satisfied, and skipping sending the information about the first network identifier corresponding to the first network index:

information about a first network list of the first cell is the same as information about a network list of a second cell;
an order of the information about the first network list of the first cell is the same as an order of the information about the network list of the second cell; or
a network corresponding to a network index comprised in the first MCCH message of the first cell is the same as a network comprised in the information about the network list of the second cell, wherein
the second cell is a primary cell PCell or a primary secondary cell group cell PSCell.

16. The method according to claim 14 or 15, wherein the first network index comprises any one of the following:

a first public land mobile network PLMN index;
a first non-public network NPN index; or
a first standalone non-public network SNPN index.

17. The method according to any one of claims 14 to 16, wherein information about an identifier of the first broadcast service comprises any one of the following:

a temporary mobile group identity TMGI corresponding to the first broadcast service;
a TMGI corresponding to the first broadcast service and a network identifier NID corresponding to the first broadcast service;
a PLMN ID corresponding to the first broadcast service; or
an SNPN ID corresponding to the first broadcast service.

18. The method according to any one of claims 14 to 17, wherein the method further comprises:
sending information about a first system information block SIB20, wherein the information about the first SIB20 is associated with the first cell.

19. The method according to any one of claims 14 to 18, wherein the sending the information about the first network identifier corresponding to the first network index comprises:

sending the information about the first network list of the first cell; or
sending information about a first system information block SIB1 of the first cell.

20. The method according to claim 19, wherein the information about the first network list of the first cell comprises:

information about a first public land mobile network PLMN list of the first cell; and/or
information about a first non-public network NPN list of the first cell.

21. The method according to claim 20, wherein the first network index is determined based on the order of the information about the first network list.

22. The method according to any one of claims 19 to 21, wherein the information about the first network list of the first cell comprises information about an identifier of each of all or a part of networks corresponding to the first cell.

23. The method according to any one of claims 19 to 21, wherein the information about the first network list of the first cell comprises:
a network identifier of a network corresponding to a largest network index comprised in the first MCCH message of the first cell and a network identifier of a network whose network index is less than the largest network index.

24. The method according to claim 19, wherein the information about the first network list of the first cell comprises an association relationship between a network identifier of a part or all of networks corresponding to the first cell and a network index of all or the part of the networks.

25. The method according to claim 19 or 24, wherein the information about the first network list of the first cell comprises an association relationship between the network index comprised in the first MCCH message of the first cell and a corresponding network identifier.

26. The method according to any one of claims 14 to 25, wherein the sending the information about the first network identifier corresponding to the first network index comprises:
sending, via dedicated signaling, the information about the first network identifier corresponding to the first network index.

27. A communication method, comprising:

obtaining information about a reference of a broadcast common frequency resource CFR of a first cell, wherein the first cell is a secondary cell SCell or a primary secondary cell group cell PSCell;
obtaining a first system information block SIB20 of the first cell, wherein the first SIB20 comprises first indication information, and the first indication information indicates a relationship between the broadcast CFR of the first cell and the reference of the broadcast CFR of the first cell; and
determining, based on the information about the reference of the broadcast CFR of the first cell, information about the broadcast CFR of the first cell.

28. The method according to claim 27, wherein the information about the reference of the broadcast CFR of the first cell comprises:
information about a first initial BWP of the first cell and/or information about a first CORESET #0 of the first cell.

29. The method according to claim 27 or 28, wherein that the first indication information indicates the relationship between the broadcast CFR of the first cell and the reference of the broadcast CFR of the first cell comprises:

the first indication information indicates that the broadcast CFR of the first cell is the same as the reference of the broadcast CFR of the first cell;
the first indication information indicates that the broadcast CFR of the first cell is the same as an initial BWP or the first initial BWP of the first cell; or
the first indication information indicates that the broadcast CFR of the first cell is the same as a CORESET #0 or the first CORESET #0 of the first cell.

30. The method according to any one of claims 27 to 29, wherein the determining the information about the broadcast CFR of the first cell comprises:
determining that the broadcast CFR of the first cell is the same as the first initial BWP of the first cell or the first CORESET #0 of the first cell.

31. The method according to any one of claims 27 to 30, wherein the obtaining the information about the reference of the broadcast common frequency resource CFR of the first cell comprises:
receiving the information about the first initial BWP of the first cell and/or the information about the first CORESET #0 of the first cell that are/is sent by the network device via dedicated signaling.

32. The method according to any one of claims 27 to 31, wherein the obtaining the information about the reference of the broadcast common frequency resource CFR of the first cell comprises:
obtaining a first system information block SIB1 and/or a first master information block MIB that are/is of the first cell, wherein the first SIB1 comprises the information about the first initial BWP, and the first MIB comprises the information about the first CORESET #0.

33. A communication method, comprising:

sending information about a reference of a broadcast common frequency resource CFR of a first cell, wherein the first cell is a secondary cell SCell or a primary secondary cell group cell PSCell; and
sending a first system information block SIB20 of the first cell, wherein the first SIB20 comprises first indication information, and the first indication information indicates a relationship between the broadcast CFR of the first cell and the reference of the broadcast CFR of the first cell.

34. The method according to claim 33, wherein the information about the reference of the broadcast CFR of the first cell comprises:
information about a first initial BWP of the first cell and/or information about a first CORESET #0 of the first cell.

35. The method according to claim 33 or 34, wherein that the first indication information indicates the relationship between the broadcast CFR of the first cell and the reference of the broadcast CFR of the first cell comprises:

the first indication information indicates that the broadcast CFR of the first cell is the same as the reference of the broadcast CFR of the first cell;
the first indication information indicates that the broadcast CFR of the first cell is the same as an initial BWP or the first initial BWP of the first cell; or
the first indication information indicates that the broadcast CFR of the first cell is the same as a CORESET #0 or the first CORESET #0 of the first cell.

36. The method according to any one of claims 33 to 35, wherein the sending the information about the reference of the broadcast common frequency resource CFR of the first cell comprises:
sending the information about the first initial BWP of the first cell and/or the information about the first CORESET #0 of the first cell via dedicated signaling.

37. The method according to any one of claims 33 to 36, wherein the sending the information about the reference of the broadcast common frequency resource CFR of the first cell comprises:
sending a first system information block SIB1 and/or a first master information block MIB that are/is of the first cell, wherein the first SIB1 comprises the information about the first initial BWP, and the first MIB comprises the information about the first CORESET #0.

38. A communication apparatus, comprising a processor, wherein the processor is coupled to a memory, and runs instructions or a program in the memory, to perform the method according to any one of claims 1 to 37.

39. A communication apparatus, comprising a module configured to perform the method according to any one of claims 1 to 37.

40. A communication system, comprising a first communication apparatus and a second communication apparatus, wherein the first communication apparatus is configured to implement the method according to any one of claims 1 to 13, and the second communication apparatus is configured to implement the method according to any one of claims 14 to 26; or the first communication apparatus is configured to implement the method according to any one of claims 27 to 32, and the second communication apparatus is configured to implement the method according to any one of claims 33 to 37.

41. A computer-readable storage medium, wherein the computer-readable storage medium stores a software program; and when the software program is read and executed by one or more processors, the method according to any one of claims 1 to 37 is implemented.

42. A computer program product, wherein the computer program product comprises instructions; and when the instructions are run on a computer, the computer is enabled to perform the method according to any one of claims 1 to 37.

FIG. 1

| MBS service ID | MCC | MNC |
|---|---|---|

Six digits — Three digits — Two digits or three digits

TMGI

FIG. 2

```
┌─────────┐                                              ┌─────────┐
│ Network │                                              │Terminal │
│ device  │                                              │ device  │
└─────────┘                                              └─────────┘
     │                                                        │
     │       301: Send an MII message, where the MII          │
     │       message includes an IE TMGI of a broadcast       │
     │◄──────service that the terminal device is interested in│
     │                                                        │
     │       302: Send a SIB20 of an SCell, where the         │
     │       SIB20 includes information indicating a          │
     │───────broadcast CFR of the SCell──────────────────────►│
     │                                                        │
     │      303: Broadcast an MCCH message of the SCell       │
     │      on the broadcast CFR of the SCell, where the      │
     │      MCCH message of the SCell includes an IE          │
     │──────TMGI of one or more broadcast services───────────►│
     │                                                        │
```

304: Obtain the MCCH message of the SCell on the broadcast CFR based on the SIB20 of the SCell, and perform broadcast service matching based on the one or more IE TMGIs included in the MCCH message of the SCell

FIG. 3

```
┌─────────┐                                              ┌─────────┐
│ Network │                                              │Terminal │
│ device  │                                              │ device  │
└─────────┘                                              └─────────┘
     │                                                        │
     │       401: Send a paging message, where                │
     │       the paging message includes an                   │
     │       activation notification of one or more           │
     │       multicast services, and an activation            │
     │       notification of one multicast service is         │
     │       indicated by information about an                 │
     │───────identifier of the multicast service─────────────►│
     │                                                        │
```

402: Determine that a multicast service joined by the terminal device is included in the one or more multicast services indicated by the paging message, and respond to the paging message

FIG. 4

```
┌──────────┐                              ┌──────────┐
│ Network  │                              │ Terminal │
│  device  │                              │  device  │
└──────────┘                              └──────────┘
      │                                         │
      │  501A: Send a first SIB20, where the    │
      │    first SIB20 is associated with a     │
      │              first cell                 │
      │- - - - - - - - - - - - - - - - - - - - ▶│
      │                                         │
      │     501: Send information about a        │
      │   first network identifier              │
      │  corresponding to a first network       │
      │   index, where the first network        │
      │  index is associated with the first     │
      │                cell                     │
      │────────────────────────────────────────▶│
      │                                         │
      │   502: Broadcast a first MCCH message,   │
      │     where the first MCCH message is      │
      │       associated with the first cell     │
      │────────────────────────────────────────▶│
      │                                         │
```

503: Determine information about an identifier of a first broadcast service based on the information about the first network identifier corresponding to the first network index

**FIG. 5**

| PLMN 1 |
| PLMN 3 |
| PLMN 4 |
| PLMN 8 |
| PLMN 7 |
| PLMN 5 |
| PLMN 6 |
| PLMN 2 |

PLMN list of a first cell

| PLMN 1 |
| PLMN 3 |
| PLMN 4 |
| PLMN 8 |
| PLMN 7 |
| PLMN 5 |
| PLMN 6 |
| PLMN 2 |

Example 1 of information about a first network list of the first cell

| PLMN 7 |
| PLMN 5 |
| PLMN 6 |
| PLMN 2 |

Example 2 of the information about the first network list of the first cell

**FIG. 5A**

| PNI-NPN 2 | | PNI-NPN 2 | | |
|---|---|---|---|---|
| PNI-NPN 3 | | PNI-NPN 3 | | |
| SNPN 1 | | SNPN 1 | | SNPN 1 |
| PLMN 1 | | PLMN 1 | | PLMN 1 |
| PLMN 3 | | PLMN 3 | | PLMN 3 |
| PLMN 4 | | PLMN 4 | | PLMN 4 |
| PLMN 8 | | PLMN 8 | | PLMN 8 |
| PLMN 7 | | PLMN 7 | | PLMN 7 |
| PLMN 5 | | PLMN 5 | | PLMN 5 |
| PLMN 6 | | PLMN 6 | | PLMN 6 |
| PLMN 2 | | PLMN 2 | | PLMN 2 |

| NPN list of a first cell | Example 1 of information about a first network list of the first cell | Example 2 of the information about the first network list of the first cell |
|---|---|---|

## FIG. 5B

First MCCH message

| PLMN 1 |
|---|
| **PLMN 3** |
| **PLMN 4** |
| PLMN 8 |
| **PLMN 7** |
| **PLMN 5** |
| PLMN 6 |
| PLMN 2 |

| PLMN 3 |
|---|
| PLMN 4 |
| PLMN 8 |
| PLMN 7 |
| PLMN 5 |
| PLMN 6 |
| PLMN 2 |

| PLMN 3 |
|---|
| PLMN 4 |
| PLMN 7 |
| PLMN 5 |

| PLMN list of a first cell | Example 1 of information about a first network list of the first cell | Example 2 of the information about the first network list of the first cell |
|---|---|---|

## FIG. 5C

| SNPN 2 |
| --- |
| **PNI-NPN 2** |
| **PNI-NPN 1** |
| **SNPN 1** |
| PLMN 7 |
| PLMN 5 |
| PLMN 6 |
| PLMN 2 |

First MCCH message

PLMN list of a first cell

| PNI-NPN 2 |
| --- |
| PNI-NPN 1 |
| SNPN 1 |
| PLMN 7 |
| PLMN 5 |
| PLMN 6 |
| PLMN 2 |

Example 1 of information about a first network list of the first cell

| PNI-NPN 2 |
| --- |
| PNI-NPN 1 |
| SNPN 1 |

Example 2 of the information about the first network list of the first cell

FIG. 5D

| PLMN 7 |
| --- |
| PLMN 5 |
| PLMN 6 |
| PLMN 2 |

Information about a first network list of a first cell

| PLMN 1 |
| --- |
| PLMN 3 |
| PLMN 4 |
| PLMN 8 |
| PLMN 7 |
| PLMN 5 |
| PLMN 6 |
| PLMN 2 |

Information about a network list of a second cell

FIG. 5E

First MCCH message

| Information about a first network list of a first cell |
| --- |
| PLMN 1 |
| **PLMN 3** |
| **PLMN 4** |
| PLMN 8 |
| **PLMN 7** |
| **PLMN 5** |
| PLMN 6 |
| PLMN 2 |

| Information about a network list of a second cell |
| --- |
| PLMN 3 |
| PLMN 4 |
| PLMN 6 |
| PLMN 7 |
| PLMN 5 |
| PLMN 2 |
| PLMN 1 |

Information about a first network list of a first cell

Information about a network list of a second cell

FIG. 5F

Network device

Terminal device

601: Generate information about a network list of a first cell and/or information about a network list of a second cell

602: Broadcast the information about the network list of the first cell and/or the information about the network list of the second cell

603: Broadcast an MCCH message of the second cell and/or an MCCH message of the first cell

604: Determine, based on the information about the network list of the second cell, a network identifier of a network corresponding to a first network index included in the MCCH message of the first cell

FIG. 6

| PLMN 3 |
| :---: |
| PLMN 4 |
| PLMN 1 |

| PLMN 2 |
| :---: |
| PLMN 4 |
| PLMN 1 |

PLMN list of a first cell     PLMN list of a second cell

FIG. 6A

| PLMN 3 |
| :---: |
| PLMN 1 |
| PLMN 4 |

| PLMN 2 |
| :---: |
| PLMN 1 |
| PLMN 4 |

PLMN list of a first cell     PLMN list of a second cell

FIG. 6B

Network device

Terminal device

701: First SIB20 of a first cell

702: Second SIB20 of a second cell

703: Second SIB21 of the second cell

704: Information about a first network identifier corresponding to a first network index

705: Second SIB1 of the second cell

706: Generate a first MII message

707: Send the first MII message, where the first MII message includes information about a first broadcast service and second indication information, the information about the first broadcast service includes information about the first network index, and the second indication information indicates information about a cell corresponding to the first network index

708: Determine, based on the information about the cell corresponding to the first network index, a network identifier of a network corresponding to the first network index

FIG. 7

Network device

Terminal device

801: Send information about a reference of first information of a first cell

802: Send a SIB20 of the first cell

803: Determine the first information of the first cell based on the information about the reference of the first information of the first cell

FIG. 8

Network device

Terminal device

901: Send a first paging message

902: Determine that a preset condition is satisfied, and respond to the first paging message, where the preset condition includes a first condition and/or a second condition, where the first condition includes: The first paging message includes information about a first multicast service, a TMGI corresponding to the first multicast service is the same as a TMGI corresponding to a multicast service 1 joined by the terminal device, and a NID corresponding to the first multicast service is the same as a NID corresponding to the multicast service 1 joined by the terminal device; and the second condition includes: The first paging message includes information about a second multicast service, and a TMGI corresponding to the second multicast service is the same as a TMGI corresponding to a multicast service 2 joined by the terminal device

FIG. 9

Communication apparatus 1000

Processing unit
1010

Transceiver unit
1020

FIG. 10

Communication apparatus 1100

Processor 1110

Memory 1120

FIG. 11

Communication apparatus 1200

Processor 1210

Memory 1220

Computer program
or configuration
information

Transceiver 1230

Antenna
1233

Transmitter
1231

Receiver
1232

FIG. 12

Communication apparatus 1300

Input/Output
interface 1310

Logic circuit
1320

FIG. 13

## INTERNATIONAL SEARCH REPORT

| International application No. |
| --- |
| **PCT/CN2024/085004** |

**A. CLASSIFICATION OF SUBJECT MATTER**

H04W4/06(2009.01)i;  H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 公共频率资源, 非地面网络, 标识, 初始, 非服务小区, 辅节点, 辅小区, 广播, 索引, 业务控制信道, 系统信息, CFR, NTN, iD, NID, TMGI, initial, Pscell, Scell, MBS, index, MCCH, SIB

**C. DOCUMENTS CONSIDERED TO BE RELEVANT**

| Category* | Citation of document, with indication, where appropriate, of the relevant passages | Relevant to claim No. |
| --- | --- | --- |
| PX | HUAWEI et al. "Discussion on the remainning MBS issues"<br>*3GPP TSG-RAN WG2 Meeting #121bis, R2-2303967*, 07 April 2023 (2023-04-07),<br>section 2 | 1-42 |
| PX | ERICSSON. "MBS broadcast on SCell using plmn-Index"<br>*3GPP TSG-RAN2 Meeting #122, R2-2305915*, 12 May 2023 (2023-05-12),<br>section 2 | 1-42 |
| A | WO 2023272665 A1 (NEC CORP.) 05 January 2023 (2023-01-05)<br>description, paragraphs [0045]-[0100] | 1-42 |
| A | US 2023049535 A1 (FG INNOVATION CO., LTD.) 16 February 2023 (2023-02-16)<br>entire document | 1-42 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 May 2024** | **11 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/085004** |

| Patent document cited in search report | | | Publication date (day/month/year) | Patent family member(s) | | | Publication date (day/month/year) |
|---|---|---|---|---|---|---|---|
| WO | 2023272665 | A1 | 05 January 2023 | None | | | |
| US | 2023049535 | A1 | 16 February 2023 | EP | 4344471 | A1 | 03 April 2024 |
| | | | | WO | 2023011636 | A1 | 09 February 2023 |
| | | | | CN | 117616729 | A | 27 February 2024 |

Form PCT/ISA/210 (patent family annex) (July 2022)

**REFERENCES CITED IN THE DESCRIPTION**

**Patent documents cited in the description**

- CN 202310405787